# EUROPEAN PATENT APPLICATION

(11) **EP 4 803 554 A1**
(43) Date of publication of application: **09.09.2026**
(21) Application number: 24885875.5
(22) Date of filing: 01.11.2024
(51) Int. Cl.: C08F 30/08, C08F 220/18, C08L 33/06, C08L 43/04, C09K 3/18, D06M 15/356

(54) **POLYMER, WATER REPELLENT AGENT, FIBER PRODUCT, AND METHOD FOR PRODUCING FIBER PRODUCT**

(30) Priority: 01.11.2023 JP 2023188053
(71) Applicant: Daikin Industries, Ltd., Osaka-shi, Osaka 530-0001 (JP)
(72) Inventor: HORIKAWA, Nozomi, Osaka-Shi, Osaka 530-0001 (JP); FUKUMOTO, Kanako, Osaka-Shi, Osaka 530-0001 (JP); SUZUKI, Yuki, Osaka-Shi, Osaka 530-0001 (JP)
(74) Representative: Hoffmann Eitle
(86) International application number: PCT/JP2024/039111
(87) International publication number: WO 2025/095111

(57) **Abstract**

Provided is a polymer comprising a repeating unit derived from a monomer (1) represented by the following formula (1-1) or formula (1-2), and having a tackiness of 800 gf or less:

R^{a}-X-CY_{3-α}Z_{α} (1-1)

R^{a}-X-NY_{2-β}Z_{β} (1-2)

wherein
R^{a} is a polymerizable organic group,
X is a single bond or a divalent group,
Y is each independently a hydrogen atom or a hydrocarbon group having 1 to 10 carbon atoms,
α is an integer of 1 to 3,
β is an integer of 1 or 2,
Z is each independently -Z¹-SiZ²₃₋ₘZ³ₘ,
Z¹ is a single bond or a divalent group,
Z² is each independently a hydrocarbon group having 1 to 10 carbon atoms,
m is an integer of 1 to 3,
Z³ is each independently -(O-SiZ³¹₂)ₚ-(CH₂)_{q}-Z³²-SiZ³³₃,
Z³¹ is each independently a hydrocarbon group having 1 to 10 carbon atoms or -OSiZ³¹¹₃,
Z³¹¹ is each independently a hydrocarbon group having 1 to 10 carbon atoms or -OSiZ³¹¹¹₃,
Z³¹¹¹ is each independently a hydrocarbon group having 1 to 10 carbon atoms,
Z³² is O or CH₂,
Z³³ is each independently a hydrocarbon group having 1 to 10 carbon atoms or -OSiZ³³¹₃,
Z³³¹ is each independently a hydrocarbon group having 1 to 10 carbon atoms,
p is an integer of 0 to 196, and
q is an integer of 0 to 10.

## Description

### Technical Field

The present disclosure relates to a polymer, a water-repellent agent, a textile product, and a method for producing a textile product.

### Background Art

Non-fluorinated water-repellent agents are being developed as water-repellent agents for imparting water-repellency to substrates (particularly textile products).

### Citation List

### Patent Literature

Patent Literature 1: WO 2023/086692
Patent Literature 2: WO 2023/019044
Patent Literature 3: WO 2023/197350
Patent Literature 4: JP 2017/218713 A

### Summary of Invention

### Technical Problem

Patent Literature 1 discloses that good chalk mark resistance can be imparted by treating a treatment target such as a textile product with a composition obtained by dissolving in a solvent a silicone-containing copolymer having a constituent unit that is derived from a (meth)acrylic acid alkyl ester monomer. However, water-repellency and oil-repellency are insufficient. Also, tackiness is another requirement for a water-repellent agent. Materials with high tackiness tend to be highly adhesive, and may contaminate equipment due to their adhesion during the course of processing textile products. Accordingly, a material with low tackiness is desirable as a water-repellent agent.

An object of the present disclosure is to provide a polymer, the tackiness of which is low, and which is capable of imparting excellent water-repellency and oil-repellency to a substrate.

### Solution to Problem

The present disclosure includes the following embodiments.
[Item 1] A polymer comprising a repeating unit derived from a monomer (1) represented by the following formula (1-1) or formula (1-2), and having a tackiness of 800 gf or less:

   R^{a}-X-CY_{3-α}Z_{α} (1-1)

   R^{a}-X-NY_{2-β}Z_{β} (1-2)

   wherein
   R^{a} is a polymerizable organic group,
   X is a single bond or a divalent group,
   Y is each independently a hydrogen atom or a hydrocarbon group having 1 to 10 carbon atoms,
   α is an integer of 1 to 3,
   β is an integer of 1 or 2,
   Z is each independently -Z¹SiZ²₃₋ₘZ³ₘ,
      Z¹ is a single bond or a divalent group,
      Z² is each independently a hydrocarbon group having 1 to 10 carbon atoms,
      m is an integer of 1 to 3,
      Z³ is each independently -(O-SiZ³¹₂)ₚ-(CH₂)_{q}-Z³²-SiZ³³₃,
         Z³¹ is each independently a hydrocarbon group having 1 to 10 carbon atoms or -OSiZ³¹¹₃,
         Z³¹¹ is each independently a hydrocarbon group having 1 to 10 carbon atoms or -OSiZ³¹¹¹₃,
            Z³¹¹¹ is each independently a hydrocarbon group having 1 to 10 carbon atoms,
         Z³² is O or CH₂,
         Z³³ is each independently a hydrocarbon group having 1 to 10 carbon atoms or -OSiZ³³¹₃,
            Z³³¹ is each independently a hydrocarbon group having 1 to 10 carbon atoms,
         p is an integer of 0 to 196, and
         q is an integer of 0 to 10.
[Item 2] The polymer according to item 1, having a tackiness of 600 gf or less.
[Item 3] The polymer according to item 1 or 2, having a tackiness of 300 gf or less.
[Item 4] The polymer according to any one of items 1 to 3, wherein
   X is a divalent group composed of one or more selected from the group consisting of X¹ and X²,
   X¹ is a group composed of one or more selected from the group consisting of a direct bond, -O-, -C(=O)-, -C(=NR')-, -S-, -S(=O)₂-, -NR'-, and -C(OR')R'-, wherein R' is independently at each occurrence a hydrogen atom or a hydrocarbon group having 1 to 10 carbon atoms, and
   X² is a direct bond or a hydrocarbon group having 1 to 22 carbon atoms and optionally having a substituent.
[Item 5] The polymer according to any one of items 1 to 4, wherein X is a direct bond or a hydrocarbon group having 1 to 22 carbon atoms and optionally having a substituent.
[Item 6] The polymer according to any one of items 1 to 5, wherein
   Z¹ is a divalent group composed of one or more selected from the group consisting of Z¹¹ and Z¹²,
   Z¹¹ is a group composed of one or more selected from the group consisting of a direct bond, -O-, -C(=O)-, - C(=NR' ')-, -S-, -S(=O)₂-, -NR"-, and -C(OR' ')R' '-, wherein R" is independently at each occurrence a hydrogen atom or a hydrocarbon group having 1 to 10 carbon atoms, and
   Z¹² is a direct bond or a hydrocarbon group having 1 to 22 carbon atoms and optionally having a substituent.
[Item 7] The polymer according to any one of items 1 to 6, wherein Z¹ is a direct bond or a hydrocarbon group having 1 to 22 carbon atoms and optionally having a substituent.
[Item 8] The polymer according to any one of items 1 to 7, wherein R^{a} is an organic group containing an ethylenically polymerizable group.
[Item 9] The polymer according to any one of items 1 to 8, wherein R^{a} is an acryloyl group or a methacryloyl group.
[Item 10] The polymer according to any one of items 1 to 9, further comprising a repeating unit derived from (2) a hydrophobic monomer having a hydrocarbon group having 2 to 40 carbon atoms.
[Item 11] The polymer according to item 10, wherein the hydrophobic monomer (2) is a monomer represented by the following formula:

   CH₂=C(-R^{b})-C (=O)-R^{c}-(R^{d})ₖ (2)

   wherein
   R^{b} is a hydrogen atom, a monovalent organic group, or a halogen atom,
   R^{c} is a divalent to tetravalent group composed of at least one selected from a direct bond, a divalent to tetravalent hydrocarbon group having one carbon atom, - C₆H₄-, -O-, -S-, -C(=O)-, -S(=O)₂-, and -NR^{C1}-, wherein R^{C1} is a hydrogen atom or a hydrocarbon group having 1 to 4 carbon atoms,
   k is 1 to 3, and
   R^{d} is a hydrocarbon group having 2 to 40 carbon atoms.
[Item 12] The polymer according to item 10 or 11, wherein an amount of the repeating unit derived from the hydrophobic monomer (2) is 20% by weight or more based on the polymer.
[Item 13] The polymer according to any one of items 10 to 12, wherein an amount of the repeating unit derived from the monomer (1) is 0.5% by weight or more based on the polymer.
[Item 14] The polymer according to any one of items 1 to 13, which is non-fluorinated.
[Item 15] The polymer according to item 1, wherein
   R^{a} is CH₂=CHC(=O)-O- or CH₂=CCH₃C(=O)-O-,
   X is a direct bond or an alkylene group having 1 to 5 carbon atoms, and
   Y is each independently a hydrogen atom or an alkyl chain having 1 to 3 carbon atoms.
[Item 16] The polymer according to item 1, wherein
   α is 1,
   β is 1,
   Z is each independently -Z¹-SiZ²₃₋ₘZ³ₘ,
      Z¹ is a single bond or - (CH₂)ₛ-,
         s is an integer of 1 to 3,
      Z² is each independently an alkyl group having 1 to 3 carbon atoms,
      m is an integer of 1 to 3,
      Z³ is each independently - (O-SiZ³¹₂)ₚ-(CH₂)_{q}-Z³²-SiZ³³₃,
         p is each independently 0 or 1,
         q is each independently 0 or 1,
         Z³¹ is each independently an alkyl group having 1 to 3 carbon atoms,
         Z³² is -O- or -CH₂-,
         Z³³ is each independently an alkyl group having 1 to 3 carbon atoms or -OSiZ³³¹₃,
            Z³³¹ is each independently an alkyl group having 1 to 3 carbon atoms, and wherein
   the polymer has a tackiness of 300 gf or less.
[Item 17] The polymer according to item 1, wherein
   R^{a} is CH₂=CHC(=O)-O- or CH₂=CCH₃C(=O)-O-,
   X is a direct bond or an alkylene group having 1 to 5 carbon atoms,
   Y is each independently a hydrogen atom or an alkyl chain having 1 to 3 carbon atoms,
   α is 1,
   β is 1,
   Z is each independently -Z¹-SiZ²₃₋ₘZ³ₘ,
      Z¹ is a single bond or -(CH₂)ₛ-,
         s is an integer of 1 to 3,
      Z² is each independently an alkyl group having 1 to 3 carbon atoms;
      m is an integer of 1 to 3,
      Z³ is each independently -(O-SiZ³¹₂)ₚ-(CH₂)_{q}-Z³²-SiZ³³₃,
         p is each independently 0 or 1,
         q is each independently 0 or 1,
         Z³¹ is each independently an alkyl group having 1 to 3 carbon atoms,
         Z³² is -O- or -CH₂-,
         Z³³ is each independently an alkyl group having 1 to 3 carbon atoms or -OSiZ³³¹₃,
            Z³³¹ is each independently an alkyl group having 1 to 3 carbon atoms, and wherein
   the polymer has a tackiness of 300 gf or less.
   [Item 18] A composition comprising the polymer according to any one of items 1 to 17 and an emulsifier.
   [Item 19] The composition according to item 18, comprising water.
   [Item 20] A water-repellent agent which comprises the polymer according to any one of items 1 to 17 or which is the composition according to item 18 or 19.
   [Item 21] A water-repellent textile product comprising a fiber substrate to which the polymer according to any one of items 1 to 17 is adhered.
   [Item 22] The water-repellent textile product according to item 21, wherein adhered to the fiber substrate is a compound comprising one or more functional groups selected from the group consisting of:
      a monovalent group represented by -SO₃M¹, wherein M¹ represents a monovalent cation,
      a monovalent group represented by -COOM², wherein M² represents a monovalent cation, and
      a monovalent group represented by -O-P(O) (OX¹)(OX²),
      wherein X¹ and X² each independently represent a hydrogen atom or an alkyl group having 1 to 22 carbon atoms.
[Item 23] A method for producing a water-repellent textile product, comprising applying the water-repellent agent according to item 20 to a fiber substrate.
[Item 24] The method for producing a water-repellent textile product according to item 23, comprising, prior to applying the water-repellent agent to the fiber substrate, imparting to the fiber substrate one or more functional groups selected from the group consisting of: a monovalent group represented by -SO₃M¹, wherein M¹ represents a monovalent cation,
   a monovalent group represented by -COOM², wherein M² represents a monovalent cation, and
   a monovalent group represented by -O-P(O)(OX¹)(OX²),
   wherein X¹ and X² each independently represent a hydrogen atom or an alkyl group having 1 to 22 carbon atoms.

### Advantageous Effect of Invention

The polymer of the present disclosure has low tackiness and is capable of imparting excellent water-repellency and oil-repellency to a substrate.

### Description of Embodiments

### <Definition of terms>

As used herein, the "n valent group" refers to a group having n bonds, i.e., a group forming n bonds. The "n valent organic group" refers to an n valent group containing carbon, and the "organic group" refers to a group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen, and the like at the end or in the molecular chain of a hydrocarbon group.

As used herein, the "hydrocarbon group" refers to a group containing carbon and hydrogen and a group in which a hydrogen atom is removed from the hydrocarbon. Examples of the hydrocarbon group include, but are not limited to, C1-20 hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. The hydrocarbon group may be substituted with one or more substituents.

Whether or not the phrases "independently at each occurrence", "independently from each other", "each independently", or similar expressions are explicitly described herein, unless otherwise described that they are exceptions, when a plurality of terms (symbols) that can occur in a chemical structure are defined, such definition is applied independently at each occurrence.

The chemical structures described herein should be understood not to encompass chemical structures that are recognized by those skilled in the art as being chemically impossible or extremely unstable.

### <Polymer>

The polymer of the present disclosure contains a repeating unit derived from a monomer (1) represented by the following formula (1-1) or formula (1-2), and has a tackiness of 800 gf or less:

R^{a}-X-CY_{3-α}Z_{α} (1-1)

R^{a}-X-NY_{2-β}Z_{β} (1-2)

wherein
R^{a} is a polymerizable organic group,
X is a single bond or a divalent group,
Y is each independently a hydrogen atom or a hydrocarbon group having 1 to 10 carbon atoms,
α is an integer of 1 to 3,
β is an integer of 1 or 2,
Z is each independently -Z¹-SiZ²₃₋ₘZ³ₘ,
   Z¹ is a single bond or a divalent group,
   Z² is each independently a hydrocarbon group having 1 to 10 carbon atoms,
   m is an integer of 1 to 3,
   Z³ is each independently - (O-SiZ³¹₂)ₚ-(CH₂)_{q}-Z³²-SiZ³³₃,
      Z³¹ is each independently a hydrocarbon group having 1 to 10 carbon atoms or -OSiZ³¹¹₃,
         Z³¹¹ is each independently a hydrocarbon group having 1 to 10 carbon atoms or -OSiZ³¹¹¹₃,
         Z³¹¹¹ is each independently a hydrocarbon group having 1 to 10 carbon atoms,
      Z³² is O or CH₂,
      Z³³ is each independently a hydrocarbon group having 1 to 10 carbon atoms or -OSiZ³³¹₃,
         Z³³¹ is each independently a hydrocarbon group having 1 to 10 carbon atoms,
      p is an integer of 0 to 196, and
      q is an integer of 0 to 10.

Having the above features, the polymer of the present disclosure can impart liquid repellency (water-repellency, oil-repellency, oil resistance, and/or water resistance) to a substrate (such as a fiber substrate or a paper substrate). The polymer of the present disclosure can function as at least one selected from the group consisting of a water-repellent agent, an oilrepellent agent, an oil-resistant agent, and a waterresistant agent. The repellent of the present disclosure can favorably impart oil resistance (oil-repellency) and/or water resistance (water-repellency) and, for example, can favorably impart both oil resistance and water resistance to a substrate.

Having the above features, the polymer of the present disclosure can impart excellent water-repellency and oil-repellency to a substrate (such as a fiber substrate or a paper substrate).

Having the above features, the polymer of the present disclosure has the tackiness can be low. As for the composition and the water-repellent agent containing the polymer of the present disclosure as well, the tackiness can be low. Accordingly, contamination of equipment can be reduced.

### [Tackiness]

Tackiness is an index indicating the strength of adhesion. The greater the value of tackiness, the stronger the adhesion. The smaller the value of tackiness, the weaker the adhesion. From the viewpoint of reducing equipment contamination, smaller tackiness is more preferred.

The tackiness of the polymer of the present disclosure is 800 gf or less. From the viewpoint of reducing equipment contamination, the tackiness of the polymer of the present disclosure may be 700 gf or less, 600 gf or less, 500 gf or less, 450 gf or less, 400 gf or less, 350 gf or less, 300 gf or less, 250 gf or less, or 200 gf or less, and may be preferably 600 gf or less and more preferably 300 gf or less.

Tackiness can be determined by the following measurement method.

A water-repellent composition (such as a solution or a dispersion containing the polymer) was dried at 50 to 60°C for 2 hours, or a water-repellent composition (such as a solution or a dispersion containing the polymer) was extracted with alcohol, then placed on a metal sample stage having a diameter of 80 mm, heated at 40°C for 3 minutes, and evaluated using a probe having a diameter of 50 mm. The numerical value of tackiness was the average of three measurements or, if the measured values varied, five measurements were made, the maximum and minimum values were discarded, and the remaining values were averaged.
The apparatus name and test conditions may be as follows:
Apparatus name: RHESCA Tacking Tester TAC-II
Test conditions:
Constant Load

| | |
|---|---|
| (1) Immersion Speed | 120mm/min. |
| (2) Test Speed | 600mm/min. |
| (3) Preload | 500gf |
| (4) Press Time | 10sec |
| (5) Distance | 5mm |

A greater numerical value of a measurement result means a greater adhesion.

The tackiness of the polymer of the present disclosure can be controlled by regulating the molecular structure of the polymer, the molecular weight of the polymer, and the molecular weight distribution of the polymer. The higher the molecular weight of the polymer is, the easier it is to reduce tackiness. In the molecular weight distribution of the polymer, the smaller the proportion of a low molecular weight polymer is, the easier it is to reduce tackiness. The molecular weight of the polymer and the molecular weight distribution of the polymer can be controlled by known methods. For example, the molecular weight of the polymer and the molecular weight distribution of the polymer can be controlled by regulating the type and amount of an initiator, using a chain transfer agent, the polymerization temperature, the monomer concentration, and the like.

### [Weight average molecular weight]

The weight average molecular weight of the polymer may be 100,000 or more, 120,000 or more, 130,000 or more, 140,000 or more, 150,000 or more, or 200,000 or more.
The weight average molecular weight of the polymer may be 1,000,000 or less, 750,000 or less, 500,000 or less, 400,000 or less, or 300,000 or less.

### [Number average molecular weight]

The number average molecular weight of the polymer may be 30,000 or more, 40,000 or more, 50,000 or more, or 60,000 or more. The number average molecular weight of the polymer may be 100,000 or less, 75,000 or less, 50,000 or less, 40,000 or less, or 30,000 or less.

The average molecular weight (weight average molecular weight Mw and/or number average molecular weight Mn) of the polymer of the present disclosure can be obtained by the following measurement method.

### Average molecular weight:

The number average molecular weight of the copolymer is determined by gel permeation chromatography (GPC) (in terms of polystyrene).
For gel permeation chromatography, an HLC-8420GPC EcoSEC Elite-WS (manufactured by Tosoh Corporation) was used. Two TSKgel SuperMultiporeHZ-M columns were connected and used. An RI detector was used as the detector. The standard substance used was standard polystyrene (SRM 706a NIST).
The analytical sample was prepared by dissolving the copolymer in tetrahydrofuran to obtain a 0.1% by weight solution, which was then to passed through a 0.5 µm filter. For the measurement of the average molecular weight, the columns were maintained at 40°C, tetrahydrofuran was used as an eluent, the flow rate was set to 0.35 mL/min, and 10 µL of the analytical sample was injected.

The polymer of the present disclosure may be non-fluorinated. Specifically, the polymer of the present disclosure may not have a perfluoroalkyl group having 8 or more carbon atoms, a perfluoroalkyl group having 6 or more carbon atoms, a perfluoroalkyl group, a fluoroalkyl group, or a fluorine atom.

### (1) Monomer

The polymer of the present disclosure contains a repeating unit derived from a monomer (1). The monomer (1) is represented by the following formula (1-1) or formula (1-2). The description provided below applies independently to formula (1-1) and formula (1-2).

R^{a}-X-CY_{3-α}Z_{α} (1-1)

R^{a}-X-NY_{2-β}Z_{β} (1-2)

### [Ra]

R^{a} is a polymerizable organic group.

The polymerizable organic group has the property that the molecule partially undergoes a chemical reaction due to an external stimulus such as heat, light, or radicals, and cleaves or degrades to cause a polymerization reaction. The polymerization may be chain polymerization and/or sequential polymerization. The polymerizable organic group may be, for example, a radically polymerizable organic group, a cationically polymerizable organic group, an anionically polymerizable organic group, a ring-opening polymerizable organic group, a condensation-polymerizable organic group, or an addition-polymerizable organic group.

R^{a} may be an organic group containing an ethylenically polymerizable group. The ethylenically polymerizable group is a group having an ethylenically unsaturated bond (i.e., a carbon-carbon double bond). A monomer having an organic group containing an ethylenically polymerizable group can form a polymer through a polymerization reaction such as radical polymerization. Such a monomer is also referred to as an ethylenically unsaturated monomer.

The organic group containing an ethylenically polymerizable group is not limited, and may be a vinyl group, a vinylene group, a vinylidene group, an acryloyl group, a methacryloyl group, or a derivative thereof.

R^{a} may be a group represented by the following formula:

CR^{a1}R^{a2}=C(-R^{a3})-R^{a4}-

wherein
R^{a1}, R^{a2}, and R^{a3} each independently represent a hydrogen atom, a monovalent organic group, or a halogen atom, and R^{a4} is a single bond or a divalent group.

R^{a1}, R^{a2}, and R^{a3} each independently represent a hydrogen atom, a monovalent organic group, or a halogen atom.

R^{a1}, R^{a2}, and R^{a3} may each independently be a hydrogen atom, a methyl group, a halogen atom, a substituted or non-substituted benzyl group, or a substituted or non-substituted phenyl group. R^{a1}, R^{a2}, and R^{a3} are each independently a hydrogen atom, a methyl group, a chlorine atom, a bromine atom, an iodine atom, or a cyano group. Preferably, R^{a1}, R^{a2}, and R^{a3} are each independently a hydrogen atom, a methyl group, or a chlorine atom.

R^{a4} is a single bond or a divalent group. R^{a4} is preferably a divalent group.

R^{a4} may be a group composed of one or more selected from the group consisting of R^{a41} and R^{a42}.

R^{a41} is a group composed of one or more selected from the group consisting of a direct bond, -O-, -C(=O)-, -C(=NR')-, -S-, -S(=O)₂-, -NR'-, and -C(OR')R'-, wherein R' is independently at each occurrence a hydrogen atom or a hydrocarbon group having 1 to 10 carbon atoms (for example, 1 to 5, 1 to 3, or 1 carbon atom), and

R^{a42} is a direct bond or a hydrocarbon group having 1 to 22 carbon atoms.

Examples of R^{a41} include
a direct bond,
-O-,
-O-C(=O)-,
-O-C(=O)-O-,
-O-C(=O)-NR'-,
-NR'-,
-NR'-C(=O)-,
-NR'-C(=O)-O-,
-NR'-C(=O)-NR'-,
-C (=O) -,
-C(=O)-O-,
-C(=O)-NR'-,
-SO₂-,
-SO₂NR'-, and
-C(OR')R'-,
wherein R' is independently at each occurrence a hydrogen atom or a hydrocarbon group having 1 to 30 carbon atoms (for example, 1 to 20, 1 to 10, or 1 to 4 carbon atoms).

R^{a42} may be a hydrocarbon group having 1 to 22 carbon atoms, and the number of carbon atoms in the hydrocarbon group may be 1 or more, 2 or more, 3 or more, 4 or more, 5 or more, 7 or more, 9 or more, 11 or more, or 13 or more, and may be 22 or less, 20 or less, 18 or less, 16 or less, 14 or less, 12 or less, 10 or less, 8 or less, 6 or less, 5 or less, 4 or less, or 3 or less.

Specific examples of R^{a42} include -(CH₂)_{q}-. q is an integer of 1 to 22. q may be 1 or more, 2 or more, 3 or more, 4 or more, 5 or more, 7 or more, 9 or more, 11 or more, or 13 or more. q may be 22 or less, 20 or less, 18 or less, 16 or less, 14 or less, 12 or less, 10 or less, 8 or less, 6 or less, 5 or less, 4 or less, or 3 or less.

The molecular weight of R^{a4} may be 10 or more, 50 or more, 100 or more, 200 or more, 300 or more, 500 or more, or 750 or more. The molecular weight of R^{a4} may be 3,000 or less, 2,500 or less, 2,000 or less, 1,500 or less, 1,000 or less, 750 or less, 500 or less, 300 or less, 200 or less, 100 or less, or 50 or less.

From the viewpoint of improving water-repellency, R^{a} may be an acryloyl group or a methacryloyl group. Specifically, R^{a} may be CH₂=CHC(=O)- or CH₂=CCH₃C(=O)-.

The acryloyl group or the methacryloyl group may be a derivative. Examples of the derivative of the acryloyl group or the methacryloyl group include:

CH₂=CHC(=O) -O-,

CH₂=CCH₃C(=O)-O-,

CH₂=CHC(=O)-NR'-,

CH₂=CCH₃C(=O)-NR'-,

CH₂=CHC(=O)-SR'-,

and

CH₂=CCH₃C(=O)-SR'-,

wherein R' is independently at each occurrence a hydrogen atom or a hydrocarbon group having 1 to 30 carbon atoms (for example, 1 to 20, 1 to 10, or 1 to 4 carbon atoms).

Specific examples of R^{a} include:

CH₂=CH-, CH₂=CCH₃-,

CH₂=CHC(=O)-O-, CH₂=CCH₃C(=O)-O-,

CH₂=CHC(=O)-NH-, and CH₂=CCH₃C(=O)-NH-.

### [X]

X is a single bond or a divalent group. X is preferably a divalent group.

X is a divalent group composed of one or more selected from the group consisting of X¹ and X², wherein
X¹ may be a group composed of one or more selected from the group consisting of a direct bond, -O-, -C(=O)-, -C(=NR')-, -S-, -S(=O)₂-, -NR'-, and -C(OR')R'-, wherein R' is independently at each occurrence a hydrogen atom or a hydrocarbon group having 1 to 10 carbon atoms (for example, 1 to 5, 1 to 3, or 1 carbon atom), and
X² may be a direct bond or a divalent hydrocarbon group having 1 to 22 carbon atoms and optionally having a substituent.

The molecular weight of X may be 10 or more, 50 or more, 100 or more, 200 or more, 300 or more, 500 or more, or 750 or more. The molecular weight of X may be 3,000 or less, 2,500 or less, 2,000 or less, 1,500 or less, 1,000 or less, 750 or less, 500 or less, 300 or less, 200 or less, 100 or less, or 50 or less.

### {X¹}

X¹ is a non-hydrocarbon linker.

X¹ is a direct bond or a divalent group. Preferably, X¹ is not only a direct bond.

The molecular weight of X¹ may be 2,000 or less, 1,500 or less, 1,000 or less, 750 or less, or 500 or less. The molecular weight of X¹ may be 10 or more, 50 or more, 100 or more, 200 or more, 300 or more, or 500 or more.

X¹ is a group composed of one or more selected from the group consisting of -O-, -C(=O)-, -S(=O)₂-, -NR'-, and -C(OR')R'-, wherein R' is independently at each occurrence a hydrogen atom or a hydrocarbon group having 1 to 30 carbon atoms (for example, 1 to 20, 1 to 10, or 1 to 4 carbon atoms). Examples of X¹ include:
a direct bond,
-O-,
-O-C(=O)-,
-O-C(=O)-O-,
-O-C(=O)-NR'-,
-NR'-,
-NR'-C(=O)-,
-NR'-C(=O)-O-,
-NR'-C(=O)-NR'-,
-C(=O)-,
-C(=O)-O-,
-C(=O)-NR'-,
-SO₂-,
-SO₂NR'-,
-C(OR')R'-, and
-C(OR')(-)₂,
wherein R' is independently at each occurrence a hydrogen atom or a hydrocarbon group having 1 to 30 carbon atoms (for example, 1 to 20, 1 to 10, or 1 to 4 carbon atoms).

### {X²}

X² is a direct bond or a divalent hydrocarbon group optionally having a substituent.

The number of carbon atoms in X² may be 1 or more, 2 or more, 3 or more, 4 or more, 5 or more, 7 or more, 9 or more, 11 or more, or 13 or more. The number of carbon atoms in X² may be 22 or less, 20 or less, 18 or less, 16 or less, 14 or less, 12 or less, 10 or less, 8 or less, 6 or less, 5 or less, 4 or less, or 3 or less.

The divalent hydrocarbon group may be a divalent aliphatic hydrocarbon group or a divalent aromatic hydrocarbon ring. The aliphatic hydrocarbon group may be a cyclic, branched, or linear hydrocarbon group. The divalent aliphatic hydrocarbon group may be a saturated or unsaturated (for example, saturated) aliphatic hydrocarbon group. The number of carbon atoms in the hydrocarbon group may be 1 or more, 2 or more, 3 or more, 4 or more, 5 or more, 7 or more, 9 or more, 11 or more, or 13 or more, and may be 22 or less, 20 or less, 18 or less, 16 or less, 14 or less, 12 or less, 10 or less, 8 or less, 6 or less, 5 or less, 4 or less, or 3 or less.

The hydrocarbon group of X² is optionally substituted. Examples of substituents include -OR', - N(R')₂, -COOR', and halogen atoms, wherein R' is independently at each occurrence a hydrogen atom or a hydrocarbon group having 1 to 30, 1 to 20, 1 to 10, or 1 to 4 carbon atoms. The substituent may or may not have active hydrogen. The number of substituents may be 6 or less, 5 or less, 4 or less, 3 or less, 2 or less, 1 or less, or 0.

Specific examples of X² include -(CH₂)_{q}-. q is an integer of 1 to 22. q may be 1 or more, 2 or more, 3 or more, 4 or more, 5 or more, 7 or more, 9 or more, 11 or more, or 13 or more. q may be 22 or less, 20 or less, 18 or less, 16 or less, 14 or less, 12 or less, 10 or less, 8 or less, 6 or less, 5 or less, 4 or less, or 3 or less.

Examples of the divalent aromatic hydrocarbon ring include groups obtained by removing 2 to 4 hydrogen atoms from aromatic hydrocarbon rings such as benzene, naphthalene, anthracene, phenanthrene, tetracene (naphthacene), pentacene, pyrene, and coronene. The number of ring constituting atoms of the aromatic hydrocarbon ring is 3 to 20, 4 to 16, or 5 to 12, and preferably 5 to 12. The aromatic hydrocarbon ring may have a valence of 2 or more, 3 or more, or 4, and may be 4 or less, 3 or less, or 2.

The divalent aromatic hydrocarbon ring may have a substituent. Examples of substituents include -R', -OR', -N(R')₂, -COOR', and halogen atoms, wherein R' is independently at each occurrence a hydrogen atom or a hydrocarbon group having 1 to 30, 1 to 20, 1 to 10, or 1 to 4 carbon atoms. The substituent may or may not have active hydrogen. The number of substituents may be 6 or less, 5 or less, 4 or less, 3 or less, 2 or less, 1 or less, or 0. In the aromatic hydrocarbon ring having a substituent, the amount of carbon atom based on the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

### {Examples of X}

Examples of X include -X¹-, -X¹-X²-, -X¹-X²-X¹-, -X¹-X²-X¹-X²-, -X²-, -X²-X¹-, -X²-X¹-X²-, and -X²-X¹-X²-X¹-. Preferred examples of X include -X¹-X²- and -X²-.

X may be a direct bond or a hydrocarbon group having 1 to 22 carbon atoms and optionally having a substituent. Preferably, X may be a hydrocarbon group having 1 to 22 carbon atoms and optionally having a substituent. The number of carbon atoms in the hydrocarbon group of X may be 1 or more, 2 or more, 3 or more, 4 or more, 5 or more, 7 or more, 9 or more, 11 or more, or 13 or more. The number of carbon atoms in the hydrocarbon having 1 to 22 carbon atoms of X may be 22 or less, 20 or less, 18 or less, 16 or less, 14 or less, 12 or less, 10 or less, 8 or less, 6 or less, 5 or less, 4 or less, or 3 or less.

Specific examples of X include -(CH₂)_{q}-. q is an integer of 1 to 22. q may be 1 or more, 2 or more, 3 or more, 4 or more, 5 or more, 7 or more, 9 or more, 11 or more, or 13 or more. q may be 22 or less, 20 or less, 18 or less, 16 or less, 14 or less, 12 or less, 10 or less, 8 or less, 6 or less, 5 or less, 4 or less, or 3 or less.

Specific examples of X is a direct bond or an alkylene group having 1 to 5 carbon atoms, and preferably an alkylene group having 1 to 3 carbon atoms.

### [Y]

Y is each independently a hydrogen atom or a hydrocarbon group having 1 to 10 carbon atoms. Y is preferably a branched or linear (preferably long linear chain) hydrocarbon group. Preferably, the hydrocarbon group is an aliphatic hydrocarbon group, in particular, a saturated aliphatic hydrocarbon group, and especially an alkyl group. The -CH₃ group has a lower surface free energy than -CH₂- and more likely exhibits liquid repellency. For this reason, a structure having many branches and many -CH₃ groups is preferred. A long chain alkyl group having a certain length, on the other hand, exhibits high liquid repellency derived from its crystallinity. Accordingly, it may be a branched hydrocarbon group (for example, a branched alkyl group), in particular, a t-butyl group or an isopropyl group, a group having a multi-branched structure, or a long chain hydrocarbon group (or a long linear hydrocarbon group) such as an alkyl group.

Y may each independently be a hydrogen atom.

The number of carbon atoms in the hydrocarbon having 1 to 10 carbon atoms of Y may be 1 or more, 2 or more, 3 or more, 4 or more, or 6 or more. The number of carbon atoms in the hydrocarbon having 1 to 10 carbon atoms of Y may be 10 or less, 8 or less, 6 or less, 5 or less, 4 or less, or 3 or less.

For example, Y may be -(CH₂)ₙ-CH₃. n may be 0 to 9, may be 0 or more, 1 or more, 2 or more, 3 or more, 4 or more, or 6 or more, and may be 9 or less, 8 or less, 6 or less, 5 or less, 4 or less, or 3 or less.

### [α]

α means the number of Z groups in formula (1-1). α is an integer of 1 to 3. α is 1, 2, or 3.

In one embodiment, α is 1.

### [β]

β means the number of Z groups in formula (1-2). β is an integer of 1 or 2.

### [Z]

Z is each independently -Z¹-SiZ²₃₋ₘZ³ₘ. Z is a group having a siloxane bond.

### {Z¹}

In -Z¹-SiZ²₃₋ₘZ³ₘ, Z¹ is a single bond or a divalent group. Z¹ is preferably a divalent group.
Z¹ may be a divalent group composed of one or more selected from the group consisting of Z¹¹ and Z¹², and
Z¹¹ may be a group composed of one or more selected from the group consisting of a direct bond, -O-, -C(=O)-, -C(=NR'')-, -S-, -S(=O)₂-, -NR''-, and -C(OR")R"-, wherein R" is independently at each occurrence a hydrogen atom or a hydrocarbon group having 1 to 10 carbon atoms (for example, 1 to 5, 1 to 3, or 1 carbon atom).

The molecular weight of Z¹ may be 10 or more, 50 or more, 100 or more, 200 or more, 300 or more, 500 or more, or 750 or more. The molecular weight of Y may be 3,000 or less, 2,500 or less, 2,000 or less, 1,500 or less, 1,000 or less, 750 or less, 500 or less, 300 or less, 200 or less, 100 or less, or 50 or less.

In one embodiment, Z¹ is a single bond.

### (Z¹¹)

Z¹¹ is a non-hydrocarbon linker.

Z¹¹ is a direct bond or a divalent group.
Preferably, Z¹¹ is not only a direct bond.

The molecular weight of Z¹¹ may be 2,000 or less, 1,500 or less, 1,000 or less, 750 or less, or 500 or less. The molecular weight of Z¹¹ may be 10 or more, 50 or more, 100 or more, 200 or more, 300 or more, or 500 or more.

Z¹¹ is a group composed of one or more selected from the group consisting of -O-, -C(=O)-, -S(=O)₂-, -NR'-, and -C(OR')R'-, wherein R' is independently at each occurrence a hydrogen atom or a hydrocarbon group having 1 to 30 carbon atoms (for example, 1 to 20, 1 to 10, or 1 to 4 carbon atoms). Examples of Z¹¹ include
a direct bond,

   -O-,

   -O-C(=O)-,

   -O-C(=O)-O-,

   -O-C(=O)-NR'-,

   -NR'-,

   -NR'-C(=O)-,

   -NR'-C(=O)-O-,

   -NR'-C(=O)-NR'-,

   -C(=O)-,

   -C(=O)-O-,

   -C(=O)-NR'-,

   -SO₂-,

   -SO₂NR'-,

   -C(OR')R'-,

   and

   -C(OR')(-)₂,
wherein R' is independently at each occurrence a hydrogen atom or a hydrocarbon group having 1 to 30 carbon atoms (for example, 1 to 20, 1 to 10, or 1 to 4 carbon atoms).

### (Z¹²)

Z¹² is a direct bond or a hydrocarbon group optionally having a substituent.

The number of carbon atoms in Z¹² may be 1 or more, 2 or more, 3 or more, 4 or more, 6 or more, or 8 or more. The number of carbon atoms in Z¹² may be 10 or less, 9 or less, 8 or less, 7 or less, 6 or less, or 5 or less carbon atoms.

The hydrocarbon group in Z¹² is optionally substituted. Examples of substituents include -OR', - N(R')₂, -COOR', and halogen atoms, wherein R' is independently at each occurrence a hydrogen atom or a hydrocarbon group having 1 to 30, 1 to 20, 1 to 10, or 1 to 4 carbon atoms. The substituent may or may not have active hydrogen. The number of substituents may be 6 or less, 5 or less, 4 or less, 3 or less, 2 or less, 1 or less, or 0.

Specific examples of Z¹² include -(CH₂)_{q}-. q is an integer of 1 to 22. q may be 1 or more, 2 or more, 3 or more, 4 or more, 5 or more, 7 or more, 9 or more, 11 or more, or 13 or more. q may be 22 or less, 20 or less, 18 or less, 16 or less, 14 or less, 12 or less, 10 or less, 8 or less, 6 or less, 5 or less, 4 or less, or 3 or less.

### (Examples of Z¹)

Examples of Z¹ include -Z¹¹-, -Z¹¹-Z¹²-, -Z¹¹-Z¹²-Z¹¹-, -Z¹¹-Z¹²-Z¹¹-Z¹²-, -Z¹²-, -Z¹²-Z¹¹-, -Z¹²-Z¹¹-Z¹²-, and -Z¹²-Z¹¹-Z¹²-Z¹¹-. Preferred examples of Z¹ include -Z¹¹-Z¹²- and - Z¹²-.

Z¹ may be a direct bond or a hydrocarbon group having 1 to 22 carbon atoms and optionally having a substituent. Preferably, Z¹ may be a hydrocarbon group having 1 to 10 carbon atoms and optionally having a substituent. The number of carbon atoms in the hydrocarbon group of Z¹ may be 1 or more, 2 or more, 3 or more, 4 or more, 5 or more, 7 or more, 9 or more, 11 or more, or 13 or more. The number of carbon atoms in the hydrocarbon having 1 to 22 carbon atoms of Z¹ may be 22 or less, 20 or less, 18 or less, 16 or less, 14 or less, 12 or less, 10 or less, 8 or less, 6 or less, 5 or less, 4 or less, or 3 or less.

Specific examples of Z¹ include -(CH₂)ₛ-. s is an integer of 1 to 22. s may be 1 or more, 2 or more, 3 or more, 4 or more, 5 or more, 7 or more, 9 or more, 11 or more, or 13 or more. s may be 22 or less, 20 or less, 18 or less, 16 or less, 14 or less, 12 or less, 10 or less, 8 or less, 6 or less, 5 or less, 4 or less, or 3 or less.

### {Z²}

In -Z¹-SiZ²₃₋ₘZ³ₘ, Z² is each independently a hydrocarbon group having 1 to 10 carbon atoms. Z² is preferably a branched or linear (preferably long linear chain) hydrocarbon group. Preferably, the hydrocarbon group is an aliphatic hydrocarbon group, in particular, a saturated aliphatic hydrocarbon group, and especially an alkyl group.

The number of carbon atoms in the hydrocarbon having 1 to 10 carbon atoms of Z² may be 1 or more, 2 or more, 3 or more, 4 or more, or 6 or more. The number of carbon atoms in the hydrocarbon having 1 to 10 carbon atoms of Z² may be 10 or less, 8 or less, 6 or less, 5 or less, 4 or less, or 3 or less. Z² may be an alkyl group having 1 to 3 carbon atoms. Z² may be a methyl group.

### {m}

m is each independently an integer of 1 to 3. m is 1, 2, or 3. In one embodiment, m is 2 or 3. In one embodiment, m is 1 or 2.

### {Z³}

In -Z¹-SiZ²₃₋ₘZ³ₘ, Z³ is each independently -(O-SiZ³¹₂)ₚ-(CH₂)_{q}-Z³²-SiZ³³₃.

### (Z³¹)

In - (O-SiZ³¹₂)ₚ-(CH₂)_{q}-Z³²-SiZ³³₃, Z³¹ is each independently a hydrocarbon group having 1 to 10 carbon atoms or -OSiZ³¹¹₃.

The number of carbon atoms in the hydrocarbon having 1 to 10 carbon atoms of Z³¹ may be 1 or more, 2 or more, 3 or more, 4 or more, or 6 or more. The number of carbon atoms in the hydrocarbon having 1 to 10 carbon atoms of Z³¹ may be 10 or less, 8 or less, 6 or less, 5 or less, 4 or less, or 3 or less. Z³¹ may be a methyl group.

At least one Z³¹ group of the two Z³¹ groups in OSiZ³¹₂ may be -OSiZ³¹¹₃. The two Z³¹ groups in OSiZ³¹₂ may be either -OSiZ³¹¹ or a hydrocarbon group having 1 to 10 carbon atoms.

### (Z³¹¹)

Z³¹¹ is each independently a hydrocarbon group having 1 to 10 carbon atoms or -OSiZ³¹¹¹₃.

The number of carbon atoms in the hydrocarbon having 1 to 10 carbon atoms of Z³¹¹ may be 1 or more, 2 or more, 3 or more, 4 or more, or 6 or more. The number of carbon atoms in the hydrocarbon having 1 to 10 carbon atoms of Z³¹¹ may be 10 or less, 8 or less, 6 or less, 5 or less, 4 or less, or 3 or less. Z³¹¹ may be a methyl group.

At least one Z³¹¹ group of the three Z³¹¹ groups in OSiZ³¹¹₃ may be -OSiZ³¹¹¹₃. The three Z³¹¹ groups in OSiZ³¹¹₃ may be either -OSiZ³¹¹¹₃ or a hydrocarbon group having 1 to 10 carbon atoms. At least two Z³¹¹ groups of the three Z³¹¹ groups in OSiZ³¹¹₃ may be -OSiZ³¹¹¹3.

### (Z³¹¹¹)

Z³¹¹¹ is each independently a hydrocarbon group having 1 to 10 carbon atoms. The number of carbon atoms in the hydrocarbon having 1 to 10 carbon atoms of Z³¹¹¹ may be 1 or more, 2 or more, 3 or more, 4 or more, or 6 or more. The number of carbon atoms in the hydrocarbon having 1 to 10 carbon atoms of Z³¹¹¹ may be 10 or less, 8 or less, 6 or less, 5 or less, 4 or less, or 3 or less. Z³¹¹¹ may be a methyl group.

### (Z³²)

In -(O-SiZ³¹₂)ₚ-(CH₂)_{q}-Z³²-SiZ³³₃, Z³² is -O- (an oxygen atom) or -CH₂-.

In one embodiment, Z³² is -O- (an oxygen atom).

### (Z³³)

In - (O-SiZ³¹₂)ₚ-(CH₂)_{q}-Z³²-SiZ³³₃, Z³³ is each independently a hydrocarbon group having 1 to 10 carbon atoms or -OSiZ³³¹₃.

In one embodiment, Z³³ may be an alkyl group having 1 to 3 carbon atoms or -OSiZ³³¹₃.

The number of carbon atoms in the hydrocarbon having 1 to 10 carbon atoms of Z³³ may be 1 or more, 2 or more, 3 or more, 4 or more, or 6 or more. The number of carbon atoms in the hydrocarbon having 1 to 10 carbon atoms of Z³³ may be 10 or less, 8 or less, 6 or less, 5 or less, 4 or less, or 3 or less. Z³³ may be an alkyl group having 1 to 3 carbon atoms. Z³³ may be a methyl group.

At least one Z³³ group of the three Z³³ groups in SiZ³³₃ may be -OSiZ³³¹₃. The three Z³³ groups in SiZ³³₃ may be either OSiZ³³¹₃ or a hydrocarbon group having 1 to 10 carbon atoms. At least two Z³³ groups of the three Z³³ groups in SiZ³³₃ may be OSiZ³³¹₃.

### (Z³³¹)

Z³³¹ is each independently a hydrocarbon group having 1 to 10 carbon atoms.

The number of carbon atoms in the hydrocarbon having 1 to 10 carbon atoms of Z³³¹ may be 1 or more, 2 or more, 3 or more, 4 or more, or 6 or more. The number of carbon atoms in the hydrocarbon having 1 to 10 carbon atoms of Z³³¹ may be 10 or less, 8 or less, 6 or less, 5 or less, 4 or less, or 3 or less. Z³³¹ may be a methyl group.

Z³³¹ may be each independently an alkyl group having 1 to 3 carbon atoms.

### {p}

p is an integer of 0 to 196. p may be 0 or more, 10 or more, 20 or more, 30 or more, 40 or more, 50 or more, 60 or more, 70 or more, 80 or more, 90 or more, or 100 or more. p may be 196 or less, 190 or less, 180 or less, 170 or less, 160 or less, 150 or less, 140 or less, 130 or less, 120 or less, 110 or less, or 100 or less.

The total value of p in formula (1-1) or (1-2) does not need to exceed 196.

In one embodiment, p is 0.

### {q}

q is an integer of 0 to 10. q may be 0 or more, 1 or more, 2 or more, 3 or more, 4 or more, or 5 or more, and may be 10 or less, 9 or less, 8 or less, 7 or less, 6 or less, or 5 or less.

In one embodiment, q is 0.

The end moiety of the monomer (1) of the present disclosure may contain a trialkylsiloxy group-containing structure in which a trialkylsiloxy group (-OSiR^{Si}₃) is bonded to a Si atom (wherein R^{Si} is a hydrocarbon group having 1 to 10 carbon atoms as will be described in detail below).

The Si atom of the end moiety refers not to the Si atom constituting the trialkylsiloxy group (-OSiR^{Si}₃) but to the Si atom adjacent and bonded to the trialkylsiloxy group (-OSiR^{Si}₃). An alkyl group (R^{Si}) may be bonded to the Si atom.

The number of trialkylsiloxy groups (-OSiR^{Si}₃) bonded to the Si atom in the end moiety of the monomer (1) of the present disclosure is an integer of 1 to 3.

The end moiety of the monomer (1) of the present disclosure means the end moiety on the Z side in the above formula, and is the moiety located within Z.

Specifically, the end moiety of the monomer (1) of the present disclosure may contain a structure represented by the following formula:

-Si (-OSiR^{Si}₃)_{X}R^{Si}_{3-X}

wherein
R^{Si} is each independently a hydrocarbon group having 1 to 10 carbon atoms, and
x is an integer of 1 to 3.

R^{Si} is a hydrocarbon group having 1 to 10 carbon atoms. The number of carbon atoms in the hydrocarbon having 1 to 10 carbon atoms of R^{Si} may be 1 or more, 2 or more, 3 or more, 4 or more, or 6 or more. The number of carbon atoms in the hydrocarbon having 1 to 10 carbon atoms of R^{Si} may be 10 or less, 8 or less, 6 or less, 5 or less, 4 or less, or 3 or less. R^{Si} may be an alkyl group having 1 to 3 carbon atoms. R^{Si} may be a methyl group.

x is an integer of 1 to 3. x may be 1 or more or 2 or more, and may be 3 or less, 2 or less, or 1 or less.

The trialkylsiloxy group (-OSiR^{Si}₃) bonded to the Si atom in the end moiety of the monomer (1) may be -OSiZ³³¹₃ described above.

The monomer (1) of the present disclosure may have a branched siloxy structure represented by the following formula: 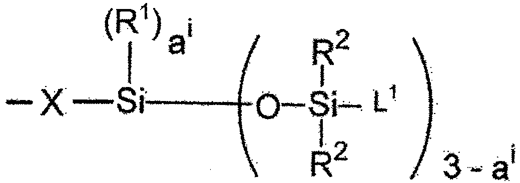 wherein
X is a single bond or a divalent organic group,
R¹ and R² are each independently a trialkylsiloxy group (-OSiR^{Si}₃) or an alkyl group, alkoxy group, aryl group, or aralkyl group having 1 to 10 carbon atoms,
L¹, when i=1, is a silylalkyl group represented by the following formula: 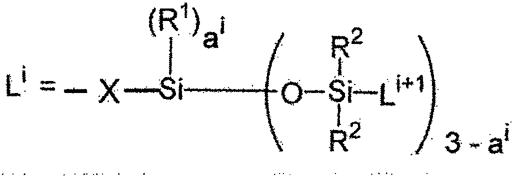
(wherein
X is a single bond or a divalent organic group,
R¹ and R² are each independently a trialkylsiloxy group (-OSiR^{Si}₃) or an alkyl group, alkoxy group, aryl group, or aralkyl group having 1 to 10 carbon atoms,
i is an integer of 1 to 10 indicating the total number of hierarchies of the silylalkyl group, and is preferably an integer of 1 to 5, more preferably 1 to 3, and even more preferably 1 or 2,
Lⁱ⁺¹ is a group selected from the group consisting of a hydrogen atom, an alkyl group, alkoxy group, aryl group, or aralkyl group having 1 to 10 carbon atoms, and the above silylalkyl group, provided that
   when i=c (wherein c is an integer of 1 to 10 indicating the hierarchy of the silylalkyl group, and is preferably 1 to 5, more preferably 1 to 3, and even more preferably 1 or 2),
   Lⁱ⁺¹ is a hydrogen atom or an alkyl group, alkoxy group, aryl group, or aralkyl group having 1 to 10 carbon atoms,
   when i<c, Lⁱ⁺¹ is the above silylalkyl group, and aⁱ is an integer of 0 to 3, preferably 0 to 2, more preferably 0 to 1, and even more preferably 0).

X is a single bond or a divalent group. X is preferably a divalent organic group.

Examples of the divalent organic group include, but are not limited to, -O- (an oxygen atom) and substituted or non-substituted, and linear or branched divalent hydrocarbon group having 1 to 30 carbon atoms.

Examples of the substituted or non-substituted, and linear or branched divalent hydrocarbon group having 1 to 30 carbon atoms include linear or branched alkylene groups having 1 to 30 carbon atoms, such as a methylene group, a dimethylene group, a trimethylene group, a tetramethylene group, a pentamethylene group, a hexamethylene group, a heptamethylene group, and an octamethylene group;
alkenylene groups having 2 to 30 carbon atoms, such as a vinylene group, an allylene group, a butenylene group, a hexenylene group, and an octenylene group;
arylene groups having 6 to 30 carbon atoms, such as a phenylene group and a diphenylene group;
alkylenearylene groups having 7 to 30 carbon atoms, such as a dimethylenephenylene group; and
groups in which the hydrogen atoms bonded to the carbon atoms of such groups are at least partially replaced with halogen atoms such as fluorine or organic groups including a carbinol group, an epoxy group, a glycidyl group, an acyl group, a carboxyl group, an amino group, a methacryl group, a mercapto group, an amide group, an oxyalkylene group, or the like.

The divalent hydrocarbon group is preferably an non-substituted divalent saturated hydrocarbon group having 1 to 30 carbon atoms, more preferably a linear or branched alkylene group having 1 to 6 carbon atoms, and particularly preferably a dimethylene group.

For example, the divalent organic group may be a group selected from the following:

-R³-

-R³-CO-

-R³-COO-R³-

-CO-R³-

-R³-COO-R^{3'}-

**-**R³-CONH-R^{3'}-

**-**R³-R^{3'}-

wherein
R³ is the above divalent hydrocarbon group that has 1 to 30 carbon atoms, is substituted or non-substituted, and is linear or branched, and, as already described, may have a substituent, and
R³' is a group selected from the groups represented by the following formulae:

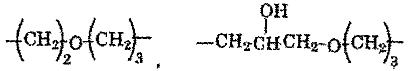

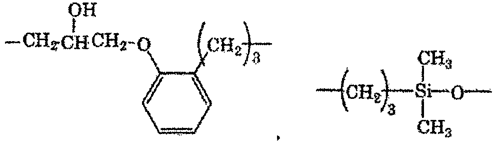

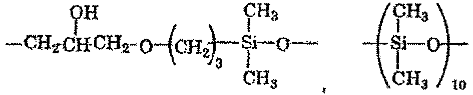

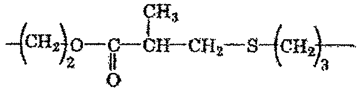

Preferable is a divalent organic group represented by the general formula -R³- or -R³-R³'- that can be introduced by a reaction between a silicon atom-bonded hydrogen atom and an alkenyl group. Likewise, also suitable is a divalent organic group represented by the general formula -R³-COO-R³- or -R³-COO-R³'- that can be introduced by a reaction between a silicon atom-bonded hydrogen atom and an unsaturated carboxylic acid functional group.

In particular, X is preferably -O- (an oxygen atom) or a linear or branched alkylene group having 1 to 30 carbon atoms, and is particularly preferably -O- (an oxygen atom) or a dimethylene group (an ethylene group).

Examples of the alkyl group, alkoxy group, aryl group, or aralkyl group having 1 to 10 carbon atoms include linear or branched alkyl groups having 1 to 10 carbon atoms, such as a methyl group, an ethyl group, a propyl group, a butyl group, a pentyl group, a hexyl group, a heptyl group, and an octyl group;
cyclic alkyl groups having 3 to 10 carbon atoms, such as a cyclopentyl group and a cyclohexyl group;
linear or branched alkoxy groups having 1 to 10 carbon atoms, such as a methoxy group, an ethoxy group, and a butoxy group;
aryl groups having 6 to 10 carbon atoms, such as a phenyl group, a tolyl group, and a xylyl group;
aralkyl groups having 7 to 10 carbon atoms, such as a benzyl group; and
groups in which the hydrogen atoms bonded to the carbon atoms of such groups are at least partially replaced with halogen atoms such as fluorine or organic groups including a carbinol group, an epoxy group, a glycidyl group, an acyl group, a carboxyl group, an amino group, a methacryl group, a mercapto group, an amide group, an oxyalkylene group, or the like. The alkyl group, alkoxy group, aryl or aralkyl group is preferably an non-substituted alkyl group, alkoxy group, aryl group, or aralkyl group having 1 to 10 carbon atoms, more preferably an non-substituted alkyl group or aryl group having 1 to 6 carbon atoms, and particularly preferably a methyl group, an ethyl group, or a phenyl group.

The trialkylsiloxy group (-OSiR^{Si}₃) is as described above.

The branched siloxy structure may be a chemical structure highly radially branched from one silicon atom, and i, which indicates the total number of hierarchies of the silylalkyl group, indicates the degree of branching.

In particular, preferred branched siloxy structures are as follows: 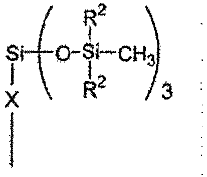 wherein X and R² are the same as above, and 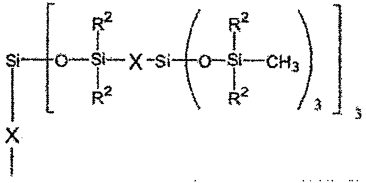 wherein X and R² are the same as above.

The monomer (1) having a branched siloxy structure is represented by, for example, the following formula: 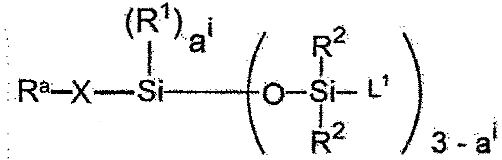 wherein
R^{a} is a polymerizable organic group and is the same as above, and
X, R¹, R², L¹, and aⁱ are the same as above.

The monomer (1) having a branched siloxy structure preferably has a group selected from the group consisting of an acrylic group- or methacrylic group-containing organic group represented by:

CH₂=C(-R^{b})-C(=O)-O-R^{c}-

(wherein R^{b} is a hydrogen atom or a methyl group, and R^{c} is an alkylene group having 1 to 10 carbon atoms) or

CH₂=C(-R^{b})-C(=O)-NH-R^{c}-

(wherein R^{b} and R^{c} are the same as above), an alkenylaryl group-containing organic group represented by the general formula: 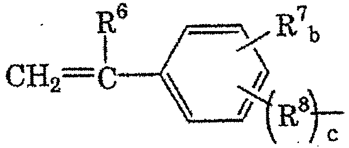 (wherein R⁶ is a hydrogen atom or a methyl group, R⁷ is an alkyl group having 1 to 10 carbon atoms, R⁸ is an alkylene group having 1 to 10 carbon atoms, b is an integer of 0 to 4, and c is 0 or 1), and an alkenyl group having 2 to 10 carbon atoms.

The monomer (1) having a branched siloxy structure can be produced by, for example, the method for producing a branched siloxane-silalkylene copolymer described in JP 11-1530 A (Japanese Patent Application No. 9-171154). For example, it can be produced by subjecting a silicon atom-bonded hydrogen atom-containing silicon compound represented by the general formula:

R^{a}-Si-(OSiR²₂H)₃

(wherein R^{a} and R² are the same as above) and an alkenyl group-containing organosilicon compound to a hydrosilylation reaction. Examples of the silicon compound represented by the above formula include 3-methacryloxypropyltris(dimethylsiloxy)silane, 3-acryloxypropyltris(dimethylsiloxy)silane, and 4-vinylphenyltris(dimethylsiloxy)silane. Examples of alkenyl group-containing organosilicon compounds include vinyltris(trimethylsiloxy)silane, vinyltris(dimethylphenylsiloxy)silane, and 5-hexenyltris(trimethylsiloxy)silane. The hydrosilylation reaction is preferably carried out in the presence of a transition metal catalyst such as chloroplatinic acid or a platinum vinylsiloxane complex.

### [Examples of monomer (1)]

The monomer (1) may be a monomer represented by the following formula:

CH₂=C(-R^{a5})-C(=O)-R^{a6}-X-CY_{3-α}Z_{α}

or

CH₂=C(-R^{a5})-C(=O)-R^{a6}-X-NY_{2-β}Z_{β}

wherein
R^{a5} is each independently a hydrogen atom or an alkyl group having 1 to 3 carbon atoms,
R^{a6} is each independently -O- or -NH-,
X is each independently -(CH₂)_{q}-,
   q is each independently an integer of 1 to 10,
Y is each independently a hydrogen atom or an alkyl group having 1 to 3 carbon atoms,
Z is -Z¹-SiZ²₃₋ₘZ³ₘ,
Z¹ is a single bond or -(CH₂)ₛ-,
   s is an integer of 1 to 3,
Z² is each independently an alkyl group having 1 to 10 carbon atoms,
   m is an integer of 1 to 3,
Z³ is each independently -(O-SiZ³¹₂)ₚ-(CH₂)_{q}-Z³²-SiZ³³₃,
   p is each independently 0 or 1,
   q is each independently 0 or 1,
   Z³¹ is each independently an alkyl group having 1 to 3 carbon atoms,
   Z³² is -O- or -CH₂-,
      Z³³ is each independently an alkyl group having 1 to 10 carbon atoms or -OSiZ³³¹₃, and
      Z³³¹ is each independently an alkyl group having 1 to 10 carbon atoms.

R^{a5} is a hydrogen atom or an alkyl group having 1 to 3 carbon atoms, preferably an alkyl group having 1 to 3 carbon atoms, and more preferably a methyl group.

R^{a6} is -O- or -NH-, and preferably -O-.

X is -(CH₂)_{q}-.

q is an integer of 1 to 10. q may be 1 or more, 2 or more, 3 or more, 4 or more, or 5 or more, and may be 10 or less, 9 or less, 8 or less, 6 or less, or 5 or less.

Y is each independently a hydrogen atom or an alkyl group having 1 to 3 carbon atoms, and more preferably a methyl group.

Z is -Z¹-SiZ2₃₋ₘZ³ₘ.

m is an integer of 1 to 3, and is 1, 2, or 3.

Z¹ is a single bond or -(CH₂)ₛ-, and
s is an integer of 1 to 3.

Z² is each independently an alkyl group having 1 to 10 carbon atoms, preferably an alkyl group having 1 to 3 carbon atoms, and more preferably a methyl group.

Z³ is each independently -O-SiZ³³₃.

Z³¹ is each independently an alkyl group having 1 to 3 carbon atoms, and more preferably a methyl group.

Z³² is -O- or -CH₂-.

Z³³ is each independently an alkyl group having 1 to 10 carbon atoms or -OSiZ³³¹₃. The alkyl group having 1 to 10 carbon atoms of Z³³ is preferably an alkyl group having 1 to 3 carbon atoms, and more preferably a methyl group.

Z³³¹ is each independently an alkyl group having 1 to 10 carbon atoms, preferably an alkyl group having 1 to 3 carbon atoms, and more preferably a methyl group.

### [Examples of monomer (1)]

Examples of the monomer (1) include, but are not limited to, compounds represented by the following formulae. In the following formulae, TMS means -Si(CH₃)₃.

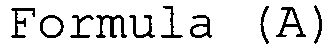

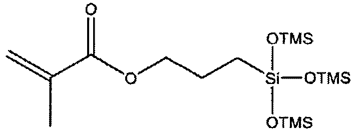

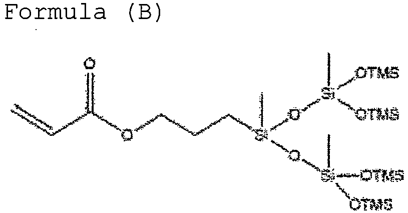

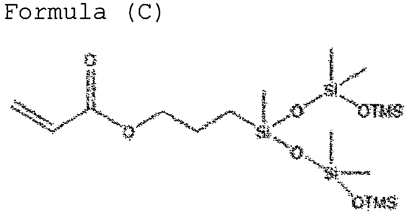

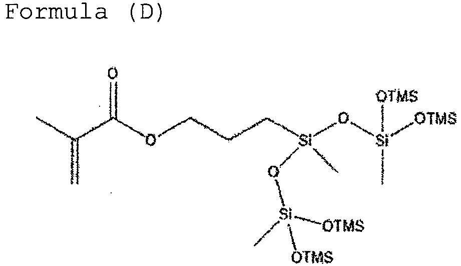

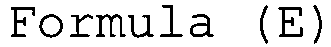

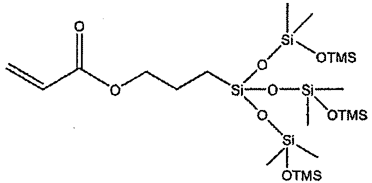

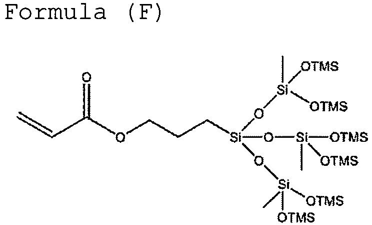

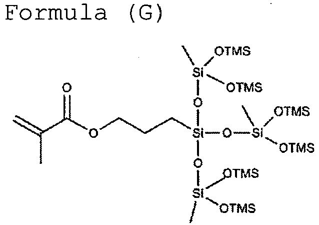

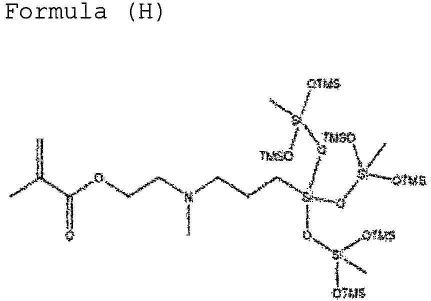

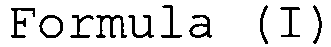

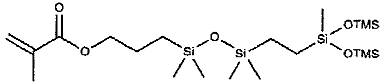

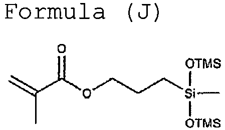

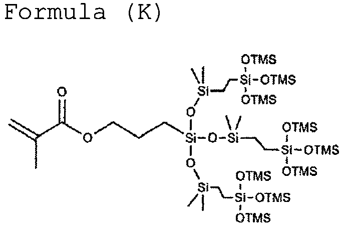

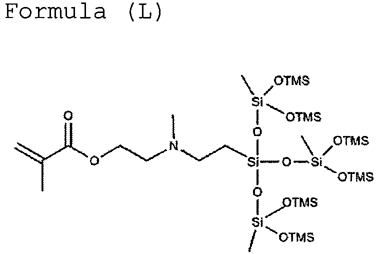

Among the above formulae (A) to (L), the formulae (A), (B), (C), (D), (E), (F), (G), and (H) are preferred.

The monomer (1) may be polymerized using a known synthesis method, or a commercially available product may be used. For example, the monomer (1) can be synthesized as follows.

A precursor compound represented by the following formula (1-1a) or (1-2a) is provided:

Q-X-CY_{3-α}(-Z¹SiZ²_{3-M}R^{Si}ₘ)_{α} (1-1a)

Q-X-NY₂-_{β}(-Z¹-SiZ²₃₋ₘR^{Si}ₘ)_{β} (1-2a)

wherein
Q is each independently F, Cl, Br, or I,
R^{Si} is -OR^{1Si},
   R^{1Si} is a hydrocarbon group having 1 to 10 carbon atoms, and
other symbols are as defined above.

In the above formulae, the -Si-R^{Si}ₘ group corresponds to the hydrolyzable silyl group.

Then, the precursor compound is reacted with a Si-H group-containing organosilicon compound. Specifically, the hydrolyzable silyl group of formula (1-1a) or (1-2a) is reacted with the Si-H group of the Si-H group-containing organosilicon compound. The reaction can be further accelerated by using a Lewis acid such as tris(pentafluorophenyl)borane during the reaction.

Examples of the precursor compound represented by formula (1-1a) or (1-2a) include silane compounds such as (3-chloropropyl)diethoxy(methyl)silane and (3-chloropropyl)trimethoxysilane.

The Si-H group-containing organosilicon compound is a siloxane compound containing the above Z³, and examples include hydrosilanes such as trimethoxyhydrosilane, triethoxyhydrosilane, and triethylsilane; dimethylpolysiloxanes containing a Si-H group at one end such as 1,1,3,3,3-pentamethyldisiloxane and 1,1,1,3,3,5,5-heptamethyltrisiloxane; and dimethylpolysiloxanes containing a Si-H group in a side chain such as 1,1,1,3,5,5,5-heptamethyltrisiloxane.

By reacting the precursor compound with a Si-H group-containing organosilicon compound, a compound represented by the following formula (1-1b) or (1-2b) can be obtained in which the hydrolyzable silyl group "R^{Si}" of the precursor compound is substituted with the group containing "Z³" of the Si-H group-containing organosilicon compound:

Q-X-CY_{3-α}(-Z¹-SiZ²₃₋ₘZ³ₘ)_{α} (1-1b)

Q-X-NY_{2-β}(-Z^{L}SiZ²₃₋ₘZ³ₘ)_{β} (1-2b)

wherein
Q is each independently F, Cl, Br, or I, and
symbols other than Q are as defined above.

By reacting the compound represented by formula (1-1b) or (1-2b) with a compound having a polymerizable organic group R^{a}, the monomer (1) represented by the following formula (1-1) or (1-2):

R³-X-CY_{3-α}Z_{α} (1-1)

R^{a}-X-NY_{2-β}Z_{β} (1-2)

can be obtained.

The compound having a polymerizable organic group R^{a} preferably has a functional group capable of reacting with Q, and preferably has, for example, a carboxylic acid, an amine, or a derivative thereof. Examples of the compound having a polymerizable organic group R^{a} include (meth)acrylic acid and (meth)acrylamide.

The monomer (1) of the present disclosure can be produced in accordance with the descriptions of, for example, WO 2020/142474, WO 2020/142441, JP 2019-89715 A, and WO 2020/142388.

### (2) Hydrophobic monomer

The polymer of the present disclosure may further contain a repeating unit derived from (2) a hydrophobic monomer having a hydrocarbon group having 2 to 40 carbon atoms.

The hydrocarbon group contained in the monomer (2) may be an aromatic hydrocarbon group or an aliphatic hydrocarbon group, and is preferably an aliphatic hydrocarbon group and, in particular, a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (an alkyl group). The number of carbon atoms in the hydrocarbon group may be 6 or more, 8 or more, 10 or more, 12 or more, 14 or more, 16 or more, 18 or more, 20 or more, or 22 or more, and is preferably 10 or more, 12 or more, 14 or more, or 16 or more. The number of carbon atoms in the hydrocarbon group may be 40 or less, 35 or less, 30 or less, 25 or less, 20 or less, 15 or less, or 10 or less, and is preferably 30 or less, 25 or less, or 20 or less.

The monomer (2) may contain an amide group, a urea group, or a urethane group. The hydrocarbon monomer may be a combination of a hydrocarbon monomer having an amide group, a urea group, or a urethane group, and a hydrocarbon monomer not having an amide group, a urea group, or a urethane group. When the monomer (2) contains such a group, the effects of the present disclosure can be effectively exhibited.

The hydrophobic monomer (2) is a monomer represented by the following formula:

CH₂=C(-R^{b})-C(=O)-R^{c}-(R^{d})ₖ (2)

wherein
R^{b} is a hydrogen atom, a monovalent organic group, or a halogen atom,
R^{c} is a divalent to tetravalent group composed of at least one selected from a direct bond, a divalent to tetravalent hydrocarbon group having one carbon atom,-C₆H₄-, -O-, -S-, -C(=O)-, -S(=O)₂-, and -NR^{C1}-, wherein R^{C1} is a hydrogen atom or a hydrocarbon group having 1 to 4 carbon atoms,
k is 1 to 3, and
R^{d} is a hydrocarbon group having 2 to 40 carbon atoms.

### [R^{b}]

R^{b} is a hydrogen atom, a monovalent organic group, or a halogen atom.

R^{b} may be a hydrogen atom, a methyl group, a halogen atom, a substituted or non-substituted benzyl group, or a substituted or non-substituted phenyl group. Examples of R^{b} include a hydrogen atom, a methyl group, a chlorine atom, a bromine atom, an iodine atom, and a cyano group. R^{b} is preferably a hydrogen atom, a methyl group, or a chlorine atom. R^{b} is more preferably a methyl group. When R^{b} is a methyl group, a higher liquid repellency can be obtained. R^{b} may be a hydrogen atom especially from the viewpoint of reactivity.

### [R^{c}]

R^{c} is a divalent to tetravalent group composed of at least one selected from a direct bond, a divalent to tetravalent hydrocarbon group having one carbon atom,-C₆H₄-, -O-, -S-, -C(=O)-, -S(=O)₂-, and -NR^{C1}-, wherein R^{C1} is a hydrogen atom or a hydrocarbon group having 1 to 4 carbon atoms, and
k is 1 to 3.

R^{c} is preferably a divalent group. Examples of the divalent to tetravalent hydrocarbon group having one carbon atom are -CH₂-, -CH= having a branched structure, and -C≡ having a branched structure.

R^{c} may be -R^{Y}-, -R^{Y}-R^{Y}-, -R^{Y}-C(=O)-, -C(=O)-R^{y}, -R^{Y}-C(=O)-R^{Y}-, -R^{Y}-R^{X}-, -R^{Y}-R^{Y}-R^{Y}-, -R^{Y}-R^{X}-R^{Y}-C(=O)-, -R^{Y}-R^{X}-C(=O)-R^{Y}-, -R^{Y}-R^{X}-R^{Y}-C(=O)-R^{Y}-, or -R^{Y}-R^{X}-R^{Y}-R^{X}- wherein R^{Y} is each independently a direct bond, -O-,-NR^{C11}- (wherein R^{C11} is a hydrogen atom or a hydrocarbon group having 1 to 4 carbon atoms), or -S(=O)₂-, and R^{X} is -(CH₂)ₘ- (wherein m is an integer of 1 to 5), a linear hydrocarbon group having an unsaturated bond having 1 to 5 carbon atoms, a hydrocarbon group having a branched structure having 1 to 5 carbon atoms, or - (CH₂)₁-C₆H₄-(CH₂)₁- (wherein l is each independently an integer of 0 to 5, and -C₆H₄- is a phenylene group). Preferably, R^{c} is not only a divalent hydrocarbon group.

Specific examples of R^{c} include -O-, -NH-, -O-C(=O)-, -NH-C(=O)-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH2)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-,-O-(CH₂)ₘ-O-C₆H₄-, -O-(CH₂)ₘ-NH-S(=O)₂-, -O-(CH₂)ₘ-S(=O)₂-NH⁻, -NH-(CH₂)ₘ-NH-S(=O)₂-, -NH-(CH₂)ₘ-S(=O)2-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH- (CH₂)ₘ-O-C₆H₄-, and -NH-(CH₂)ₘ-NH-C₆H₄-, wherein m is an integer of 1 to 5 and, in particular, 2 or 4.

R^{c} is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂- or -O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C(=O)-NH-, -NH-(CH₂)ₘ-NH-C(=O)-O-, or -NH-(CH₂)ₙ-NH-C(=O)-NH-,
wherein m is an integer of 1 to 5 and, in particular, 2 or 4.
R^{c} is more preferably -O-, -O-(CH₂)ₘ-O-C(=O)-NH-, -O-(CH₂)ₘ-NH-C(=O)-O- or -O-(CH₂)ₘ-NH-C(=O)-, -O-(CH₂)ₘ-NH-S(=O)₂- or -O-(CH₂)ₘ-S(=O)₂-NH-, and, in particular, -O-(CH₂)ₘ-NH-C(=O)-.

### [R^{d}]

R^{d} is a hydrocarbon group having 2 to 40 carbon atoms.

R^{d} is preferably a branched or linear (preferably long chain linear) hydrocarbon group. Preferably, the hydrocarbon group is an aliphatic hydrocarbon group, in particular, a saturated aliphatic hydrocarbon group, and especially an alkyl group. The -CH₃ group has a lower surface free energy than -CH₂- and more likely exhibits liquid repellency. For this reason, a structure having many branches and many -CH₃ groups is preferred. A long chain alkyl group having a certain length, on the other hand, exhibits high liquid repellency derived from its crystallinity. Accordingly, it may be a branched hydrocarbon group (for example, a branched alkyl group), in particular, a t-butyl group or isopropyl group, a group having a multi-branched structure, or a long chain hydrocarbon group (or a long linear hydrocarbon group) such as an alkyl group. The number of carbon atoms in R^{d} may be 2 or more, 3 or more, 4 or more, 6 or more, 8 or more, 10 or more, 11 or more, 12 or more, 14 or more, 16 or more, or 18 or more, and is preferably 10 or more. The number of carbon atoms in R^{d} may be 40 or less, 30 or less, 25 or less, 20 or less, 15 or less, or 12 or less.

### [k]

k is 1, 2 or 3. For example, when R^{c} has a tetravalent hydrocarbon group having one carbon atom, k = 3. For example, when R^{c} has a trivalent hydrocarbon group having one carbon atom, k = 2. When R^{c} does not have a trivalent or tetravalent hydrocarbon group having one carbon atom (for example, when R^{c} has (for example, one to six) divalent hydrocarbon group(s) having one carbon atom (-CH₂-), k = 1.

Examples of the monomer (2) are:
(a1) a monomer represented by the formula:

   CH₂=C(-X^{a1})-C(=O)-Y^{a1}-R^{a1}

   wherein R^{a1} is a hydrocarbon group having 6 to 40 carbon atoms,
   X^{a1} is a hydrogen atom, a monovalent organic group, or a halogen atom, and
   Y^{a1} is -O- or -NH-; and
(a2) a monomer represented by the formula:

   CH₂=C(-X^{a2})-C(=O)-Y^{a21}-Z(-Y^{a22}-R^{a2})ₙ

   wherein R^{a2} is each independently a hydrocarbon group having 6 to 40 carbon atoms,
   X^{a2} is a hydrogen atom, a monovalent organic group, or a halogen atom,
   Y^{a21} is -O- or -NH-,
   Y^{a22} is each independently a direct bond or a group composed of at least one selected from -O-, -C(=O)-,-S(=O)₂-, -NH-, and -CH₂-,
   Z is a direct bond or a divalent or trivalent hydrocarbon group having 1 to 5 carbon atoms, and
   n is 1 or 2.

### (a1) Monomer

The monomer (a1) is a compound represented by the formula:

CH₂=C(-X^{a1})-C(=O)-Y^{a1}-R^{a1}

wherein R^{a1} is a hydrocarbon group having 6 to 40 carbon atoms,
X^{a1} is a hydrogen atom, a monovalent organic group, or a halogen atom, and
Y^{a1} is -O- or -NH-.

The monomer (a1) is a long chain acrylate ester monomer in which Y^{a1} is -O-, or a long chain acrylamide monomer in which Y^{a1} is -NH-.
Preferably, R^{a1} is an aliphatic hydrocarbon group, in particular, a saturated aliphatic hydrocarbon group, and especially an alkyl group. In R^{a1}, the hydrocarbon group preferably has 12 to 30, for example, 16 to 26, and, in particular, 18 to 22 carbon atoms.
X^{a1} may be a hydrogen atom, a methyl group, a halogen excluding a fluorine atom, a substituted or non-substituted benzyl group, or a substituted or non-substituted phenyl group. X^{a1} is preferably a hydrogen atom, a methyl group, or a chlorine atom.

Preferred specific examples of the long chain acrylate ester monomer include lauryl (meth)acrylate, stearyl (meth)acrylate, icosyl (meth)acrylate, behenyl (meth)acrylate, stearyl α-chloroacrylate, icosyl α-chloroacrylate, and behenyl α-chloroacrylate.
Preferred specific examples of the long chain acrylamide monomer include stearyl (meth)acrylamide, icosyl (meth)acrylamide, and behenyl (meth)acrylamide.

### (a2) Monomer

The monomer (a2) is different from the monomer (a1). The monomer (a2) is (meth)acrylate or (meth)acrylamide having a group composed of at least one selected from -O-,-C(=O)-, -S(=O)₂-, -NH-, and -CH₂-.

The monomer (a2) may be a compound represented by the formula:

CH₂=C(-X^{a2})-C(=O)-Y^{a21}-Z(-Y^{a22}-R^{a2})ₙ

wherein R^{a2} is each independently a hydrocarbon group having 6 to 40 carbon atoms,
X^{a2} is a hydrogen atom, a monovalent organic group, or a halogen atom,
Y^{a21} is -O- or -NH-,
Y^{a22} is each independently a direct bond or a group composed of at least one selected from -O-, -C(=O)-,-S(=O)₂-, -NH-, and -CH₂-,
Z is a direct bond or a divalent or trivalent hydrocarbon group having 1 to 5 carbon atoms, and
n is 1 or 2.
Y^{a22} and/or Z does not need to be a direct bond. None of Y^{a22} and Z need to be simultaneously a direct bond.

Preferably, R^{a2} is an aliphatic hydrocarbon group, in particular, a saturated aliphatic hydrocarbon group, and especially an alkyl group. In R^{a2}, the hydrocarbon group preferably has 12 to 30, for example, 16 to 26 or 15 to 26, and, in particular 18 to 22 or 17 to 22 carbon atoms.

X^{a2} may be a hydrogen atom, a methyl group, a halogen excluding a fluorine atom, a substituted or non-substituted benzyl group, or a substituted or non-substituted phenyl group. X^{a2} is preferably a hydrogen atom, a methyl group, or a chlorine atom.

Y^{a22} may be -Y'-, -Y'-Y'-, -Y'-C(=O)-, -C(=O)-Y'-,-Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-wherein Y' is each independently a direct bond, -O-,-NH-, or -S(=O)₂-, and
R' is -(CH₂)ₘ- wherein m is an integer of 1 to 5, a linear hydrocarbon group having 1 to 5 carbon atoms and having an unsaturated bond, a hydrocarbon group having 1 to 5 carbon atoms and having a branched structure, or - (CH₂)₁-C₆H₄-(CH₂)₁- wherein l is each independently an integer of 0 to 5, and -C₆H₄- is a phenylene group.

Specific examples of Y^{a22} include a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-,-O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, and -NH-(CH₂)ₘ-NH-C₆H₄-,
wherein m is an integer of 1 to 5.

Y^{a22} is preferably -O-, -NH-, -O-C(=O)-, -C(=O)-O-,-C(=O)-NH-, -NH-C(=O)-, -NH-S(=O)₂-, -S(=O)₂-NH-, -O-C(=O)-NH-, -NH-C (=O) -O-, -NH-C(=O)-NH-, or -O-C₆H₄-. Y^{a22} is more preferably -NH-C(=O)-, -C(=O)-NH-, -O-C(=O)-NH-, -NH-C(=O)-O-, or -NH-C(=O)-NH-. Y^{a22} does not need to be a direct bond.

Z is a direct bond or a divalent or trivalent hydrocarbon group having 1 to 5 carbon atoms, and may have a linear structure or a branched structure. The number of carbon atoms in Z is preferably 2 to 4 and, in particular, 2. Specific examples of Z include a direct bond, -CH₂-, -CH₂CH₂-, -CH₂CH₂CH₂-, -CH₂CH₂CH₂CH₂-,-CH₂CH₂CH₂CH₂CH₂-, -CH₂CH= having a branched structure,-CH₂(CH-)CH₂- having a branched structure, -CH₂CH₂CH= having a branched structure, -CH₂CH₂CH₂CH₂CH= having a branched structure, -CH₂CH₂(CH-)CH₂- having a branched structure, and -CH₂CH₂CH₂CH= having a branched structure. Z does not need to be a direct bond.

The monomer (a2) is preferably CH₂=C(-X^{a2})-C(=O)-O-(CH₂)ₘ-NH-C(=O)-R^{a2}, CH₂=C(-X^{a2})-C(=O)-O-(CH₂)ₘ-O-C(=O)-NH-R^{a2}, CH₂=C(-X^{a2})-C(=O)-O-(CH₂)ₙ-NH-C(=O)-O-R^{a2}, or CH₂=C(-X^{a2})-C(=O)-O-(CH₂)ₙ-NH-C(=O)-NH-R^{a2}, wherein R^{a2} and X^{a2} are as defined above.

The monomer (a2) is particularly preferably CH₂=C(-X^{a2})-C(=O)-O-(CH₂)ₘ-NH-C(=O)-R^{a2}.

The monomer (a2) can be produced by reacting hydroxyalkyl (meth)acrylate or hydroxyalkyl (meth)acrylamide with a long chain alkyl isocyanate. Examples of the long chain alkyl isocyanate include lauryl isocyanate, myristyl isocyanate, cetyl isocyanate, stearyl isocyanate, oleyl isocyanate, and behenyl isocyanate.

The monomer (a2) can also be produced by reacting (meth)acrylate having an isocyanate group in the side chain, such as 2-methacryloyloxyethyl methacrylate, with a long chain alkylamine or a long chain alkyl alcohol. Examples of the long chain alkylamine include laurylamine, myristylamine, cetylamine, stearylamine, oleylamine, and behenylamine. Examples of the long chain alkyl alcohol include lauryl alcohol, myristyl alcohol, cetyl alcohol, stearyl alcohol, oleyl alcohol, and behenyl alcohol.

Preferred examples of the monomer (2) are as follows:
stearyl (meth)acrylate, behenyl (meth)acrylate, stearyl α-chloroacrylate, behenyl α-chloroacrylate, butyl (meth)acrylate, t-butyl (meth)acrylate, octyl (meth)acrylate, isooctyl (meth)acrylate, decyl (meth)acrylate, isodecyl (meth)acrylate, nonyl (meth)acrylate, isononyl (meth)acrylate, lauryl (meth)acrylate, icosyl (meth)acrylate, icosyl α-chloroacrylate, stearamidoethyl (meth)acrylate, 2-stearamidoethyl acrylate, CH₂=CHC(=O)OC₂H₄NHSO₂C₁₈H₃₇; stearyl (meth)acrylamide, behenyl (meth)acrylamide; 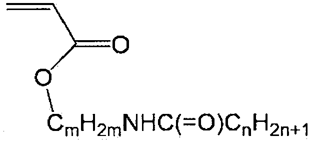 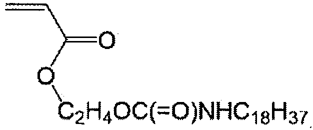 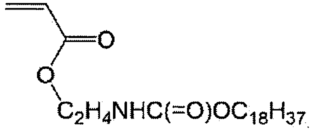 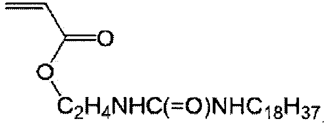 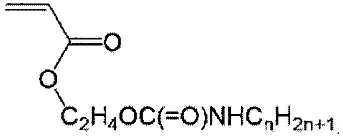 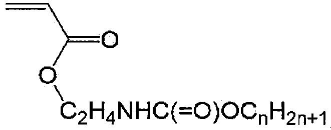 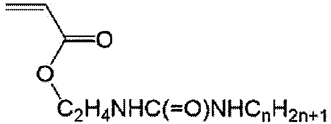 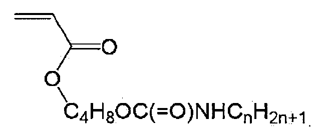 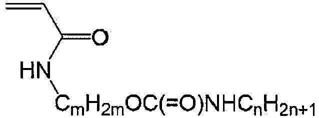 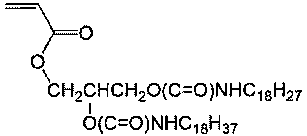 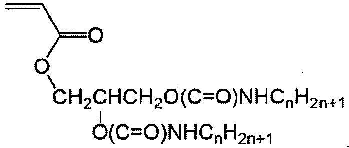 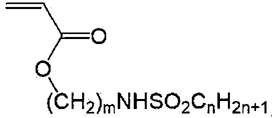 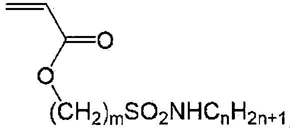 wherein n is a number of 6 to 40, and m is a number of 1 to 5.

The compounds of the above formulae are acrylic compounds having a hydrogen atom at a position, and specific examples may be a methacrylic compound having a methyl group at α position and an α-chloroacrylic compound having a chlorine atom at α position.

The amount of the monomer (a2) in the monomer (2) may be 10% by weight or more, 20% by weight or more, 30% by weight or more, 40% by weight or more, 50% by weight or more, 60% by weight or more, 70% by weight or more, or 80% by weight or more, and is preferably 30% by weight or more.

The polymer of the present disclosure may further contain a repeating unit derived from one or more monomers selected from the following monomers (3) to (8).

### (3) Hydrophilic group-containing monomer

The polymer of the present disclosure may contain a hydrophilic group-containing monomer (3). The monomer (3) is different from the monomer (1), and has a hydrophilic group. The hydrophilic group is preferably an oxyalkylene group (in which the alkylene group has 2 to 6 carbon atoms) and, in particular, an oxyethylene group. In particular, the monomer (3) is preferably oxyalkylene (meth)acrylate such as polyalkylene (or monoalkylene) glycol mono(meth)acrylate and/or polyalkylene (or monoalkylene) glycol di(meth)acrylate, and polyalkylene (or monoalkylene) glycol mono(meth)acrylamide.

The monomer (3) is preferably oxyalkylene (meth)acrylate represented by
the formula:

CH₂=CX^{b}C(=O)-Y^{b}-(R^{b}O)ₙ-A^{b}

wherein
X^{b} is a hydrogen atom or a methyl group,
Y^{b} is -O- or -NH-,
R^{b} is each independently an alkylene group having 2 to 6 carbon atoms,
A^{b} is a hydrogen atom, an unsaturated or saturated hydrocarbon group having 1 to 22 carbon atoms, or CH₂=CX^{b}C(=O)-, and
n is an integer of 1 to 90.

Examples of the monomer (3) are preferably those represented by the formula:

CH₂=CX^{b}C(=O)-O-(R^{b}O)ₙ-A^{bi} (b1),

CH₂=CX^{b}C(=O)-O-(R^{b}O)ₙ-C(=O)CX^{b}=CH₂ (b2),

or

CH₂=CX^{b}C(=O)-NH-(R^{b}O)ₙ-A^{bi} (b3),

wherein
X^{b} is each independently a hydrogen atom or a methyl group,
A^{bi} is each independently a hydrogen atom or an unsaturated or saturated hydrocarbon group having 1 to 22 carbon atoms,
R^{b} is each independently an alkylene group having 2 to 6 carbon atoms, and
n is an integer of 1 to 90.

n is, for example, 1 to 50, in particular, 1 to 30, and especially 1 to 15 or 2 to 15. Alternatively, n may be, for example, 1.

R^{b} may be a linear or branched alkylene group, and may be, for example, a group represented by the formula - (CH₂)ₓ- or -(CH₂)ₓ₁-(CH(CH₃))ₓ₂- wherein x1 and x2 are 0 to 6 such as 2 to 5, the sum of x1 and x2 is 1 to 6, and the order of -(CH₂)ₓ₁- and -(CH(CH₃))x₂- is not limited to the order in the formula described, and may be random.

In -(R^{b}O)ₙ-, there may be two or more types of R (e.g., two to four types, in particular, two types).-(R^{b}O)ₙ- may be, for example, a combination of -(R¹O)ₙ₁- and -(R²O)ₙ₂- wherein R¹ and R² are different from each other and are an alkylene group having 2 to 6 carbon atoms, n1 and n2 are a number of 1 or more, and the sum of n1 and n2 is 2 to 90.

In the formulae (b1), (b2), and (b3), R^{b} is preferably an ethylene group, a propylene group, or a butylene group, and is particularly preferably a butylene group. In the formulae (b1), (b2), and (b3), R^{b} may be a combination of two or more alkylene groups. In that case, at least one R^{b} is preferably an ethylene group, a propylene group, or a butylene group. Examples of combinations of R^{b} include a combination of an ethylene group / a propylene group, a combination of an ethylene group / a butylene group, and a combination of a propylene group / a butylene group. The monomer (3) may be a mixture of two or more. In that case, at least one monomer (3) is preferably a monomer in which R^{b} in the formula (b1), (b2), or (b3) is an ethylene group, a propylene group, or a butylene group. When polyalkylene glycol di(meth)acrylate represented by the formula (b2) is used, using only polyalkylene glycol di(meth)acrylate as the monomer (3) is not preferred, and using it together with the monomer (b1) is preferred. Even in that case, it is preferable to keep the proportion of the compound represented by the formula (b2) at less than 30% by weight in the monomer (3) used.

Specific examples of the monomer (3) include, but are not limited to, the following monomers:

CH₂=CHCOO-CH₂CH₂O-H

CH₂=CHCOO-CH₂CH₂CH₂O-H

CH₂=CHCOO-CH₂CH(CH₃)O-H

CH₂=CHCOO-CH(CH₃)CH₂O-H

CH₂=CHCOO-CH₂CH₂CH₂CH₂O-H

CH₂=CHCOO-CH₂CH₂CH(CH₃)O-H

CH₂=CHCOO-CH₂CH(CH₃)CH₂O-H

CH₂=CHCOO-CH(CH₃)CH₂CH₂O-H

CH₂=CHCOO-CH₂CH(CH₂CH₃)O-H

CH₂=CHCOO-CH₂C(CH₃)₂O-H

CH₂=CHCOO-CH(CH₂CH₃)CH₂O-H

CH₂=CHCOO-C(CH₃)₂CH₂O-H

CH₂=CHCOO-CH(CH₃)CH(CH₃)O-H

CH₂=CHCOO-C(CH₃)(CH₂CH₃)O-H

CH₂=CHCOO-(CH₂CH₂O)₂-H

CH₂=CHCOO-(CH₂CH₂O)₄-H

CH₂=CHCOO-(CH₂CH₂O)₅-H

CH₂=CHCOO-(CH₂CH₂O)₆-H

CH₂=CHCOO-(CH₂CH₂O)₃-CH₃

CH₂=CHCOO-(CH₂CH₂O)₉-CH₃

CH₂=CHCOO-(CH₂CH₂O)₂₃-CH₃

CH₂=CHCOO-(CH₂CH₂O)₉₀-CH₃

CH₂=CHCOO-(CH₂CH(CH₃)O)₉-H

CH₂=CHCOO-(CH₂CH(CH₃)O)₉-CH₃

CH₂=CHCOO-(CH₂CH(CH₃)O)₁₂-CH₃

CH₂=CHCOO-(CH₂CH₂O)₅-(CH₂CH(CH₃)O)₂-H

CH₂=CHCOO-(CH₂CH₂O)₅-(CH₂CH(CH₃)O)₃-CH₃

CH₂=CHCOO-(CH₂CH₂O)₈-(CH₂CH(CH₃)O)₆-CH₂CH(C₂H₅)C₄H₉

CH₂=CHCOO-(CH₂CH₂O)₂₃-OOC(CH₃)C=CH₂

CH₂=CHCOO-(CH₂CH₂O)₂₀-(CH₂CH(CH₃)O)₅-CH₂-CH=CH₂

CH₂=CHCOO-(CH₂CH₂O)₉-H

CH₂=C(CH₃)COO-CH₂CH₂O-H

CH₂=C(CH₃)COO-CH₂CH₂CH₂O-H

CH₂=C(CH₃)COO-CH₂CH(CH₃)O-H

CH₂=C(CH₃)COO-CH(CH₃)CH₂O-H

CH₂=C(CH₃)COO-CH₂CH₂CH₂CH₂O-H

CH₂=C(CH₃)COO-CH₂CH₂CH(CH₃)O-H

CH₂=C(CH₃)COO-CH₂CH(CH₃)CH₂O-H

CH₂=C(CH₃)COO-CH(CH₃)CH₂CH₂O-H

CH₂=C(CH₃)COO-CH₂CH-(CH₂CH₃)O-H

CH₂=C(CH₃)COO-CH₂C(CH₃)₂O-H

CH₂=C(CH₃)COO-CH(CH₂CH₃)CH₂O-H

CH₂=C (CH₃)COO-C(CH₃)₂CH₂O-H

CH₂=C(CH₃)COO-CH(CH₃)CH(CH₃)O-H

CH₂=C(CH₃)COO-C(CH₃)(CH₂CH₃)O-H

CH₂=C(CH₃)COO-(CH₂CH₂O)₂-H

CH₂=C(CH₃)COO-(CH₂CH₂O)₄-H

CH₂=C(CH₃)COO-(CH₂CH₂O)₅-H

CH₂=C(CH₃)COO-(CH₂CH₂O)₆-H

CH₂=C(CH₃)COO-(CH₂CH₂O)₉-H

CH₂=C(CH₃)COO-(CH₂CH₂O)₅-CH₃

CH₂=C(CH₃)COO-(CH₂CH₂O)₉-CH₃

CH₂=C(CH₃)COO-(CH₂CH₂O)₂₃-CH₃

CH₂=C(CH₃)COO-(CH₂CH₂O)₉₀-CH₃

CH₂=C(CH₃)COO-(CH₂CH(CH₃)O)₉-H

CH₂=C(CH₃)COO-(CH₂CH(CH₃)O)₉-CH₃

CH₂=C(CH₃)COO-(CH₂CH(CH₃)O)₁₂-CH₃

CH₂=C(CH₃)COO-(CH₂CH₂O)₅-(CH₂CH(CH₃)O)₂-H

CH₂=C(CH₃)COO-(CH₂CH₂O)₅-(CH₂CH(CH₃)O)₃-CH₃

CH₂=C(CH₃)COO-(CH₂CH₂O)₈-(CH₂CH(CH₃)O)₆-CH₂CH(C₂H₅)C₄H₉

CH₂=C(CH₃)COO-(CH₂CH₂O)₂₃-OOC(CH₃)C=CH₂

CH₂=C(CH₃)COO-(CH₂CH₂O)₂₀-(CH₂CH(CH₃)O)₅-CH₂-CH=CH₂

CH₂=CH-C(=O)-NH-CH₂CH₂O-H

CH₂=CH-C(=O)-NH-CH₂CH₂CH₂O-H

CH₂=CH-C(=O)-NH-CH₂CH(CH₃)O-H

CH₂=CH-C(=O)-NH-CH(CH₃)CH₂O-H

CH₂=CH-C(=O)-NH-CH₂CH₂CH₂CH₂O-H

CH₂=CH-C(=O)-NH-CH₂CH₂CH(CH₃)O-H

CH₂=CH-C(=O)-NH-CH₂CH(CH₃)CH₂O-H

CH₂=CH-C(=O)-NH-CH(CH₃)CH₂CH₂O-H

CH₂=CH-C(=O)-NH-CH₂CH(CH₂CH₃)O-H

CH₂=CH-C(=O)-NH-CH₂C(CH₃)₂O-H

CH₂=CH-C(=O)-NH-CH(CH₂CH₃)CH₂O-H

CH₂=CH-C(=O)-NH-C(CH₃)₂CH₂O-H

CH₂=CH-C(=O)-NH-CH(CH₃)CH(CH₃)O-H

CH₂=CH-C(=O)-NH-C(CH₃)(CH₂CH₃)O-H

CH₂=CH-C(=O)-NH-(CH₂CH₂O)₂-H

CH₂=CH-C(=O)-NH-(CH₂CH₂O)₄-H

CH₂=CH-C(=O)-NH-(CH₂CH₂O)₅-H

CH₂=CH-C (=O)**-**NH-(CH₂CH₂O)₆-H

CH₂=CH-C(=O)-NH-(CH₂CH₂O)₉-H

CH₂=CH-C(=O)-NH-(CH₂CH₂O)₅-CH₃

CH₂=CH-C(=O)-NH-(CH₂CH₂O)₉-CH₃

CH₂=CH-C(=O)-NH-(CH₂CH₂O)₂₃-CH₃

CH₂=CH-C(=O)**-**NH**-**(CH₂CH₂O)₉₀-CH₃

CH₂=CH-C(=O)-NH-(CH₂CH(CH₃)O)₉-H

CH₂=CH-C(=O)-NH-(CH₂CH(CH₃)O)₉-CH₃

CH₂=CH-C(=O)**-**NH**-**(CH₂CH(CH₃)O)₁₂-CH₃

CH₂=CH-C(=O)-NH-(CH₂CH₂O)₅-(CH₂CH(CH₃)O)₂-H

CH₂=CH-C(=O)**-**NH**-**(CH₂CH₂O)₅-(CH₂CH(CH₃)O)₃-CH₃

CH₂=CH-C(=O)**-**NH**-**(CH₂CH₂O)₈-(CH₂CH(CH₃)O)₆-CH₂CH(C₂H₅)C₄H₉

CH₂=C(CH₃)-C(=O)-NH-CH₂CH₂O-H

CH₂=C(CH₃)-C(=O)-NH-CH₂CH₂CH₂O-H

CH₂=C(CH₃)-C(=O)-NH-CH₂CH(CH₃)O-H

CH₂=C(CH₃)-C(=O)-NH-CH(CH₃)CH₂O-H

CH₂=C(CH₃)-C(=O)-NH-CH₂CH₂CH₂CH₂O-H

CH₂=C(CH₃)-C(=O)-NH-CH₂CH₂CH(CH₃)O-H

CH₂=C(CH₃)-C(=O)-NH-CH₂CH(CH₃)CH₂O-H

CH₂=C(CH₃)-C(=O)-NH-CH(CH₃)CH₂CH₂O-H

CH₂=C(CH₃)-C(=O)-NH-CH₂CH(CH₂CH₃)O-H

CH₂=C(CH₃)-C(=O)-NH-CH₂C(CH₃)₂O-H

CH₂=C(CH₃)-C(=O)-NH-CH(CH₂CH₃)CH₂O-H

CH₂=C(CH₃)-C(=O)-NH-C(CH₃)₂CH₂O-H

CH₂=C(CH₃)-C(=O)-NH-CH(CH₃)CH(CH₃)O-H

CH₂=C(CH₃)-C(=O)-NH-C(CH₃)(CH₂CH₃)O-H

CH₂=C(CH₃)-C(=O)-NH-(CH₂CH₂O)₂-H

CH₂=C(CH₃)-C(=O)-NH-(CH₂CH₂O)₄-H

CH₂=C(CH₃)-C(=O)-NH-(CH₂CH₂O)₅-H

CH₂=C(CH₃)-C(=O)-NH-(CH₂CH₂O)₆-H

CH₂=C(CH₃)-C(=O)-NH-(CH₂CH₂O)₉-H

CH₂=C(CH₃)-C(=O)-NH-(CH₂CH₂O)₅-CH₃

CH₂=C(CH₃)-C(=O)-NH-(CH₂CH₂O)₉-CH₃

CH₂=C(CH₃)-C(=O)-NH-(CH₂CH₂O)₂₃-CH₃

CH₂=C(CH₃)-C(=O)-NH-(CH₂CH₂O)₉₀-CH₃

CH₂=C(CH₃)-C(=O)-NH-(CH₂CH(CH₃)O)₉-H

CH₂=C(CH₃)-C(=O)-NH-(CH₂CH(CH₃)O)₉-CH₃

CH₂=C(CH₃)-C(=O)-NH-(CH₂CH(CH₃)O)₁₂-CH₃

CH₂=C(CH₃)-C(=O)-NH-(CH₂CH₂O)₅-(CH₂CH(CH₃)O)₂-H

CH₂=C(CH₃)-C(=O)-NH-(CH₂CH₂O)₅-(CH₂CH(CH₃)O)₃-CH₃

CH₂=C(CH₃)-C(=O)-NH-(CH₂CH₂O)₈-(CH₂CH(CH₃)O)₆-CH₂CH(C₂H₅)C₄H₉

The monomer (3) is preferably acrylate or acrylamide in which X² is a hydrogen atom. The monomer (3) is particularly preferably hydroxyethyl acrylate, hydroxypropyl acrylate, hydroxybutyl acrylate, or hydroxyethyl acrylamide.

### (4) Ion donating group-containing monomer

The polymer of the present disclosure may contain an ion donating group-containing monomer (4). The monomer (4) is preferably a monomer containing an olefinic carbon-carbon double bond and an ion donating group (in particular, an acrylic monomer). The ion donating group is an anion donating group and/or a cation donating group.

Examples of the monomer having an anion donating group include monomers having a carboxyl group, a sulfonic acid group, or a phosphoric acid group. Specific examples of the monomer having an anion donating group include (meth)acrylic acid, crotonic acid, maleic acid, fumaric acid, itaconic acid, citraconic acid, vinylsulfonic acid, (meth)allylsulfonic acid, styrene sulfonic acid, phosphoric acid (meth)acrylate, vinylbenzene sulfonic acid, acrylamide t-butyl sulfonic acid, and salts thereof.

Examples of salts of the anion donating group include alkaline metal salts, alkaline earth metal salts, and ammonium salts such as a methyl ammonium salt, an ethanol ammonium salt, and a triethanol ammonium salt.

In the monomer having a cation donating group, an example of the cation donating group is an amino group, and preferably a tertiary amino group or a quaternary amino group. In the tertiary amino group, two groups bonded to a nitrogen atom are the same or different, are preferably an aliphatic group having 1 to 5 carbon atoms (in particular, an alkyl group), an aromatic group having 6 to 20 carbon atoms (an aryl group), or an aromatic-aliphatic group having 7 to 25 carbon atoms (in particular, an aralkyl group, e.g., a benzyl group (C₆H₅-CH₂-)). In the quaternary amino group, three groups bonded to a nitrogen atom are the same or different, are preferably an aliphatic group having 1 to 5 carbon atoms (in particular, an alkyl group), an aromatic group having 6 to 20 carbon atoms (an aryl group), or an aromatic-aliphatic group having 7 to 25 carbon atoms (in particular, an aralkyl group, e.g., a benzyl group (C₆H₅-CH₂-)). In the tertiary amino group and the quaternary amino group, the last group bonded to the nitrogen atom may have a carbon-carbon double bond. The cation donating group may be in the form of a salt.

The cation donating group in the form of a salt is a salt formed with an acid (an organic acid or an inorganic acid). An organic acid such as a carboxylic acid having 1 to 20 carbon atoms (in particular, a monocarboxylic acid such as acetic acid, propionic acid, butyric acid, or stearic acid) is preferred. Dimethylaminoethyl (meth)acrylate, diethylaminoethyl (meth)acrylate, and a salt thereof are preferred.

Specific examples of the monomer having a cation donating group are as follows:
CH₂=CHCOO-CH₂CH₂-N(CH₃)₂ and a salt thereof (e.g., acetate)
CH₂=CHCOO-CH₂CH₂-N(CH₂CH₃)₂ and a salt thereof (e.g., acetate)
CH₂=C(CH₃)COO-CH₂CH₂-N(CH₃)₂ and a salt thereof (e.g., acetate)
CH₂=C(CH₃)COO-CH₂CH₂-N(CH₂CH₃)₂ and a salt thereof (e.g., acetate)
CH₂=CHC(O)N(H) -CH₂CH₂CH₂-N(-CH₃)₂ and a salt thereof (e.g., acetate)
CH₂=CHCOO-CH₂CH₂-N(-CH₃)(-CH₂-C₆H₅) and a salt thereof (e.g., acetate)
CH₂=C(CH₃)COO-CH₂CH₂-N(-CH₂CH₃)(-CH₂-C₆H₅) and a salt thereof (e.g., acetate)
CH₂=CHCOO-CH₂CH₂-N⁺ (CH₃)₃Cl⁻
CH₂=CHCOO-CH₂CH₂-N⁺ (-CH₃)₂ (-CH₂-C₆H₅) Cl⁻
CH₂=C(CH₃)COO-CH₂CH₂-N⁺ (CH₃)₃Cl⁻
CH₂=CHCOO-CH₂CH(OH) CH₂-N⁺(CH₃)₃Cl⁻
CH₂=C(CH₃)COO-CH₂CH(OH)CH₂-N⁺(CH₃)₃Cl⁻
CH₂=C(CH₃)COO-CH₂CH(OH)CH₂-N⁺(-CH₂CH₃)₂(-CH₂-C₆H₅)Cl⁻
CH₂=C(CH₃)COO-CH₂CH₂-N⁺ (CH₃)₃Br⁻
CH₂=C(CH₃)COO-CH₂CH₂-N⁺ (CH₃)₃I⁻
CH₂=C(CH₃)COO-CH₂CH₂-N⁺ (CH₃)₃O⁻SO₃CH₃
CH₂=C(CH₃)COO-CH₂CH₂-N⁺ (CH₃)(-CH₂-C₆H₅)₂Br⁻

The ion donating group-containing monomer (4) is preferably methacrylic acid, acrylic acid, or dimethylaminoethyl methacrylate, and more preferably methacrylic acid or dimethylaminoethyl methacrylate.

### (5) Halogenated olefin monomer

The polymer of the present disclosure may have a repeating unit derived from a halogenated olefin monomer (5). The halogenated olefin monomer (5) may not have a fluorine atom. The halogenated olefin monomer (5) is preferably an olefin having 2 to 20 carbon atoms and substituted with 1 to 10 chlorine atoms, bromine atoms, or iodine atoms. The halogenated olefin monomer (5) is preferably a chlorinated olefin having 2 to 20 carbon atoms, and particularly preferably an olefin having 2 to 5 carbon atoms and 1 to 5 chlorine atoms. Preferred specific examples of the halogenated olefin monomer (5) include halogenated vinyl such as vinyl chloride, vinyl bromide and vinyl iodide, and halogenated vinylidene such as vinylidene chloride, vinylidene bromide and vinylidene iodide. Vinyl chloride and vinylidene chloride are preferred because they increase water-repellency, in particular, durability of water-repellency. The presence of the repeating unit derived from the halogenated olefin monomer (5) improves wash durability provided by the polymer of the present disclosure.

### (6) Crosslinkable monomer

The polymer of the present disclosure may contain a crosslinkable monomer (6). The crosslinkable monomer has at least two reactive groups and/or ethylenically unsaturated double bonds (preferably (meth)acrylate groups), and the crosslinkable monomer (6) may be a monomer which does not include a fluorine atom. It may be a compound that does not contain a fluorine atom. The crosslinkable monomer (6) may be a compound having at least two ethylenically unsaturated double bonds (preferably (meth)acrylate groups), or a compound having at least one ethylenically unsaturated double bond and at least one reactive group. Examples of the reactive group include a hydroxyl group, an epoxy group, a chloromethyl group, a blocked isocyanate group, an amino group, and a carboxyl group.

The crosslinkable monomer may be mono(meth)acrylate, di(meth)acrylate, or di(meth)acrylamide having a reactive group.

One example of the crosslinkable monomer is a vinyl monomer having a reactive group.

Examples of the crosslinkable monomer include, but are not limited to, diacetone (meth)acrylamide, 3-chloro-2-hydroxypropyl(meth)acrylate, 2-acetoacetoxyethyl (meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate, and neopentylglycol di(meth)acrylate.

### (7) Cyclic hydrocarbon group-containing monomer

The polymer of the present disclosure may contain a repeating unit derived from a cyclic hydrocarbon group-containing monomer (7). The cyclic hydrocarbon group-containing monomer (7) has a cyclic hydrocarbon group, and may have an ethylenically unsaturated double bond and a cyclic hydrocarbon group.

The cyclic hydrocarbon group-containing monomer (7) preferably has a (meth)acrylic group as the ethylenically unsaturated double bond, and for example, may have a (meth)acrylate group or a (meth)acrylamide group as the ethylenically unsaturated double bond.

The cyclic hydrocarbon group may be alicyclic or aromatic and is preferably alicyclic. The cyclic hydrocarbon group may be saturated or unsaturated and is preferably saturated. The cyclic hydrocarbon group may be a monocyclic group, a polycyclic group, or a bridged-ring group, and is preferably a bridged-ring group. The cyclic hydrocarbon group may have a chain group (for example, a linear or branched chain hydrocarbon group).

The number of carbon atoms in the cyclic hydrocarbon group may be 4 or more, 6 or more, or 8 or more, and may be 30 or less, 26 or less, 22 or less, 18 or less, or 14 or less.

Specific examples of the cyclic hydrocarbon groups include a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue formed by eliminating one or more hydrogen atoms from these groups (e.g., a cyclohexylene group, an adamantylene group, a phenylene group and a naphthylene group), and a substituted group thereof.

Specific examples of the cyclic hydrocarbon group-containing monomers include cyclohexyl(meth)acrylate, t-butylcyclohexyl(meth)acrylate, benzyl (meth)acrylate, isobornyl (meth)acrylate, dicyclopentanyl(meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate, and a compound in which such acrylate is substituted with acrylamide. These may be used singly or in combination of two or more thereof.

### (8) Other monomers

Other monomers are not limited to those examples, and includes acrylonitrile, organosiloxane-containing (meth)acrylate, short chain alkyl (meth)acrylate, vinyl acetate, styrene, α-methylstyrene, p-methylstyrene, and vinyl alkyl ether. Other monomers (8) may be used singly or in combination of two or more thereof.

### <Composition of polymer>

The combination of the monomers (1) to (8) constituting the repeating units of the polymer is not limited as long as the monomer (1) is contained, and is for example, as follows (parentheses omitted).
(1)
(1) + (2)
(1) + (2) + (3)
(1) + (3)
(1) + (4)
(1) + (2) + (3) + (4)
(1) + (2) + (3) + (4) + (5)
(1) + (2) + (3) + (4) + (5) + (6)
(1) + (2) + (3) + (4) + (5) + (6) + (7)

Moreover, the other monomers (8) may be used together with the above combinations. When using the polymer in a textile product, the monomer (1) and the monomer (2) are preferably used in combination.

### [Amount of monomer (1)]

The amount of the repeating unit derived from the monomer (1) may be 0.1% by mass or more, 0.5% by mass or more, 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (1) may be 95% by weight or less, 85% by weight or less, 75% by weight or less, 65% by weight or less, 55% by weight or less, 50% by weight or less, 45% by weight or less, 35% by weight or less, 33% by weight or less, 30% by weight or less, 27% by weight or less, 25% by weight or less, 20% by weight or less, 17% by weight or less, 15% by weight or less, 10% by weight or less, or 5% by weight or less, based on the polymer.

The amount of the repeating unit derived from the monomer (1) may be 100% by weight based on the polymer. That is to say, the polymer of the present disclosure may be a polymer of the monomer (1).

### [Amount of hydrophobic monomer (2)]

The amount of the repeating unit derived from the monomer (2) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (2) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (2) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more, based on 100 parts by weight of the amount of the repeating unit derived from the monomer (1).

The amount of the repeating unit derived from the monomer (2) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

In one embodiment, the amount of the repeating unit derived from the monomer (2) may be smaller than the amount of the repeating unit derived from the monomer (1).

### [Amount of hydrophilic group-containing monomer (3)]

The amount of the repeating unit derived from the monomer (3) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (3) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (3) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1000 parts by weight or more, based on 100 parts by weight of the amount of the repeating unit derived from the monomer (1).

The amount of the repeating unit derived from the monomer (3) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

### [Amount of ion donating group-containing monomer (4)]

The amount of the repeating unit derived from the monomer (4) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (4) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (4) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more, based on 100 parts by weight of the amount of the repeating unit derived from the monomer (1).

The amount of the repeating unit derived from the monomer (4) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

### [Amount of halogenated olefin monomer (5)]

The amount of the repeating unit derived from the monomer (5) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (5) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (5) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more, based on 100 parts by weight of the amount of the repeating unit derived from the monomer (1).

The amount of the repeating unit derived from the monomer (5) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

### [Amount of crosslinkable monomer (6)]

The amount of the repeating unit derived from the monomer (6) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (6) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (6) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more, based on 100 parts by weight of the amount of the repeating unit derived from the monomer (1).

The amount of the repeating unit derived from the monomer (6) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

### [Amount of cyclic hydrocarbon group-containing monomer (7)]

The amount of the repeating unit derived from the monomer (7) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (7) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (7) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more, based on 100 parts by weight of the amount of the repeating unit derived from the monomer (1).

The amount of the repeating unit derived from the monomer (7) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

### [Amount of other monomers (8)]

The amount of the repeating unit derived from the monomer (8) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, based on the polymer.

The amount of the repeating unit derived from the monomer (8) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less, based on the polymer.

The amount of the repeating unit derived from the monomer (8) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, or 1,000 parts by weight or more, based on 100 parts by weight of the amount of the repeating unit derived from the monomer (1).

The amount of the repeating unit derived from the monomer (8) may be 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less, based on 100 parts by weight of the amount of the repeating unit derived from the monomer (1).

### <Method for producing polymer>

The polymer of the present disclosure can be produced by any known polymerization methods, and conditions of the polymerization reaction can be appropriately selected. Examples of such polymerization methods include solution polymerization, suspension polymerization, and emulsion polymerization.

Solution polymerization uses a method in which monomers is dissolved in an organic solvent in the presence of a polymerization initiator, and after nitrogen replacement, the mixture is heated and stirred at 30 to 120°C for 30 minutes to 48 hours, such as 3 to 24 hours. Examples of the polymerization initiators include azobisisobutyronitrile, benzoyl peroxide, di-t-butyl peroxide, lauryl peroxide, cumene hydroperoxide, t-butyl peroxypivalate, and diisopropyl peroxydicarbonate. 0.01 to 20 parts by weight, for example, 0.01 to 10 parts by weight of polymerization initiator is used based on 100 parts by weight of the monomer.

Organic solvents are inert to monomers and dissolves them, and examples include ester (e.g., ester having 2 to 30 carbon atoms, such as ethyl acetate and butyl acetate), ketone (e.g., ketone having 2 to 30 carbon atoms, such as methyl ethyl ketone and diisobutyl ketone), and alcohol (e.g., alcohol having 1 to 30 carbon atoms, such as isopropyl alcohol). Specific examples of the organic solvents include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichlorethylene, perchloroethylene, tetrachlorodifluoroethane, and trichlorotrifluoroethane. 10 to 2,000 parts by weight, for example, 50 to 1,000 parts by weight of organic solvent is used based on 100 parts by weight of the total amount of the monomers.

Emulsion polymerization uses a method in which monomer is emulsified in water in the presence of a polymerization initiator and an emulsifier, and after nitrogen replacement, the monomer is polymerized by stirring at 50 to 80°C for 30 minutes to 48 hours, such as 3 to 24 hours. As the polymerization initiator, a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, azobisisobutyronitrile, sodium peroxide, potassium persulfate, or ammonium persulfate, or an oil-soluble initiator such as azobisisobutyronitrile, benzoyl peroxide, di-t-butylperoxide, lauryl peroxide, cumene hydroperoxide, t-butyl peroxypivalate, or diisopropyl peroxydicarbonate are used. 0.01 to 10 parts by weight of polymerization initiator is used based on 100 parts by weight of the monomer.

In order to obtain an aqueous dispersion of polymer having excellent standing stability, it is desirable to micronize the monomer in water and then polymerize by using an emulsifying apparatus, such as a high-pressure homogenizer or an ultrasonic homogenizer which can apply intense crush energy. Moreover, the emulsifier can be any of various types of anionic, cationic, and nonionic emulsifiers, and is used in the range of 0.5 to 20 parts by weight, based on 100 parts by weight of the monomer. It is preferable to use an anionic and/or nonionic and/or cationic emulsifier. If the monomers are not completely dissolved, it is preferable to add to a compatibilizer which dissolves the monomers completely, such as a water-soluble organic solvent or a low molecular weight monomer. Addition of the compatibilizer improves emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, and ethanol, and 1 to 50 parts by weight, for example, 10 to 40 parts by weight of the organic solvent may be used based on 100 parts by weight of water. Examples of low molecular weight monomers include methyl methacrylate, glycidyl methacrylate, and 2,2,2-trifluoroethyl methacrylate, and 1 to 50 parts by weight, for example, 10 to 40 parts by weight of the low molecular weight may be used based on 100 parts by weight of the total amount of the monomers.

A chain transfer agent may be used in the polymerization. The molecular weight of the polymer can be changed according to the amount of the chain transfer agent used. Examples of the chain transfer agent include a mercaptan group-containing compound, in particular, alkyl mercaptan having, 1 to 30 carbon atoms, such as lauryl mercaptan, thioglycol, and thioglycerol, and an inorganic salt such as sodium hypophosphite and sodium hydrogen sulfide. 0.01 to 10 parts by weight, for example, 0.1 to 5 parts by weight of the chain transfer agent may be used based on 100 parts by weight of the total amount of the monomers.

The polymer is preferably produced by emulsion polymerization or solution polymerization. After the polymer is produced by polymerization, water (or an aqueous medium) is preferably added to disperse the polymer in water. Water (or an aqueous medium) may be added after the polymer is produced by polymerization. For example, after the polymer is produced by polymerizing the monomers in the presence of an organic solvent, water may be added to the polymer mixture, and the organic solvent may be distilled off to disperse the polymer in water. The organic solvent does not need to be distilled off. A surfactant may be added before or after polymerization, or does not need to be added. Even when no surfactant is added, a favorable aqueous dispersion is obtained.

### <Composition>

The composition of the present disclosure contains the polymer of the present disclosure. The composition of the present disclosure can be obtained by combining the polymer of the present disclosure with additional components (such as an emulsifier, a liquid medium, and wax). The composition of the present disclosure can be obtained by polymerizing the monomer (1), or the monomer (1) and the hydrophobic monomer (2), in the presence of additional components of the present disclosure (such as a surfactant, a liquid medium, and wax).

The composition can be an emulsion composition by containing the polymer of the present disclosure, an emulsifier, and water.

### [Surfactant]

The composition of the present disclosure may contain a surfactant as an additional component. In the composition, the surfactant may contain a nonionic surfactant. The surfactant may further contain one or more surfactants selected from a cationic surfactant, an anionic surfactant, and an amphoteric surfactant. A combination of a nonionic surfactant and a cationic surfactant is preferably used.

### (Nonionic surfactant)

Examples of the nonionic surfactant include ether, ester, ester ether, alkanolamide, polyhydric alcohol, and amine oxide.

The ether is, for example, a compound having an oxyalkylene group (preferably a polyoxyethylene group).

The ester is, for example, an ester of an alcohol and a fatty acid. The alcohol is, for example, an alcohol which is monohydric to hexahydric (particularly dihydric to pentahydric) and has 1 to 50 carbon atoms (particularly 10 to 30 carbon atoms) (for example, as aliphatic alcohols). Examples of the fatty acids are saturated or unsaturated fatty acids having 2 to 50 carbon atoms, particularly, 5 to 30 carbon atoms.

The ester ether is, for example, a compound in which an alkylene oxide (particularly ethylene oxide) is added to an ester of an alcohol and a fatty acid. The alcohol is, for example, an alcohol which is monohydric to hexahydric (particularly dihydric to pentahydric) and has 1 to 50 carbon atoms (particularly 3 to 30 carbon atoms) (for example, as aliphatic alcohols). Examples of the fatty acids are saturated or unsaturated fatty acids having 2 to 50 carbon atoms, particularly 5 to 30 carbon atoms.

The alkanolamide is formed of, for example, a fatty acid and an alkanolamine. The alkanolamide may be a monoalkanolamide or a dialkanolamide. Examples of the fatty acid are saturated or unsaturated fatty acids having 2 to 50 carbon atoms, particularly, 5 to 30 carbon atoms. The alkanolamine may be an alkanol having 1 to 3 amino groups, 1 to 5 hydroxyl groups, and 2 to 50, particularly, 5 to 30 carbon atoms.

The polyhydric alcohol may be, for example, a dihydric to pentahydric alcohol having 10 to 30 carbon atoms.

The amine oxide may be an oxide (for example, having 5 to 50 carbon atoms) of an amine (a secondary amine or preferably a tertiary amine).

The nonionic surfactant is preferably a nonionic surfactant having an oxyalkylene group (preferably a polyoxyethylene group). The alkylene group in the oxyalkylene group preferably has 2 to 10 carbon atoms. The number of oxyalkylene groups in the molecule of the nonionic surfactant is generally preferably 2 to 100.

The nonionic surfactant is selected from the group consisting of an ether, an ester, an ester ether, an alkanolamide, a polyhydric alcohol, or an amine oxide, and is preferably a nonionic surfactant having an oxyalkylene group.

The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random copolymer or block copolymer), an alkylene oxide adduct of acetylene glycol, or the like. Among them, the structures of the alkylene oxide addition moiety and the polyalkylene glycol moiety are each preferably polyoxyethylene (POE) or polyoxypropylene (POP) or a POE/POP copolymer (which may be a random copolymer or block copolymer).

Further, the nonionic surfactant preferably has a structure not containing an aromatic group due to environmental concerns (biodegradability, environmental hormones, and the like).

The nonionic surfactant may be a compound represented by the formula:

R¹O-(CH₂CH₂O)ₚ-(R²O)_{q}-R³

wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a number of 2 or more, and
q is 0 or a number of 1 or more.

R¹ preferably has 8 to 20 carbon atoms, particularly, 10 to 18 carbon atoms. Preferred specific examples of R¹ include a lauryl group, a tridecyl group, and an oleyl group.

R² is, for example, a propylene group and a butylene group.

In the nonionic surfactant, p may be a number of 3 or more (for example, 5 to 200). q may be a number of 2 or more (for example, 5 to 200). Namely, -(R²O)_{q}- may form a polyoxyalkylene chain.

The nonionic surfactant may be a polyoxyethylene alkylene alkyl ether containing a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain, and the oxypropylene chain is preferred among them.

Specific examples of the nonionic surfactant include a condensation product of ethylene oxide with hexylphenol, isooctatylphenol, hexadecanol, oleic acid, an alkane (C₁₂ to C₁₆) thiol, a sorbitan monofatty acid (C₇ to C₁₉) or an alkyl (C₁₂ to C₁₈) amine.

The proportion of the polyoxyethylene block can be 5 to 80% by weight, for example, 30 to 75% by weight, particularly 40 to 70% by weight, based on the molecular weight of the nonionic surfactant (copolymer).

The average molecular weight of the nonionic surfactant is generally 300 to 5,000, for example, 500 to 3,000.

The nonionic surfactant may be a mixture of a compound having an HLB (a hydrophilic-hydrophobic balance) of less than 15 (particularly 5 or less) and a compound having an HLB of 15 or more. An example of the compound having an HLB of less than 15 is a sorbitan fatty acid ester. An example of the compound having an HLB of 15 or more is a polyoxyethylene alkyl ether. The weight ratio of the compound having an HLB of less than 15 to the compound having an HLB of 15 or more may be 90:10 to 20:80, for example, 85:15 to 55:45.

The nonionic surfactant may be used singly or in admixture of two or more.

### (Cationic surfactant)

The cationic surfactant is preferably a compound not having an amide group.

The cationic surfactant may be an amine salt, a quaternary ammonium salt, or an oxyethylene-added ammonium salt. Specific examples of the cationic surfactants are not limited, and include amine salt-type surfactants, such as an alkylamine salt, an aminoalcohol fatty acid derivative, a polyamine fatty acid derivative, and imidazoline; and quaternary ammonium salt-type surfactants, such as an alkyltrimethylammonium salt, a dialkyldimethylammonium salt, an alkyldimethylbenzylammonium salt, a pyridinium salt, an alkylisoquinolinium salt, and benzethonium chloride.

Preferred examples of the cationic surfactant are compounds represented by the formula:

R²¹-N⁺(-R²²)(-R²³)(-R²⁴) X⁻

wherein R²¹, R²², R²³, and R²⁴ are hydrocarbon groups having 1 to 40 carbon atoms, and
X is an anionic group.

Specific examples of R²¹, R²², R²³, and -R²⁴ are alkyl groups (for example, a methyl group, a butyl group, a stearyl group, and a palmityl group). Specific examples of X are halogens (for example, chlorine) and acids (for example, hydrochloric acid and acetic acid).

The cationic surfactant is particularly preferably a monoalkyltrimethylammonium salt (with an alkyl having 4 to 40 carbon atoms).

The cationic surfactant is preferably an ammonium salt. The cationic surfactant may be, for example, an ammonium salt represented by the formula:

R¹ₚ-N⁺R²_{q}X⁻

wherein R¹ is a linear and/or branched (saturated and/or unsaturated) aliphatic group having 12 or more (for example, 12 to 50) carbon atoms,
R² is H, a C1 to 4 alkyl group, a benzyl group, or a polyoxyethylene group (the number of oxyethylene group is, for example, 1 (particularly 2, especially 3) to 50), (CH₃ and C₂H₅ are particularly preferable),
X is a halogen atom or a C₁ to C₄ fatty acid base,
p is 1 or 2, q is 2 or 3, and p+q=4.
R¹ may have 12 to 50, such as 12 to 30, carbon atoms.

Specific examples of the cationic surfactants include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

### (Anionic surfactant)

Examples of the anionic surfactant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an α-sulfone fatty acid salt, a N-acylamino acid surfactant, a phosphate mono- or diester surfactant, and a sulfosuccinic acid ester.

### [Amphoteric surfactant]

Examples of the amphoteric surfactant include alanine, imidazolinium betaine, amidobetaine, and acetic acid betaine, and specific examples include lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

The nonionic surfactant, the cationic surfactant, and the amphoteric surfactant may each be one or a combination of two or more surfactants.

### (Amount of surfactant)

The amount of the surfactant may be 0.1 parts by weight or more, 1 part by weight or more, 3 parts by weight or more, 5 parts by weight or more, 10 parts by weight or more, 15 parts by weight or more, or 20 parts by weight or more, based on 100 parts by weight of the polymer. The amount of the surfactant may be 50 parts by weight or less, 40 parts by weight or less, 30 parts by weight or less, 20 parts by weight or less, 10 parts by weight or less, or 5 parts by weight or less, based on 100 parts by weight of the polymer.

The surfactants exemplified herein can also be used as emulsifiers. That is to say, the nonionic surfactants, the cationic surfactants, the anionic surfactants, and the amphoteric surfactants exemplified herein can be used as nonionic emulsifiers, cationic emulsifiers, anionic emulsifiers, and amphoteric emulsifiers, respectively.

### [Liquid medium]

The composition of the present disclosure may contain a liquid medium as an additional component. The liquid medium may be water, an organic solvent, or a mixture of water and an organic solvent. The liquid medium is preferably a mixture of water and an organic solvent.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), and petroleum-based solvents (for example, alkanes having 5 to 10 carbon atoms, specifically, naphtha and kerosene). The organic solvent is preferably a water-soluble organic solvent. The water-soluble organic solvent may contain a compound having at least one hydroxy group (for example, an alcohol, a polyhydric alcohol such as a glycol-based solvent, or an ether form (for example, a monoether form) of polyhydric alcohol). These may be used singly or in combination of two or more thereof.

### (Amount of liquid medium)

The amount of the liquid medium may be 40% by weight or more, 50% by weight or more, 60% by weight or more, 70% by weight or more, 80% by weight or more, 90% by weight or more, 95% by weight or more, or 97% by weight or more, based on the composition. The amount of the liquid medium may be 99.9% by weight or less, 99% by weight or less, 95% by weight or less, 90% by weight or less, 80% by weight or less, 70% by weight or less, 60% by weight or less, or 50% by weight or less, based on the composition.

The amount of the organic solvent may be 0.5% by weight or more, 1% by weight or more, 2% by weight or more, 3% by weight or more, 5% by weight or more, 7.5% by weight or more, 10% by weight or more, 12.5% by weight or more, 15% by weight or more, or 20% by weight or more, based on the composition. The amount of the organic solvent may be 75% by weight or less, 50% by weight or less, 40% by weight or less, 30% by weight or less, 25% by weight or less, 20% by weight or less, 15% by weight or less, 10% by weight or less, or 5% by weight or less, based on the composition.

The amount of the organic solvent may be 1% by weight or more, 3% by weight or more, 5% by weight or more, 10% by weight or more, 20% by weight or more, 30% by weight or more, or 40% by weight or more, based on the liquid medium. The amount of the organic solvent may be 55% by weight or less, 45% by weight or less, 35% by weight or less, 25% by weight or less, 15% by weight or less, 12.5% by weight or less, 7.5% by weight or less, or 5.0% by weight or less, based on the liquid medium.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, based on 100 parts by weight of the polymer. The amount of the organic solvent may be 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less, based on 100 parts by weight of the polymer.

The amount of the organic solvent may be 0.5 parts by weight or more, 1 part by weight or more, 1.5 parts by weight or more, 3 parts by weight or more, 5 parts by weight or more, 10 parts by weight or more, 15 parts by weight or more, 20 parts by weight or more, 30 parts by weight or more, or 40 parts by weight or more, based on 100 parts by weight of water. The amount of the organic solvent may be 100 parts by weight or less, 75 parts by weight or less, 50 parts by weight or less, 25 parts by weight or less, 10 parts by weight or less, or 5 parts by weight or less, based on 100 parts by weight of water.

### [Silicone]

The composition in the present disclosure may contain silicone in addition to the monomer (1) and the hydrophobic monomer (2).

Silicone may be a polymer represented by the formula:

(R⁵³)₃Si-O-[-Si(R⁵¹)₂-O-]ₐ-[-Si(R⁵¹)₂-O-]_{b}-Si(R⁵³)₃ (S1)

wherein R⁵¹ each independently represents a hydrogen atom, an alkyl group having 1 to 40 carbon atoms, an aryl group having 6 to 40 carbon atoms, or an alkoxy group having 1 to 40 carbon atoms,
R⁵³ each independently represents a hydrogen atom, an alkyl group having 1 to 40 carbon atoms, an aryl group having 6 to 40 carbon atoms, an alkoxy group having 1 to 40 carbon atoms, or a saturated hydrocarbon group having 1 to 40 carbon atoms,
a represents an integer of 0 or more, b represents an integer of 1 or more, and (a+b) is 5 to 200.

In R⁵¹ and R⁵³, the alkyl group having 1 to 40 carbon atoms and the aryl group having 6 to 40 carbon atoms may be non-substituted or substituted.

Specific examples of R⁵¹ and R⁵³ include a methyl group, an ethyl group, a propyl group, a butyl group, a pentyl group, a hexyl group, a heptyl group, an octyl group, a nonyl group, a decyl group, a dodecyl group, a tetradecyl group, a hexadecyl group, an octadecyl group; a cyclopentyl group, a cyclohexyl group, a cycloheptyl group; and a phenyl group, a tolyl group, a naphthyl group, or a group obtained by substituting some or all hydrogen atoms bonded to these groups with a halogen atom, an amino group, a cyano group, or the like. R⁵¹ and R⁵³ are preferably a methyl group or an ethyl group.

In R⁵¹ and R⁵³, the alkoxy group having 1 to 40 carbon atoms may be linear or branched. Examples of the alkoxy group having 1 to 40 carbon atoms include a methoxy group, an ethoxy group, a propoxy group, and a butoxy group.

Silicone may have at least one long-chain hydrocarbon group. For example, in formula (S1), at least one R⁵¹, at least one R⁵³, or at least one of each of R⁵¹ and R⁵³ may be a long-chain hydrocarbon group, and at least one (e.g., one) R⁵¹ may be a long-chain hydrocarbon group. Here, the long-chain hydrocarbon group may be a saturated hydrocarbon group having 6 or more, 10 or more, 15 or more, or 20 or more carbon atoms, and preferably 10 or more or 23 or more carbon atoms. Here, the hydrocarbon group may be linear or branched, and is preferably an alkyl group. Specific examples of the hydrocarbon group include a hexyl group (6 carbon atoms), an octyl group (8 carbon atoms), a lauryl group (12 carbon atoms), a myristyl group (14 carbon atoms), a stearyl group (18 carbon atoms), a behenyl group (22 carbon atoms), a tricosyl group (23 carbon atoms), a lignoceryl group (a tetracosyl group, 24 carbon atoms), a cerotyl group (a hexacosyl group, 26 carbon atoms), a montyl group (an octacosyl group, 28 carbon atoms), a melissyl group (a triacontane group, 30 carbon atoms), and a dotriacontane group (32 carbon atoms).

In terms of ease of industrial production and availability, R⁵¹ and R⁵³ other than R⁵¹ and R⁵³ that are long-chain hydrocarbon groups are preferably hydrogen atoms or methyl groups, and more preferably methyl groups.

a is an integer of 0 or more. In terms of ease of industrial production and availability, a may be 40 or less, 30 or less, or 20 or less, and is preferably 30 or less.

The sum of a and b is 5 to 200. In terms of ease of industrial production, availability, and handleability, the sum of a and b is preferably 10 to 100, and more preferably 40 to 60. a may be 0 to 150, such as 1 to 100. The lower limit of b may be 1, 2, or 3, and the upper limit of b may be 150, 10, or 5.

When a or b is 2 or more, multiple R⁵¹ and R⁵² groups may each be the same or different.

Preferably, 50 mol% or more of all R⁵¹ and R⁵³ groups (for example, R⁵¹, R⁵², and R⁵³ groups when silicone is represented by the following formula (S2)) is a methyl group.

The occurrence order of the repeating units provided with a or b is not limited to that shown in the chemical formula, and is random. That is to say, silicone may be a random polymer or may be a block polymer.

For example, silicone may be a polymer represented by the formula:

(R⁵³)3Si-O-[-Si(R⁵¹)₂-O-]ₐ-[-Si(R⁵¹)(R⁵²)-O-]_{b}-Si(R⁵³)₃ (S2)
wherein R⁵¹ each independently represents a hydrogen atom, an alkyl group having 1 to 40 carbon atoms, an aryl group having 6 to 40 carbon atoms, an alkoxy group having 1 to 40 carbon atoms, or a long-chain hydrocarbon group, R⁵² each independently represents a long-chain hydrocarbon group,
R⁵³ each independently represents a hydrogen atom, an alkyl group having 1 to 40 carbon atoms, an aryl group having 6 to 40 carbon atoms, an alkoxy group having 1 to 40 carbon atoms, or a long-chain hydrocarbon group, and a represents an integer of 0 or more, b represents an integer of 1 or more, and (a+b) is 5 to 200.

In formula (S2), R⁵¹ and R⁵³ may have an alkyl group having 3 to 40 carbon atoms or an unsaturated hydrocarbon group having 6 to 40 carbon atoms (such as a hydrocarbon group having an aromatic ring), and preferably have none of these groups.

Examples of silicone are as follows: 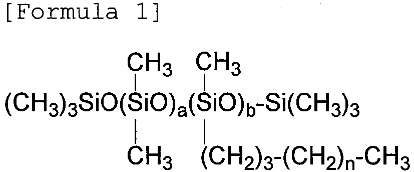
wherein a represents an integer of 0 to 150,
b represents an integer of 1 to 150,
(a+b) is 5 to 200, and
n is an integer of 1 to 36 (preferably, n is a long-chain hydrocarbon group).

Silicone can be synthesized by conventionally known methods. For example, silicone can be obtained by subjecting silicone having an SiH group to a hydrosilylation reaction with α-olefin.

Examples of the silicone having an SiH group include methyl hydrogen silicone having a degree of polymerization of 10 to 200, and a copolymer of dimethyl siloxane and methyl hydrogen siloxane. Among these, methyl hydrogen silicone is preferable in terms of ease of industrial production and availability. Hydrogen silicone (such as methyl hydrogen silicone) is a compound in which the side chain of polydiorganosiloxane is partially substituted with hydrogen, and a hydrogen atom is directly bonded to a silicon atom. When using hydrogen silicone, a catalyst may be used to increase reactivity. For example, zinc, tin, manganese, cobalt, iron, and amine-based catalysts can be used. These catalysts are preferably organic acid metal salts, and the organic acid is preferably a fatty acid. From the viewpoint of excellent handleability, zinc stearate and the like can be used. The catalyst is preferably used in an amount of 10 to 40% based on methyl hydrogen silicone because the effect is likely exhibited. A mixture of two or more types of amino-modified silicone, epoxy-modified silicone, carboxy-modified silicone, and methyl hydrogen silicone may be used. All are silicone having a reactive group, and preferably silicone having film formability. Film formability means that after silicone in an emulsion state adheres to the fiber surface, silicone forms a solid film rather than oil or gel.

α-Olefin is a compound from which the long-chain hydrocarbon group in silicone is derived. Specific examples of α-olefin include 1-tricosene, 1-tetracosene, 1-hexacosene, 1-octacosene, 1-triacontene, and 1-dotriacontene.

The hydrosilylation reaction may be carried out by reacting the above silicone having an SiH group with α-olefin in a stepwise manner or at once, optionally in the presence of a catalyst.

The amounts of silicone having an SiH group and α-olefin used in the hydrosilylation reaction can be appropriately selected according to, for example, the SiH group equivalent or the number average molecular weight of silicone having an SiH group.

Examples of the catalyst used in the hydrosilylation reaction include platinum and palladium compounds, and, in particular, a platinum compound is preferable. The platinum compound is, for example, platinum(IV) chloride or the like.

The reaction conditions of the hydrosilylation reaction are not limited, and can be appropriately regulated. The reaction temperature is, for example, 10 to 200°C and preferably 50 to 150°C. The reaction time may be, for example, 3 to 12 hours when the reaction temperature is 50 to 150°C.

The hydrosilylation reaction is preferably carried out in an inert gas atmosphere. Examples of inert gas include nitrogen and argon. While the reaction proceeds without a solvent, a solvent may be used. Examples of the solvent include dioxane, methyl isobutyl ketone, toluene, xylene, and butyl acetate.

### (Reactive silicone)

Silicone may contain reactive silicone. Examples of reactive silicone include polysiloxanes having a reactive group on a side chain, at one end, at both ends, or on a side chain and at both ends, and reactive silicone may be a polysiloxane having a reactive group on a side chain and/or at both ends is preferable in view of having excellent slippage resistance and excellent water-repellency at the same time. Reactive silicone is not limited as long as it has a reactive group in the molecule, and examples include amino-modified silicone, epoxy-modified silicone, carboxy-modified silicone, and hydrogen-modified silicone. Reactive silicone may be a compound obtained by replacing one or more substituents in the above formula (S1) or formula (S2) with reactive groups.

Examples of amino-modified silicone include those having a structure in which an amino group is bonded to an organic group directly bonded to a silicon atom. The organic group may be either an alkylene group or a divalent aromatic group. The alkylene group preferably has 2 or more carbon atoms. The divalent aromatic group preferably has 6 or more carbon atoms. The amino group may be any of a primary amino group, a secondary amino group, or a tertiary amino group. Examples of the organic group to which an amino group is bonded include: 2-aminoethyl group, N-methyl-2-aminoethyl group, N,N-dimethyl-2-aminoethyl group, N-ethyl-2-aminoethyl group, N,N-diethyl-2-aminoethyl group, N,N-methylethyl-2-aminoethyl group, 3-aminopropyl group, N-methyl-3-aminopropyl group, N,N-dimethyl-3-aminopropyl group, N-ethyl-3-aminopropyl group, N,N-diethyl-3-aminopropyl group, and N,N-methylethyl-3-aminopropyl group. These functional groups may be on a side chain or at the end of polysiloxane.

Examples of epoxy-modified silicone include those having a structure in which an epoxy group is bonded to an organic group directly bonded to a silicon atom. The organic group may be either an alkylene group or a divalent aromatic group. The epoxy group in this case is usually bonded to the organic group to form a glycidyl ether. Examples of such a functional group include a 3-glycidoxypropyl group and a 2-glycidoxyethyl group. These functional groups may be on a side chain or at the end of polysiloxane.

Examples of carboxy-modified silicone include those having a structure in which a carboxy group is bonded to an organic group directly bonded to a silicon atom. The organic group may be either an alkylene group or a divalent aromatic group. The alkylene group preferably has 2 or more carbon atoms. The divalent aromatic group preferably has 6 or more carbon atoms. Examples of such a functional group include a 3-carboxypropyl group and a 2-carboxyethyl group. These functional groups may be on a side chain or at the end of polysiloxane.

### (Silicone resin)

Silicone may contain a silicone resin. The silicone resin is a silicone resin composed of at least one selected from R₃SiO_{1/2} unit (M unit), RSiO_{3/2} unit (T unit), and SiO_{4/2} unit (Q unit), wherein R is a linear or branched monovalent alkyl group having 1 to 18 carbon atoms, provided that silicone resins composed solely of M unit and those composed solely of Q unit are excluded. A silicone resin (3) is preferably a resin that is free of R₂SiO_{2/2} unit (D unit) in view of exhibiting the effect of the present invention.

The silicone resin is preferably in a sol state. Examples of R include a methyl group, an ethyl group, a propyl group, an isopropyl group, a butyl group, an isobutyl group, a hexyl group, an octyl group, a 2-ethylhexyl group, a decyl group, a cetyl group, and a stearyl group. In view of stability in the case where the silicone resin (3) is in a sol state as well as raw material availability and cost, R is preferably a methyl group, and, in particular, 90% or more of all R groups is preferably a methyl group. Different types of R groups may be used in combination.

R₂SiO_{2/2} unit (D unit) contained in the silicone resin may impair low slippage properties of the composition. Moreover, the silicone resin composed solely of Q unit may inhibit the water-repellent performance of the composition.

Examples of the structure of the silicone resin include silicone resins composed of (i) M unit and Q unit, (ii) M unit, T unit, and Q unit, (iii) M unit and T unit, (iv) T unit and Q unit, and (v) only T unit, and the structure may preferably be a silicone resin composed of (i) M unit and Q unit or a silicone resin composed solely of (v) T unit. The molar ratio of M unit to Q unit (M/Q) in a silicone resin composed of (i) M unit and Q unit is preferably M/Q = 0.6 to 1.3, and more preferably M/Q = 0.8 to 1.1. Two or more types of these silicone resins may be used in combination.

The silicone resin (3) can also contain a constituent unit containing a hydroxyl group bonded to a silicon atom. Specific examples include (HO)RSiO_{2/2} unit, (HO)₂RSiO_{1/2} unit, (HO)SiO_{3/2} unit, (HO)₂SiO_{2/2} unit, and (HO)₃SiO_{1/2} unit, wherein the hydroxyl group may be partially replaced with an alkoxy group represented by an RO group.

A sol containing the silicone resin can be obtained by a production method in which organodisiloxane and tetraalkoxysilane and their partial hydrolytic condensates are homogeneously dispersed and polymerized in water containing a surfactant, as described in JP 3852921 B, or by a production method in which a silane compound is hydrolyzed in water which will be described below.

The production method in which a silane compound is hydrolyzed in water will now be described in detail. Any silane compound can be used as a raw material for the production as long as it has a chloro- or alkoxy-type hydrolyzable group, contains one, three, or four hydrolyzable groups, and has an alkyl group that satisfies the aforementioned conditions. Specific examples of usable silane compounds include, but not limited to, tetrachlorosilane, tetramethoxysilane, tetraethoxysilane, tetrabutoxysilane, methyltrichlorosilane, methyltrimethoxysilane, methyltriethoxysilane, methyltriisopropoxysilane, methyltributoxysilane, ethyltrichlorosilane, ethyltrimethoxysilane, ethyltriethoxysilane, propyltrichlorosilane, propyltrimethoxysilane, propyltriethoxysilane, iosopropyltrichlorosilane, isopropyltrimethoxysilane, isopropyltriethoxysilane, butyltrichlorosilane, butyltrimethoxysilane, butyltriethoxysilane, isobutyltrichlorosilane, isobutyltrimethoxysilane, isobutyltriethoxysilane, hexyltrichlorosilane, hexyltrimethoxysilane, hexyltriethoxysilane, 2-ethylhexyltrichlorosilane, 2-ethylhexyltrimethoxysilane, 2-ethylhexyltriethoxysilane, decyltrichlorosilane, decyltrimethoxysilane, decyltriethoxysilane, cetyltrichlorosilane, cetyltrimethoxysilane, cetyltriethoxysilane, stearyltrichlorosilane, stearyltrimethoxysilane, stearyltriethoxysilane, trimethylchlorosilane, trimethylmethoxysilane, trimethylethoxysilane, trimethylisopropoxysilane, dimethylethylchlorosilane, dimethylethylmethoxysilane, dimethylethylethoxysilane, dimethylpropylchlorosilane, dimethylpropylmethoxysilane, dimethylpropylethoxysilane, dimethylisopropylchlorosilane, dimethylisopropylmethoxysilane, dimethylisopropylethoxysilane, dimethylhexylchlorosilane, dimethylhexylmethoxysilane, dimethylhexylethoxysilane, dimethyldecylchlorosilane, dimethyldecylmethoxysilane, dimethyldecylethoxysilane, dimethylcetylchlorosilane, dimethylcetylmethoxysilane, dimethylcetylethoxysilane, dimethylstearylchlorosilane, dimethylstearylmethoxysilane, dimethylstearylethoxysilane, and partial hydrolysates thereof. In terms of handleability, removability of byproducts by distillation, and raw material availability, methoxysilane or ethoxysilane is more preferably used. One of these silane compounds, or a mixture of two or more, may be used.

The method for hydrolyzing a silane compound in water may be a commonly used method. Specifically, it is a method in which a hydrolysis reaction is carried out while a silane compound is added dropwise to water, or a method in which water and a silane compound are mixed in one batch followed by carrying out a hydrolysis reaction.

When carrying out the hydrolysis reaction, a hydrolysis catalyst may be used. The hydrolysis catalyst may be a conventionally known catalyst, and an acidic or alkaline catalyst is appropriately used. For acidic catalysts, hydrogen halide, carboxylic acid, sulfonic acid, acidic or slightly acidic inorganic salts, and solid acids such as ion exchange resins are preferable. For alkaline catalysts, sodium hydroxide, potassium hydroxide, alkali metal salts such as sodium carbonate, potassium carbonate, and sodium hydrogen carbonate, alkali metal silanolates such as sodium silanolate and potassium silanolate, amines such as triethylamine, diethylamine and aniline, ammonia water, and the like can be used. The amount of the catalyst added is preferably adjusted so that the pH of an aqueous solution is 2 to 7 or 7 to 12. After the reaction is completed, a neutralizing agent may be added to neutralize the acidic or alkaline catalyst, as necessary.

A surfactant may be added to the aqueous solution in order to disperse the silane compound and a hydrolysis reaction product in water. The surfactant is not limited. For example, anionic surfactants such as an alkyl sulfate, alkyl benzene sulfonate, and alkyl phosphate, nonionic surfactants such as polyoxyethylene alkyl ether, polyoxyethylene oxypropylene alkyl ether, polyoxyethylene alkyl phenyl ether, and polyoxyethylene fatty acid ester, cationic surfactants such as a quaternary ammonium salt and alkylamine acetate, and amphoteric surfactants such as an alkyl betaine and alkyl imidazoline can be used. One of these may be used singly, or two or more may be used in combination. A surfactant that exhibits acidity or alkalinity can be used also as a hydrolysis catalyst. The amount of the surfactant added is not limited, and is preferably 1 to 50 parts by weight per 100 parts by weight of the silane compound. When the amount is less than 1 part by weight, the effect of adding the surfactant is not effectively exhibited, and when the amount is more than 50 parts by weight, the water-repellency of the water-repellent agent is likely impaired.

A hydrolysis catalyst and a surfactant may be added to a mixture of water and the silane compound as necessary, and the hydrolysis reaction may be carried out at 0 to 90°C for 10 minutes to 24 hours. Thereafter, a neutralization reaction can be carried out as necessary, and a silicone resin can be thus obtained. By-products produced in the hydrolysis reaction, such as alcohols and neutralizing salts, can be removed by distillation under reduced pressure or filtration. Various additives can be added to this silicone resin. For example, an antiseptic agent and a thickener can be added according to the purpose.

### (Amount of silicone)

The amount of silicone may be 0.1 parts by weight or more, 1 part by weight or more, 3 parts by weight or more, 5 parts by weight or more, 10 parts by weight or more, 15 parts by weight or more, or 20 parts by weight or more, based on 100 parts by weight of the polymer. The amount of silicone may be 50 parts by weight or less, 40 parts by weight or less, 30 parts by weight or less, 20 parts by weight or less, 10 parts by weight or less, or 5 parts by weight or less, based on 100 parts by weight of the polymer.

### [Wax]

The composition in the present disclosure preferably contains wax in addition to the monomer (1) and the hydrophobic monomer (2). By containing wax, the composition can have good water-repellency. The composition in the present disclosure may contain both silicone and wax, or may contain either silicone or wax.

Examples of the wax include paraffin wax, microcrystalline wax, Fischer-Tropsch wax, polyolefin wax (for example, polyethylene wax and polypropylene wax), oxidized polyolefin wax, animal and vegetable wax, and mineral wax. Paraffin wax is preferable. Specific examples of compounds constituting the wax include normal alkanes (for example, tricosane, tetracosane, pentacosane, hexacosane, heptacosane, octacosane, nonacosane, triacontane, hentriacontane, dotriacontane, tritriacontane, tetratriacontane, pentatriacontane, and hexatriacontane), and normal alkenes (for example, 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, and hexatriacontane). The number of carbon atoms in the compounds constituting the wax is preferably 20 to 60, for example, 25 to 45. The molecular weight of the wax may be 200 to 2,000, for example, 250 to 1,500 or 300 to 1,000. These may be used singly or in combination of two or more thereof.

The melting point of the wax may be 50°C or more, 55°C or more, 60°C or more, 65°C or more, or 70°C or more, is preferably 55°C or more, and is more preferably 60°C or more. The melting point of the wax is measured in accordance with JIS K 2235-1991.

### (Amount of wax)

The amount of wax may be 0.1 parts by weight or more, 1 part by weight or more, 3 parts by weight or more, 5 parts by weight or more, 10 parts by weight or more, 15 parts by weight or more, or 20 parts by weight or more, based on 100 parts by weight of the polymer. The amount of wax may be 50 parts by weight or less, 40 parts by weight or less, 30 parts by weight or less, 20 parts by weight or less, 10 parts by weight or less, or 5 parts by weight or less, based on 100 parts by weight of the polymer.

### [Organic acid]

The composition of the present disclosure may contain an organic acid as an additional component. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

### (Amount of organic acid)

The amount of organic acid may be 0.1 parts by weight or more, 1 part by weight or more, 3 parts by weight or more, 5 parts by weight or more, 10 parts by weight or more, 15 parts by weight or more, or 20 parts by weight or more, based on 100 parts by weight of the polymer. The amount of organic acid may be 50 parts by weight or less, 40 parts by weight or less, 30 parts by weight or less, 20 parts by weight or less, 10 parts by weight or less, or 5 parts by weight or less, based on 100 parts by weight of the polymer. The amount of organic acid may be regulated such that the pH of the composition is 3 to 10, for example, 5 to 9, and, in particular, 6 to 8. For example, the composition may be acidic (pH of 7 or less, such as 6 or less).

### [Curing agent]

The composition may contain a curing agent (active hydrogen-reactive compound or active hydrogen-containing compound). The curing agent may be added to the composition after the polymer is obtained by polymerization.

The curing agent (a cross-linking agent) in the composition can effectively cure the polymer. The curing agent may be an active hydrogen-reactive compound or an active hydrogen-containing compound, which reacts with an active hydrogen or an active hydrogen-reactive group contained in the polymer. Examples of the active hydrogen-reactive compound include a polyisocyanate compound, an epoxy compound, a chloromethyl group-containing compound, a carboxyl group-containing compound, and a hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an aromatic-aliphatic polyisocyanate, an aromatic polyisocyanate, and derivatives of these polyisocyanates.

Examples of the aliphatic polyisocyanate are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,03-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane. These may be used singly or in combination of two or more thereof.

Examples of the alicyclic polyisocyanate include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and an aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for examples, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same aqueous solution as the composition.

The blocking agent is an agent that blocks free isocyanate groups. The blocked polyisocyanate compound, for example, can be heated to 100°C or more, for example, 130°C or more to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include (poly)acrylic acid and (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

### (Amount of curing agent)

The amount of the curing agent may be 0.1 parts by weight or more, 1 part by weight or more, 3 parts by weight or more, 5 parts by weight or more, 10 parts by weight or more, 15 parts by weight or more, or 20 parts by weight or more, based on 100 parts by weight of the polymer. The amount of the curing agent may be 50 parts by weight or less, 40 parts by weight or less, based on 100 parts by weight of the polymer.

### [Hydrophilic particles]

The composition of the present disclosure may contain hydrophilic particles as an additional component. Here, hydrophilicity refers to the property of particles that causes the particles to easily disperse in a water solvent without aggregating. For example, 1.0% by weight of a particle powder and a suitable dispersant are added to a water solvent, the mixture is stirred using a homomixer at 700 rpm for 10 minutes and then left to stand for 1 hour, and if no precipitation or aggregation of particles is visually confirmed, the particle powder is regarded as having hydrophilicity. Also, as for a commercially available water dispersion of particles wherein the particles are dispersed in a water solvent, the contained particles are regarded as having hydrophilicity.

The hydrophilic particles may have a hydrophilic group on the surface. Examples of the hydrophilic group include a cationic group, an anionic group, an amino group, and a hydroxyl group. The surface of the hydrophilic particles may be hydrophilically treated, and is generally not hydrophobically treated.

The hydrophilic particles are not limited as long as they are hydrophilic, and examples include inorganic particles of alumina, silica, titania, and the like (such as particles of inorganic oxides), and organic particles of latex, acrylic, nylon, and the like. Among these, inorganic particles are, for example, easy to handle and are thus preferable, and at least one selected from the group consisting of silica and alumina is particularly preferable. Examples of commercially available products thereof include silicon oxide particles such as "Snowtex ST-OYL", "Snowtex ST-AK-L", and "Snowtex ST-AK-YL" (all manufactured by Nissan Chemical Corporation), titanium oxide particles such as "TA300" and "TA300D" (both manufactured by Fuji Titanium Industry Co., Ltd.), and aluminum oxide particles such as "TM-5D" (manufactured by TAIMEI CHEMICALS CO., LTD.). These may be used singly or in combination of two or more thereof.

### (Average primary particle size)

The average primary particle size of the hydrophilic particles may be 5 nm or more, 10 nm or more, 15 nm or more, 20 nm or more, 25 nm or more, or 30 nm or more. The average primary particle size of the hydrophilic particles may be 600 nm or less, 400 nm or less, 200 nm or less, 100 nm or less, 40 nm or less, 37.5 nm or less, 35 nm or less, 32.5 nm or less, 30 nm or less, 27.5 nm or less, 25 nm or less, or 22.5 nm or less, and is preferably 40 nm or less. Due to the average primary particle size being within the above range, good water-repellency can be provided. The average primary particle size can be measured with a microscope (a scanning electron microscope or a transmission electron microscope). Specifically, a random position of a fabric is observed from above using a microscope at a suitable magnification. Next, when the particles have a spherical shape, the diameter thereof is regarded as the particle size (the particle diameter), and when the particles have a non-spherical shape, the average value of the longest diameter and the shortest diameter is regarded as the particle size (the particle diameter). By repeating measuring the particle size of all particles present in a field of view and moving to a different field of view and measuring the particle size again, 10 or more particle sizes are measured, and the average value thereof is regarded as the average particle size.

### (Turbidity)

The turbidity of a water dispersion prepared by dispersing the hydrophilic particles in water so as to have a concentration of 10 g/l and a pH of 7 may be 0.1 ppm or more, 1 ppm or more, 5 ppm or more, or 10 ppm or more. The turbidity of a water dispersion prepared by dispersing the hydrophilic particles in water so as to have a concentration of 10 g/l and a pH of 7 may be 200 ppm or less, 100 ppm or less, 50 ppm or less, 20 ppm or less, 10 ppm or less, 5 ppm or less, or 2.5 ppm or less, and is preferably 20 ppm or less. Due to the turbidity being within the above range, good water-repellency, slip resistance, and storage stability can be provided. Turbidity can be calculated based on a calibration curve (within a range of 0 to 1,000 ppm) created in view of the turbidity of kaolin (pigment) as a standard sample in accordance with JIS K 0101, Testing Methods for Drinking Water, using an integrating-sphere turbidity analyzer PT200 manufactured by Nittoseiko Analytech Co., Ltd.

### (Zeta potential)

The zeta potential of a water dispersion prepared by dispersing the hydrophilic particles in water so as to have a concentration of 10 g/l and a pH of 7 may be -20 mV or more, -10 mV or more, 0 mV or more, +5 mV or more, +10 mV or more, or +20 mV or more, and is preferably 0 mV or more or +10 mV or more. The zeta potential of a water dispersion prepared by dispersing the hydrophilic particles in water so as to have a concentration of 10 g/l and a pH of 7 may be +200 mV or less, +150 mV or less, +100 mV or less, +50 mV or less, +30 mV or less, +20 mV or less, +10 mV or less, or +5 mV or less, and is preferably +100 mV or less. Due to the zeta potential being within the above range, good water-repellency, slip resistance, and storage stability can be provided. Zeta potential can be measured using, for example, a commercially available zeta potential analyzer.

### (Amount of hydrophilic particles)

The amount of the hydrophilic particles may be 0.01% by weight or more, 0.1% by weight or more, 0.3% by weight or more, 0.5% by weight or more, 1% by weight or more, 2% by weight or more, 3% by weight or more, or 5% by weight or more, is preferably 0.5% by weight or more, and is particularly preferably 2% by weight or more, based on the total amount of the polymer and the hydrophilic particles. The amount of the hydrophilic particles may be 60% by weight or less, 50% by weight or less, 40% by weight or less, 30% by weight or less, 20% by weight or less, 10% by weight or less, 5% by weight or less, 3% by weight or less, or 2% by weight or less, and is preferably 12% by weight or less, based on the total amount of the polymer and the hydrophilic particles. Due to the amount of the hydrophilic particles being within the above range, good water-repellency can be provided.

The above silicone, wax, hydrophilic particles, liquid medium, dispersant, surfactant, or curing agent may be added after the polymer is produced, or the polymer may be produced by polymerizing the monomers for the polymer in the presence of the above silicone, wax, hydrophilic particles, liquid medium, dispersant, surfactant, or curing agent.

### [Other components]

The composition may contain a component other than the aforementioned components. Other components may be added after the polymer is produced. Examples of other components include water- and/or oil- repellent agents, anti-slip agents, antistatic agents, antiseptic agents, ultraviolet absorbers, antibacterial agents, deodorants, and perfumes. These may be used singly or in combination of two or more thereof. In addition to the above components, examples of other components include texture modifiers, softening agents, antibacterial agents, flame retardants, coating material fixing agents, wrinkle-resistant agents, drying rate adjusters, crosslinking agents, film formation agents, compatibilizing agents, antifreezing agents, viscosity modifiers, ultraviolet absorbers, antioxidants, pH adjusters, insect repellents, antifoaming agents, anti-shrinkage agents, laundry wrinkle-resistant agents, shape retention agents, drape retention agents, ironing improving agents, whitening agents, bleaching agents, fabric softening clays, anti-dye transfer agents such as polyvinylpyrrolidone, polymer dispersants, soil release agents, scum dispersants, fluorescent brightening agents such as 4,4-bis(2-sulfostyryl)biphenyl disodium (Tinopearl CBS-X manufactured by Ciba Specialty Chemicals Corporation), dye fixing agents, anti-color fading agents such as 1,4-bis(3-aminopropyl)piperazine, stain removing agents, enzymes such as cellulase, amylase, protease, lipase, and keratinase as fiber surface modifiers, foam inhibitors, silk protein powder that can impart silky texture and functions such as moisture absorption and desorption properties, surface modifiers thereof, emulsified dispersions, and specifically K-50, K-30, K-10, A-705, S-702, L-710, FP series (Idemitsu Petrochemical Co., Ltd.), hydrolyzed silk liquid (Jomo), Silk Gen G Solble S (ICHIMARU PHARCOS Co., Ltd.), a nonionic polymer compound composed of alkylene terephthalate and/or alkylene isophthalate units and polyoxyalkylene units, for example, antifouling agent such as FR627 manufactured by GOO CHEMICAL CO., LTD. and SRC-1 manufactured by Clariant Japan K. K, can be compounded. These may be used singly or in combination of two or more thereof.

### (Antistatic agent)

Examples of the antistatic agent include, for example, cationic antistatic agents having cationic functional groups such as a quaternary ammonium salt, a pyridinium salt, and primary, secondary, and tertiary amino groups; anionic antistatic agents having anionic functional groups such as a sulfonate salt and a sulfate ester salt, a phosphonate and a phosphate ester salt; amphoteric antistatic agents such as an alkyl betaine and a derivative thereof, imidazoline and a derivative thereof, and alanine and a derivative thereof; and nonionic antistatic agents such an amino alcohol and a derivative thereof, glycerin and a derivative thereof, and a polyethylene glycol and a derivative thereof. The antistatic agent may be an ion conductive polymer obtained by polymerizing or copolymerizing a monomer having an ion conductive group of the cationic, anionic, or amphoteric antistatic agent. These may be used singly or in combination of two or more thereof.

### (Antiseptic agent)

The antiseptic agent may be used mainly to enhance antisepsis power and bactericidal power to maintain antiseptic properties during long-term storage. Examples of the antiseptic agent include isothiazolone-based organosulfur compounds, benzisothiazolone-based organosulfur compounds, benzoic acids, and 2-bromo-2-nitro-1,3-propanediol. The amount of the antiseptic agent is preferably 0.0001 to 1% by weight based on the total weight of the composition. When the amount of the antiseptic agent is the lower limit value of the aforementioned range or more, a sufficient effect of antiseptic agent added is obtained, and when the content is the upper limit value or less, favorable storage stability of the composition is obtained.

### (Ultraviolet absorber)

The ultraviolet absorber is an agent that has the effect of protection from ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### (Antibacterial agent)

The antibacterial agent is a component that has the effect of inhibiting bacteria from growing on fibers and, moreover, has the effect of inhibiting generation of unpleasant odors derived from decomposition products of microorganisms. Examples of the antibacterial agents include cationic antibacterial agents such as a quaternary ammonium salt, bis-(2-pyridylthio-1-oxide) zinc, a polyhexamethylene biguanidine hydrochloride salt, 8-oxyquinoline, and a polylysine.

### (Deodorant)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in International Publication No. WO 2012/090580) .

### (Perfume)

The perfumes are not limited, and a list of usable perfume raw materials can be found in various literatures, including "Perfume and Flavor Chemicals", Vol. I and II, Steffen Arctander, Allured Pub. Co. (1994) and "Synthetic Perfume Chemistry and Product Knowledge", Genichi Indo, The Chemical Daily Co., Ltd. (1996) and "Perfume and Flavor Materials of Natural Origin", Steffen Arctander, Allured Pub. Co. (1994) and "Encyclopedia of Fragrance", edited by the Japan Perfume Association, Asakura Publishing Co., Ltd. (1989) and "Perfumery Material Performance V.3.3", Boelens Aroma Chemical Information Service (1996) and "Flower oils and Floral Compounds In Perfumery", Danute Lajaujis Anonis, Allured Pub. Co. (1993), each of which is incorporated herein as a part of the disclosure of the present description by reference.

### (Amount of other components)

The amount of other components may be 0.1 parts by weight or more, 1 part by weight or more, 3 parts by weight or more, 5 parts by weight or more, 10 parts by weight or more, 15 parts by weight or more, or 20 parts by weight or more, based on 100 parts by weight of the polymer. The amount of other components may be 50 parts by weight or less, 40 parts by weight or less, 30 parts by weight or less, 20 parts by weight or less, 10 parts by weight or less, or 5 parts by weight or less, based on 100 parts by weight of the polymer.

### (Amount of polymer)

The amount of the polymer may be 0.01% by weight or more, 0.5% by weight or more, 1% by weight or more, 3% by weight or more, 5% by weight or more, 10% by weight or more, 20% by weight or more, or 30% by weight or more, in the composition. The amount of the polymer may be 60% by weight or less, 50% by weight or less, 40% by weight or less, 30% by weight or less, 20% by weight or less, 10% by weight or less, 5% by weight or less, or 3% by weight or less, in the composition.

### <Applications of composition>

Examples of applications of the composition in the present disclosure include an external treatment agent (surface-treating agent) or internal treatment agent, repellent (water-repellent agent, oil-repellent agent, water- and oil-repellent agent, etc., particularly, water-repellent agent), antifouling agent, soil release agent, release agent, and mold release agent (external mold release agent or internal mold release agent). Alternatively, the composition in the present disclosure is usable as an external treatment agent (surface-treating agent) or internal treatment agent, repellent (water-repellent agent, oil-repellent agent, water- and oil-repellent agent, etc., particularly, water-repellent agent), antifouling agent, soil release agent, release agent, or mold release agent (external mold release agent or internal mold release agent).

### <Method for producing composition>

The method for producing the composition may comprise reacting (polymerizing) the monomer (1) in a medium (such as a liquid medium) containing the monomer (1) and the aforementioned additional components (such as an emulsifier, a liquid medium, and wax) to give a polymer.

Alternatively, the method of producing the composition may comprise adding the additional components (such as an emulsifier, a liquid medium, and wax) to a solution or dispersion of the polymer, or mixing a solution or dispersion of the polymer with a solution or dispersion of the additional components (such as an emulsifier, a liquid medium, and wax).

The composition is preferably subjected to ultrasound (ultrasonication) to cause the composition to exhibit high water-repellency. Ultrasonication is preferably carried out immediately before applying the composition to the treatment target. For example, the composition is applied to the treatment target 1 minute to 1 hour after ultrasonication. Ultrasonication can be carried out by subjecting the composition to ultrasound. The ultrasonicator is not limited, and the output is preferably 500 W or more such as 500 to 2000 W in view of efficient mixing. The ultrasonication time may be 0.5 minutes to 60 minutes. For example, treatment with a 500 W ultrasonicator for 10 minutes yields a uniform composition.

Examples of polymerization methods include solution polymerization, suspension polymerization, emulsion polymerization, and condensation polymerization.

In solution polymerization, used is a method involving dissolving the monomers in an organic solvent in the presence of a polymerization initiator, and after nitrogen replacement, heating and stirring the mixture at 30 to 120°C for 1 to 10 hours. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in an amount of 0.01 to 20 parts by weight such as 0.01 to 10 parts by weight based on 100 parts by weight of the monomers.

The organic solvent is inert to and dissolves the monomers, and examples include esters (e.g., esters having 2 to 40 carbon atoms, such as ethyl acetate and butyl acetate), ketones (e.g., ketones having 2 to 40 carbon atoms, such as methyl ethyl ketone, diisobutyl ketone, and methyl isobutyl ketone), and alcohols (e.g., alcohols having 1 to 40 carbon atoms, such as ethanol, butanol, and isopropyl alcohol). Specific examples of the organic solvent include acetone, chloroform, HCHC-225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in the range of 10 to 3,000 parts by weight such as 50 to 2,000 parts by weight based on total 100 parts by weight of the monomers.

In emulsion polymerization, used is a method involving emulsifying the monomers in water in the presence of a polymerization initiator and an emulsifier, and after nitrogen replacement, stirring the mixture to copolymerize it at 50 to 80°C for 1 to 20 hours. The polymerization initiator may be a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, sodium peroxide, potassium persulfate, or ammonium persulfate, or an oil-soluble initiator such as azobisisobutyronitrile, benzoyl peroxide, di-t-butylperoxide, lauryl peroxide, cumene hydroperoxide, t-butyl peroxypivalate, or diisopropyl peroxydicarbonate. The polymerization initiator is used in the range of 0.01 to 10 parts by weight based on 100 parts by weight of the monomers.

To obtain a polymer water dispersion having excellent standing stability, it is desirable to perform polymerization by forming fine particles of monomers in water by using an emulsification device which can provide high crush energy, such as a high-pressure homogenizer or an ultrasonic homogenizer. The emulsifier may be anionic, cationic, or nonionic, and 0.5 to 20 parts by weight of the emulsifier may be used based on 100 parts by weight of the monomers. An anionic and/or nonionic and/or cationic emulsifier is preferably used. If the monomer does not completely dissolve, a compatibilizer that sufficiently dissolves the monomers, such as a water-soluble organic solvent or a low molecular weight monomer, is preferably added. By adding the compatibilizer, emulsifiability and copolymerizability can be improved.

The water-soluble organic solvent may be the organic solvent described above. Examples include acetone, methyl ethyl ketone, ethyl acetate, propylene glycol, dipropylene glycol monomethyl ether, dipropylene glycol, tripropylene glycol, and ethanol, and the water-soluble organic solvent may be used in the range of 1 to 50 parts by weight such as 10 to 40 parts by weight based on 100 parts by weight of water. Examples of the low molecular weight monomer include methyl methacrylate, glycidyl methacrylate, and 2,2,2-trifluoroethyl methacrylate, and the low molecular weight monomer may be used in the range of 1 to 50 parts by weight such as 10 to 40 parts by weight based on total 100 parts by weight of the monomers.

A chain transfer agent may be used in the polymerization. The molecular weight of the polymer can be changed according to the amount of the chain transfer agent used. Examples of the chain transfer agent include mercaptan group-containing compounds (in particular, alkyl mercaptans (having, for example, 1 to 40 carbon atoms)) such as lauryl mercaptan, thioglycol, and thioglycerol, and inorganic salts such as sodium hypophosphite and sodium hydrogen sulfide. The amount of the chain transfer agent used may be in the range of 0.01 to 10 part by weight such as 0.1 to 5 parts by weight based on total 100 parts by weight of the monomers.

The composition may be in the form of a solution, an emulsion (in particular, an aqueous dispersion), or an aerosol.

### <Water-repellent agent>

The water-repellent agent of the present disclosure contains the polymer of the present disclosure. The water-repellent agent of the present disclosure may be the composition of the present disclosure. That is to say, the composition of the present disclosure can be directly used as a water-repellent agent. The water-repellent agent of the present disclosure may be prepared by applying, in addition to the polymer of the present disclosure, various materials and conditions used for preparing the composition of the present disclosure.

The water-repellent agent of the present disclosure does not need to contain any compound selected from the group consisting of compounds having a fluoroalkyl group having 8 or more carbon atoms, compounds having a perfluoroalkyl group having 8 or more carbon atoms, compounds having a fluoroalkyl group having 4 or more carbon atoms, compounds having a perfluoroalkyl group having 4 or more carbon atoms, compounds having a perfluoroalkyl group, compounds having a fluoroalkyl group, and compounds having a fluorine atom. The water-repellent agent of the present disclosure can impart liquid repellency to a substrate without containing these fluorine compounds.

### <Applications of water-repellent agent>

Examples of applications of the water-repellent agent in the present disclosure include an external treatment agent (surface-treating agent) or internal treatment agent, repellent (water-repellent agent, oil-repellent agent, water- and oil-repellent agent, etc., particularly, water-repellent agent), antifouling agent, soil release agent, release agent, and mold release agent (external mold release agent or internal mold release agent).

### <Production method of treated product>

The method for producing a treated product in the present disclosure comprises applying the water-repellent agent of the present disclosure to a substrate.

### [Treated product]

Examples of substrates to be treated with the water-repellent agent of the present disclosure include a fiber substrate, stone, a filter (e.g., an electrostatic filter), a dust mask, a fuel cell component (e.g., a gas diffusion electrode and a gas diffusion support), glass, paper, wood, leather, fur, asbestos, brick, cement, metal and oxide, a ceramic product, plastics, a painted surface, and plaster. Examples of textile products include various products. Examples include animal and plant natural fibers such as cotton, hemp, wool, and silk; synthetic fibers such as a polyamide, polyester, polyvinyl alcohol, polyacrylonitrile, polyvinyl chloride, and polypropylene; semi-synthetic fibers such as rayon and acetate; inorganic fibers such as a glass fiber, carbon fiber, and asbestos fiber or a mixture of these fibers. As an example of the substrate to be treated with the water-repellent agent, a woven or knitted fabric will now be described in detail.

### (Woven or knitted fabric)

### • Production method of woven or knitted fabric

A woven or knitted fabric can be obtained by weaving or knitting yarns of long fibers or short fibers composed of the aforementioned fibers to obtain a greige fabric and then subjecting it to post-processing and water-repellent treatment. The weaving or knitting may be carried out by using a known weaving machine or a knitting machine, and the preparation process prior to weaving or knitting can also be carried out by using known equipment.

The woven or knitted fabric, which is obtained by weaving or knitting, can be subjected to post-processing using known scouring/dyeing methods and equipment adapted to the fiber material of the woven or knitted fabric.

After the post-processing, the woven or knitted fabric may be subjected to water-repellent treatment. In the water-repellent treatment, first, an aqueous solution containing a water-repellent agent (the aqueous solution may be the water-repellent agent or the composition of the present disclosure) is prepared. Then, by a padding method, spray method, kiss roll coater method, slit coater method, or the like, the aforementioned aqueous solution can be applied to the woven or knitted fabric after the above post-processing, and the resultant may undergo dry heat treatment after drying. The above aqueous solution may contain a cross-linking agent, softener, antistatic agent, and the others, as necessary. After the water-repellent treatment, the woven or knitted fabric may be subjected to calendering processing in order to further improve its water-repellent performance.

The woven or knitted fabric is suitably used for clothing applications requiring water-repellency, particularly for sportswear applications such as outdoor, ski, snowboard, and golf, as well as for uniform wear applications.

### • Stacked fabric

The woven or knitted fabric of the present disclosure may be provided in the form of a stacked fabric having a moisture permeable and waterproof layer on one side of the woven or knitted fabric. The moisture permeable and waterproof layer may be stacked directly on the woven or knitted fabric, or it may be stacked above the woven or knitted fabric via an adhesive layer. When the stacked fabric of the present disclosure is used in clothing applications and the like, the woven or knitted fabric side is arranged on the side that repels rainwater and the like.

### • Moisture permeable and waterproof layer

The moisture permeable and waterproof layer is a layer that covers one side of the woven or knitted fabric and is formed by a resin or a structural film having a waterproof property and moisture permeability.

The moisture permeable and waterproof layer may be formed by directly applying a resin (a resin for forming the moisture permeable and waterproof layer) to a woven or knitted fabric, or the layer may be stacked above one side of the woven or knitted fabric via the adhesive layer described below.

The resin for forming the moisture permeable and waterproof layer is not limited, but non-porous resins and resins that form pores are used.
The non-porous resin may be a polyurethane resin or a polyester elastomer resin having a hydrophilic component to provide moisture permeability. In addition to a polyurethane resin that forms a wet type porous membrane, or a polyurethane resin made porous by electrospinning, the porous resin may also be a porous membrane made of PTFE, or a porous membrane made of PE or PP.

As the polyurethane resin, a conventionally known polyurethane resin obtained by reacting a polyisocyanate component with a polyol component can be employed.

A moisture permeable and waterproof film having a microporous structure can be obtained by wet coagulation of a DMF solution of a polyurethane resin containing inorganic fine powder. Examples of the inorganic fine powder include fine powder made of, for example, silicon dioxide, aluminum dioxide, or titanium dioxide. The average primary particle size of the inorganic fine powder is preferably about 7 to 40 nm. The amount of inorganic fine powder is preferably 3 to 50% by weight based on the total amount of the moisture permeable and waterproof layer, and it is preferably 5 to 50% by weight.

The thickness of the moisture permeable and waterproof layer is preferably 5 µm or more and more preferably 10 to 30 µm. Within the above range of thickness, a waterproof property and moisture permeability are well-balanced, which is advantageous in terms of texture.

### • Adhesive layer

The stacked fabric preferably includes an adhesive layer. In other words, the woven or knitted fabric and the moisture permeable and waterproof layer are preferably stacked via an adhesive layer. The adhesive layer is preferably a discontinuous layer, such as in a dot or lattice pattern, in terms of moisture permeability.

A type of the adhesive for forming the adhesive layer is not limited, but is preferably an adhesive excellent in miscibility with the moisture permeable and waterproof layer. For example, when a resin containing a polyurethane resin as the main component is selected as a resin for forming the moisture permeable and waterproof layer, an adhesive layer composed of a polyurethane-based adhesive is preferably employed. The polyurethane-based adhesive may have any structure, including ether-based, ester-based, or polycarbonate-based structures.

The adhesive layer may be formed on the entire surface of one side of the woven or knitted fabric, or may be formed in pattern in view of moisture permeability, texture, or the like. The patterned form is not limited, and may be dotted, linear, lattice, checkered, tortoiseshell patterns, and the like, and any of these patterns is preferably uniformly distributed throughout the entire surface.

The thickness of the adhesive layer is preferably about 10 to 100 µm and more preferably 20 to 80 µm.

### • Textile fabric for lining

In the stacked fabric of the present disclosure, a textile fabric for lining may be stacked on the moisture permeable and waterproof layer (the side of the moisture permeable and waterproof layer opposite from the side thereof on which the woven or knitted fabric of the present disclosure is stacked). The moisture permeable and waterproof layer can be protected by the textile fabric for lining, thereby rendering the layer further excellent in waterproof properties (water pressure resistance) and strength.

Examples of textile fabrics for lining include various types of woven fabrics and knitted fabrics. Among these, knitted fabrics are more suitable than woven fabrics because fiber yarns constituting the knitted fabrics easily protrude from their surfaces to create a less flat surface condition, and thus, the anchoring effect is more exhibited, thereby making it difficult for the fabric to peel from the moisture permeable and waterproof layer. The tricot knitted fabric is also preferred for the following reason: a long greige tricot knitted fabric with fewer joints can be obtained upon knitting, which makes it possible for the fabric to be uniformly stacked on the moisture permeable and waterproof layer.

A material of fibers constituting the textile fabric for lining is not limited and can be appropriately selected; however, it is preferably a nylon fiber. The reason for this is as follows: a problem with polyester fibers and the like, for which disperse dyes are used, is migration and sublimation of the disperse dyes to the moisture permeable and waterproof layer, and acid dyes are generally used for nylon fibers, thereby hardly causing such a problem. The form (long fiber, staple fiber, or spun yarn) of the constituent fiber of the textile fabric for lining, or fineness thereof is not limited, and can be appropriately selected such that the effect of the present disclosure is not impaired.

### • Characteristics of stacked fabric

The stacked fabric has an excellent waterproof property. As for a suitable example of the waterproof property of the stacked fabric of the present disclosure, the water level is, for example, 10,000 mm or more, preferably 15,000 mm or more, more preferably 16,000 mm or more, and particularly preferably 20,000 mm or more, as measured in accordance with the water resistance test specified in the A method (low water pressure method) in JIS L 1092: 2009.

The stacked fabric has excellent moisture permeability. As for a suitable example of the moisture permeability of the stacked fabric of the present disclosure, the moisture permeability is, for example, 10,000 g/m²·24h or more, preferably 15,000 g/m²·24h or more, and more preferably 20,000 g/m²·24h or more, as measured in accordance with the B-1 method (potassium acetate method) in JIS L 1099: 2021. The upper limit value of the moisture permeability is not limited, and is, for example, 40,000 g/m²·24h or 35,000 g/m²·24h·mm. Also, the moisture permeability is, for example, 4,000 g/m²·24h or more, preferably 8,000 g/m²·24h or more, and more preferably 10,000 g/m²·24h or more, as measured in accordance with the A-1 method (calcium chloride method) in JIS L 1099: 2021. The upper limit value of the moisture permeability is about 13,000 to 15,000 g/m²·24h, due to the limitations of the measurement method.

In the stacked fabric of the present disclosure, a peel strength of, for example, 2.55 N/2.54 cm or more, as measured in accordance with the method of JIS K 6404-2, between the woven or knitted fabric and the moisture permeable and waterproof layer is preferable for apparel applications; and depending on the application, a peel strength of 5 N/2.54 cm or more may be preferable.

### • Production method of stacked fabric

Methods for producing a stacked fabric are not limited, and include, for example, the first production method and second production method described below.

The first production method: it comprises applying a resin for forming the moisture permeable and waterproof layer to the surface of a woven or knitted fabric to form the moisture permeable and waterproof layer.

The second production method: it comprises forming an adhesive layer on a woven or knitted fabric or a moisture permeable and waterproof layer, and bonding the woven or knitted fabric and the moisture permeable and waterproof layer via an adhesive layer.

In the first production method, examples of methods for applying a resin for forming the moisture permeable and waterproof layer to the surface of the woven or knitted fabric include a coating method. In the coating method, a knife coater or a comma coater can be used. In view of allowing the moisture permeable and waterproof layer to have excellent moisture permeability, it is preferably obtained by a wet method.

In the second production method, examples of methods for forming an adhesive layer on a woven or knitted fabric or a moisture permeable and waterproof layer include a lamination method. In the lamination method, a method involving the use of a resin solution or a method involving hot melt can be employed to form the adhesive layer. First, a clearance is created on the surface of a release material (release paper, release fabric, or release film, and the like); a resin composition for forming a moisture permeable and waterproof layer (for example, a resin composition containing a resin and an organic solvent) is applied thereto while adjusting its thickness, to form a moisture permeable and waterproof layer; and the moisture permeable and waterproof layer is subjected to a drying/heat-treatment to completely react to thereby obtain a film. The release material can be appropriately removed after having bonded or aging. When bonding by a method involving hot melt, it is also possible to remove the release material and bond with the film alone.

The moisture permeable and waterproof film may also be bonded with a membrane formed by a solvent-free extrusion method such as T-die or inflation, a porous membrane formed by electrospinning, or a porous membrane made of PTFE, PE, PP, or the like.

An adhesive layer is then formed on the woven or knitted fabric or the moisture permeable and waterproof layer. For example, in the method involving the use of a resin solution, a polyurethane resin solution may be applied to the entire surface of the layer or applied to the surface in a pattern, and the polyurethane resin solution may be a two-component curable type and have an adjusted viscosity within a range of 500 to 5,000 mPa·s. Thereafter, the applied solution may be dried to form the adhesive layer, the woven or knitted fabric and the moisture permeable and waterproof layer may be bonded to each other via the adhesive layer, and undergo compression bonding or thermal compression bonding, whereby the second production method can be implemented.

In the case of hot melt, on the other hand, a moisture-curable resin, which reacts with moisture in the air, is preferably used, and those that melt in a temperature range of about 80 to 150°C are more suitably used in practice. In this case, the hot melt resin is first melted while taking into consideration the melting point of the resin, the viscosity when melted, and the like. The surface of the woven or knitted fabric or the moisture permeable and waterproof layer is then coated with the molten resin, and the coated fabric or layer is allowed to age while cooled at ordinary temperature to form an adhesive layer. Thereafter, the woven or knitted fabric and the moisture permeable and waterproof layer are bonded to each other via the adhesive layer, and subjected to compression bonding, whereby the second production method can be implemented. Alternatively, when texture is prioritized, the molten resin may be applied to the moisture permeable and waterproof film in a patterned manner, which may then be bonded to the woven or knitted fabric.

Thereafter, the textile fabric for lining can be stacked on the moisture permeable and waterproof layer using a known and suitable method.

### • Applications of stacked fabric

The stacked fabric has excellent water-repellency, and moisture permeability and a waterproof property, and the moisture permeable and waterproof layer does not peel off even in harsh environments. Accordingly, the stacked fabric is suitable in the fields such as uniform clothing, sportswear clothing, outdoor products, and the like, all of which are used outdoors.

### [Treatment method]

The water-repellent agent of the present disclosure can be applied to a substrate (particularly a fiber substrate) as a treatment agent (particularly a surface-treating agent) by a conventionally known method. A method for applying the water-repellent agent of the present disclosure may include dispersing the water-repellent agent of the present disclosure in an organic solvent or water to dilute it therewith if necessary, and allowing the resulting dispersion to adhere to the surface of the substrate by any known methods such as dip coating, spray coating, foam coating, and the like, and then drying it. After drying, a textile product to which a solid component of the water-repellent agent is adhered, is obtained. If necessary, the water-repellent agent of the present disclosure may be applied in combination with a suitable cross-linking agent, and curing may be carried out. Furthermore, the water-repellent agent of the present disclosure can be further combined for use with various additives such as water- and/or oil-repellent agents, an anti-slip agent, an antistatic agent, a texture modifier, a softening agent, an antibacterial agent, a flame retarder, a coating material fixing agent, a wrinkle-resistant agent, a drying rate adjuster, a cross-linking agent, a film formation agent, a compatibilizer, an anti-freezing agent, a viscosity modifier, an ultraviolet absorber, an antioxidant, a pH adjuster, an insect repellent, and an antifoaming agent. Examples of the various additives may be the same as those described in the section "Other components" in the composition described above. The concentration of the polymer in a treatment agent to be brought into contact with a substrate may be appropriately changed depending on the application, and may be 0.01 to 10% by weight such as 0.05 to 5% by weight.

### [Textile product]

A fiber substrate as a substrate may be any of various products, and examples thereof include fabric products and paper products. A textile product that is a substrate is also referred to as a fiber substrate.

Examples of fabric products include: flora and fauna natural fibers such as cotton, hemp, wool, and silk; synthetic fibers such as a polyamide, polyester, polyvinyl alcohol, polyacrylonitrile, polyvinyl chloride and polypropylene; semi-synthetic fibers such as rayon and acetate; inorganic fibers such as a glass fiber, carbon fiber and asbestos fiber or a mixture of these fibers. Fabric products include woven fabrics, knitted fabrics, and non-woven fabrics, fabrics in clothing form and carpets. Fibers, yarns, and intermediate textile products (for example, slivers or coarse yarns) before being formed into fabrics may also undergo treatments.

Examples of the paper products include: papers made of bleached or unbleached chemical pulps such as kraft pulp or sulfite pulp; bleached or unbleached high-yield pulps such as crushed wood pulp, mechanical pulp, or thermomechanical pulp; waste paper pulps such as waste newspaper, waste magazines, waste cardboards, or deinked waste paper; containers made of paper, and formed articles made of paper. Specific examples of paper products include food packaging paper, base paper for gypsum board, coated base paper, medium quality paper, general liner and core, neutral pure white roll paper, neutral liner, rust-proof liner and metal joined paper, kraft paper, neutral printing and writing paper, neutral coated base paper, neutral PPC paper, neutral thermal paper, neutral pressure sensitive base paper, neutral inkjet paper and neutral information paper, and molded paper (molded containers).

The water-repellent agent can be applied to fiber substrates by any of the methods known for treating fiber substrates (for example, fabrics) with liquids. The fiber substrate may be immersed in the water-repellent agent, or the solution may be adhered to or sprayed onto the fiber substrate. The treated fiber substrate is dried and subjected to curing, preferably by heating, in order to develop water-repellency. The heating temperature may be, for example, 80°C to 250°C, 100°C to 170°C, or 100°C to 120°C. Preferably, the heating temperature may be 100°C to 170°C. Favorable performance can be obtained even by heating at lowered temperatures (for example, 100°C to 140°C) in the present disclosure. In the present disclosure, the heating time may be 5 seconds to 60 minutes, such as 30 seconds to 3 minutes.

Alternatively, the water-repellent agent may be applied to the fiber substrate by a cleaning method, for example, in laundry application or dry cleaning methods.

The fiber substrates to be treated may be fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The water-repellent agent of the present disclosure is particularly effective in rendering textile products (for example, synthetic fibers) water-repellent.

Fibers constituting the fiber substrate may be natural, synthetic, semi-synthetic, regenerated, or inorganic fibers. Fibers may be used singly or in combination of two or more thereof.

Examples of the natural fibers include cellulosic fibers such as cotton, flax, and pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are glass fiber and carbon fiber.

Alternatively, the fiber substrate may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the fiber substrate may be paper. The polymeric product may be applied to paper that has been produced, or may be applied at various stages of papermaking, for example, during drying the paper.

The "treatment" refers to applying the water-repellent agent to a substrate by dipping, spraying, coating, or the like. The treatment allows the polymer as an active component of the water-repellent agent to penetrate inside of the substrate and/or to adhere to the surface of the substrate. In other words, the treatment provides a substrate (for example, a textile product) to which the polymer in the water-repellent agent of the present disclosure is adhered. Such a substrate is a textile product having water-repellency, or that is to say, a water-repellent textile product.

### [Pretreatment of fiber substrate]

The fiber substrate may be pretreated prior to treatment with the water-repellent agent of the present disclosure. When a pretreated fiber substrate is treated with the water-repellent agent, the fiber substrate after the treatment with the water-repellent agent has excellent fastness.

Examples of pretreatment of the fiber substrate include cationization treatments by reaction with reactive quaternary ammonium salt or the like, anionization treatment such as sulfonation, carboxylation, and phosphorylation, acetylation treatment after the anionization treatment, benzoylation treatment, carboxymethylation treatment, grafting treatment, tannic acid treatment, and polymer coating treatment.

The method for pretreating the fiber substrate is not limited, and the fiber substrate can be pretreated by conventionally known methods. The method for pretreatment may include dispersing a pretreatment liquid in an organic solvent or water to dilute it therewith, as necessary, and allowing the diluted pretreatment liquid to adhere to the surface of the fiber substrate by any known methods such as dip coating, spray coating, foam coating, and the like, and then drying the resultant. The pH, temperature, etc. of the pretreatment liquid may be adjusted according to the extent of treatment desired. As an example of the method for pretreating a fiber substrate, a method for pretreating a fiber substrate with a hydrocarbon-based water-repellent agent will now be described in detail.

The pretreatment method for the fiber substrate may include imparting a fiber with at least one functional group (hereinafter sometimes referred to as a "specific functional group") selected from the group consisting of a monovalent group represented by -SO₃M¹, wherein M¹ represents a monovalent cation, a monovalent group represented by -COOM², wherein M² represents a monovalent cation, and a monovalent group represented by -OP(O)(OX¹)(OX²), wherein X¹ and X² each independently represent a hydrogen atom or an alkyl group having 1 to 22 carbon atoms.

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

Fibers containing the aforementioned specific functional groups (hereinafter, also referred to as "functional group-containing fibers") can be prepared, for example, by the following methods.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Materials used for the fiber material, are not particularly limited, and examples thereof include natural fibers such as cotton, linen, silk, and wool, semi-synthetic fibers such as rayon and acetate, synthetic fibers such as a polyamide (nylon, etc.), a polyester, a polyurethane, and a polypropylene, composite fibers thereof, blended fibers, and the like. The fiber material may be in any form of fibers (tows, slivers, and the like), yarns, knitted fabrics (including interknitted fabrics), woven fabrics (including interwoven fabrics), nonwoven fabrics, papers, and the like.

In the present embodiment, from the viewpoint of improving the water-repellency of the obtained textile product, a fiber material containing a polyamide and a polyester as raw materials, is preferably used, and, in particular, nylon such as nylon 6, or nylon 6,6, a polyester such as polyethylene terephthalate (PET), a polytrimethyl terephthalate, or polylactic acid, and blended fibers containing these, are preferably used.

A phenolic polymer can be used as the compound having -SO₃M¹ described above. Examples of such a phenolic polymer include those containing at least one compound represented by the following general formula: 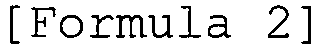 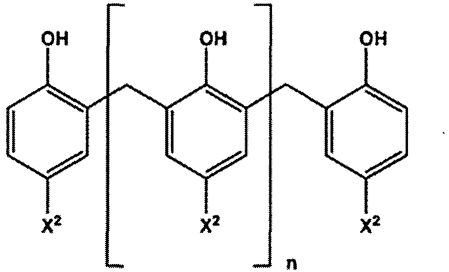 wherein X² represents -SO₃M³, wherein M³ represents a monovalent cation, or a group represented by the following general formula, and n is an integer of 20 to 3,000.

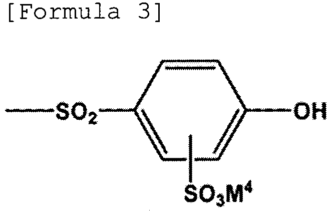

### wherein M⁴ represents a monovalent cation.

Examples of M³ include H, K, Na or an ammonium ion which may have a substituent.

Examples of M⁴ include H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available polymer, can be used.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. At this time, an aqueous solution of the above monomer and/or salt thereof may added with aqueous solvents such as alcohols such as methanol, ethanol, and isopropyl alcohol, and acetone. Examples of the radical polymerization initiator include persulfates such as potassium persulfate, sodium persulfate, and ammonium persulfate, redox polymerization initiators in combination of the persulfate and sodium bisulfite or the like, hydrogen peroxide, and a water-soluble azo-based polymerization initiator. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl-based monomers such as ethylene, vinyl chloride, and vinyl acetate, acrylamides, acrylates, and methacrylates. The acrylates and methacrylates preferably have a hydrocarbon group having 1 to 3 carbon atoms, which may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, and propyl methacrylate. These copolymerizable monomers may be used singly or in combination of two or more thereof.

A carboxyl group in the polycarboxylic acid-based polymer may be free or may be neutralized with an alkali metal, an amine-based compound, or the like. Examples of the alkali metal include sodium, potassium, and lithium, and examples of the amine-based compound include ammonia, monoethanolamine, diethanolamine, and triethanolamine.

The weight-average molecular weight of the polycarboxylic acid-based polymer is preferably 1,000 to 20,000 and more preferably from 3,000 to 15,000, from the viewpoint of favorable water-repellency of the resulting textile product.

As the polycarboxylic acid-based polymer, commercially available product such as "Neocrystal 770" (trade name, manufactured by NICCA CHEMICAL CO., LTD.) or "Ceropol PC-300" (trade name, manufactured by Sanyo Chemical Industries, Ltd.) can be used.

Examples of the compound having -O-P(O)(OX¹)(OX²) as described above include phosphoric acid ester compounds represented by the following general formula: 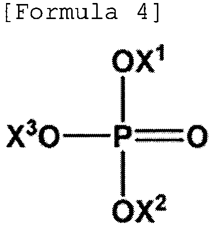 wherein, X¹ or X² is the same as defined above, and X³ represents an alkyl group having 1 to 22 carbon atoms.

As the aforementioned phosphoric acid ester compound, phosphoric acid monoesters, diesters or triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, for example, a commercially available product such as "Phosphanol ML-200" (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan Co., LTD., 1981). Examples of the dip treatment include the method involving using a batch type dyeing machine as described on pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment include a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The drying method is not limited, and either a dry heat method or a wet heat method may be employed. Drying temperatures are also not limited, and, for example, drying may be carried out at room temperature to 200°C for 10 seconds to several days. Heat treatment at a temperature of 100 to 180°C for about 10 seconds to 5 minutes may be carried out after the drying, as necessary.

In a case in which a fiber material is such that it is to be dyed, treatment with the pretreatment liquid may be carried out before dyeing or in the same bath as in dyeing, but in the case of carrying out reduction soaping, a compound with the above specific functional group (for example, a phenolic polymer compound or the like) adsorbed in the process may fall off, and therefore the treatment with the pretreatment liquid is preferably carried out after the reduction soaping after dyeing.

The treatment temperature in the dip treatment can be 60 to 130°C. The treatment time can be 5 to 60 minutes.

The step of introducing a functional group by the pretreatment liquid is preferably carried out so that the amount of the compound having the above specific functional group adhered is 1.0 to 7.0 parts by weight based on 100 parts by weight of a fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of usable salts include, for example, sodium chloride, sodium carbonate, ammonium sulfate, and sodium sulfate.

In the step of introducing a functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and, additionally, the textile product to be obtained has the favorable texture. The resulting functional group-containing fiber is preferably fully dried prior to contact with a hydrocarbon-based water-repellent agent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of - 100 to -0.1 mV and more preferably -50 to -1 mV. The zeta potential of the fiber surface can be measured, for example, using a zeta potential and particle size measurement system ELSZ-1000ZS (manufactured by Otsuka Electronics Co., Ltd.).

The method for treating a pulp substrate may be an internal addition treatment method in which the repellent is added to pulp before papermaking (e.g., a pulp slurry), or an external addition treatment method in which the repellent is applied to pulp after papermaking (e.g., a pulp product). Examples of internal addition treatment methods include mixing and dipping, and the internal addition treatment method may include adding the repellent to pulp slurry and mixing it by stirring. Examples of external addition treatment methods include spraying and coating and more specifically a pound-type two-roll size press, a gate roll type size press and a rod metering type size press. The treatment may be external addition treatment or internal addition treatment. For example, when the pulp substrate is paper, the repellent may be applied to paper, or a solution may be adhered or sprayed onto paper, or the repellent may be mixed with a pulp slurry before papermaking to perform treatment.

While embodiments have been described above, it will be understood that various changes in form and detail can be made without departing from the gist and scope of the claims.

### Examples

Hereinafter, the present disclosure will be described in detail with reference to Examples, but the present disclosure is not limited to these Examples.

### <Test method>

The test procedures are as follows.

### {Molecular weight distribution}

Average molecular weight:
The number average molecular weight of the copolymer is determined by gel permeation chromatography (GPC) (in terms of polystyrene).

For gel permeation chromatography, an HLC-8420GPC EcoSEC Elite-WS (manufactured by Tosoh Corporation) was used.

Two TSKgel SuperMultiporeHZ-M columns were connected and used. The detector used was an RI detector. The standard substance used was standard polystyrene (SRM 706a NIST).

The analytical sample was prepared by dissolving the copolymer in tetrahydrofuran to give a 0.1% by weight solution, and allowing the solution to pass through a 0.5 µm filter. When measuring the average molecular weight, the columns were retained at 40°C, tetrahydrofuran was used as an eluent, the flow rate was set to 0.35 mL/min, and 10 µL of the analytical sample was introduced.

### {Tackiness}

A solution containing the polymer was dried at 50 to 60°C for 2 hours, or a solution containing the polymer was extracted with alcohol, then placed on a metal sample stage having a diameter of 80 mm, heated at 40°C for 3 minutes, and evaluated using a probe having a diameter of 50 mm. The numerical value of tackiness was the average of three measurements or, if the measured values varied, five measurements were made, the maximum and minimum values were discarded, and the remaining values were averaged.
Apparatus name: RHESCA Tacking Tester TAC-II
Test conditions:
Constant Load

| | |
|---|---|
| (1) Immersion Speed | 120mm/min. |

| | |
|---|---|
| (2) Test Speed | 600mm/min. |
| (3) Preload | 500gf |
| (4) Press Time | 10sec |
| (5) Distance | 5mm |

A greater numerical value of a measurement result means a greater adhesion.

### {Water-repellency}

The water-repellency of test fabrics was evaluated in accordance with the spray method of JIS-L-1092 (AATCC-22).

The water-repellency was evaluated according to the following criteria. A higher score indicates better water-repellency, and intermediate values (95, 85, 75, 65, 55) were assigned depending on the condition.
100: No wet or water droplets adhered was found on the surface.
90: No wet but small water droplets adhered was found on the surface.
80: Wet in the form of separate small water droplets was found on the surface.
70: Wet was found on half of the surface and the separate small wet penetrated the fabric.
50: Wet was found on the whole surface.
0: Wet was found on the whole surface and the whole back surface.

### {Light oil-repellency}

Oil obtained by blending oleic acid and PEG at a ratio of 1:9 was applied to a test fabric, oil-repellency was evaluated on the following four-point scale. Depending on the condition, intermediate values (B+, B-, C+, and C-) were used.
A: Droplets are transparent (not wet) and are rounded.
B: Edges and bottoms of droplets are slightly dark, and are rounded.
C: Penetration of some droplets into the fabric is found.
D: Droplets have completely penetrated the fabric.

### {Chalk mark resistance}

A test fabric was placed on a flat place, the surface of the test fabric was lightly scratched with a fingernail, and the remaining chalk-like scratch mark by the fingernail was visually examined and evaluated.
⊚○: Scratch mark is virtually invisible
○: Scratch mark is barely invisible
○△: Thin scratch mark is found
△: Scratch mark is found
△×: Slightly thick scratch mark is found

### Si-based monomer (A)

Silaplane TM-0701T manufactured by JNC Corporation as shown below was used as a Si-based monomer (A).

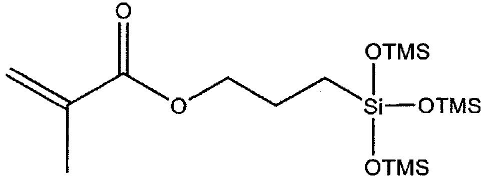

### Si-based monomer (B)

### [Preparation of monomer]

### (Synthesis of intermediate 1)

A four-neck flask was equipped with a thermometer, a dropping funnel, and a nitrogen line, and the flask was immersed in an ice bath. Next, 14.74 g of 1,1,1,3,3-pentamethyldisiloxane as a siloxane compound, 0.04 g of tris(pentafluorophenyl)borane, and 30 mL of toluene were added to the flask, and the solution was stirred. The flask was purged with nitrogen, then 5.1 mL of (3-chloropropyl)diethoxy(methyl)silane as a silane compound and 10 mL of toluene were placed in the dropping funnel, and this solution was slowly added to the flask. After dropwise addition was terminated, the ice bath was removed, and stirring was continued at room temperature for 6 hours. After Si-OEt conversion was confirmed by 1H-NMR, neutral alumina was added to the flask, and the mixture was stirred for 30 minutes. The stirred alumina mixture was filtered through a 0.45 µm filter to give a solution. The solvent was removed from the resulting solution using a rotary evaporator, and thus an intermediate 1 as a transparent liquid was obtained. The intermediate 1 was evaluated by 1H-NMR and GC.

### (Synthesis of Si-based monomer (B))

A four-neck flask was equipped with a thermometer, a dropping funnel, and a nitrogen line, and the flask was immersed in an ice bath. Then, 0.01 g of butylated hydroxytoluene, 0.36 g of potassium iodide, 0.98 g of sodium acrylate, 40 mL of dimethylformamide, and 5 g of the intermediate 1 were added to the flask to give a mixture. The flask was purged with nitrogen and then heated to 120°C, and the mixture was stirred for 5 hours. Subsequently, the flask was cooled to 50°C, and the mixture was washed with water using a separatory funnel to give a yellow liquid. This was dried over sodium sulfate, and the resulting mixture was filtered to give a Si-based monomer (B) as a transparent liquid. The Si-based monomer (B) was evaluated by 1H-NMR and GC.

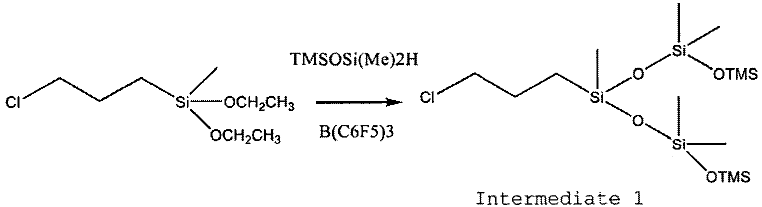

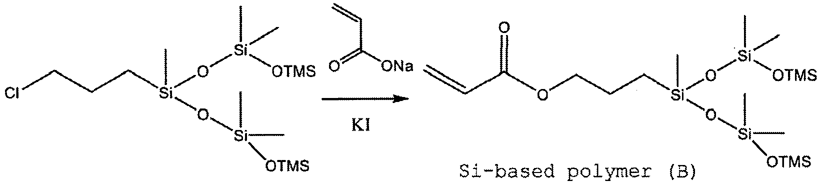

### Si-based monomer (C)

A Si-based monomer (C) shown below was obtained in accordance with WO 2020/142474.

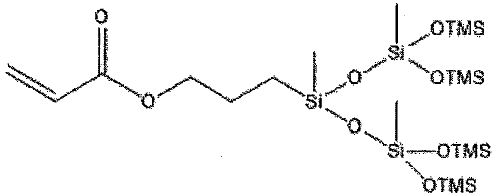

### Si-based monomer (D)

A Si-based monomer (D) shown below was obtained in accordance with JP 2019-89715 A.

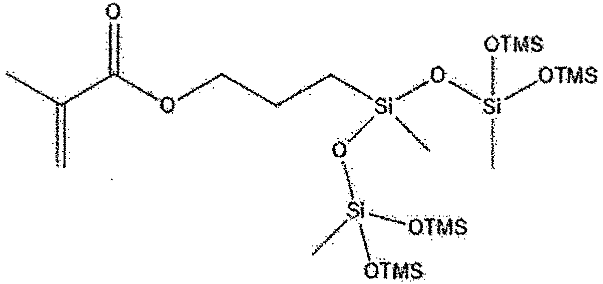

### Si-based monomer (E)

### [Preparation of monomer]

### (Synthesis of intermediate 2)

The same procedure as in (Synthesis of intermediate 1) was carried out except that (3-chloropropyl)trimethoxysilane was used as a silane compound.

### (Synthesis of Si-based monomer (E))

The same procedure as in (Synthesis of Si-based monomer (B)) was carried out using the intermediate 2, and a Si-based monomer (E) was obtained as a transparent liquid.

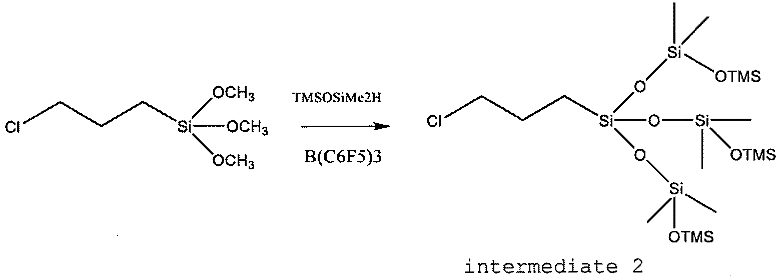

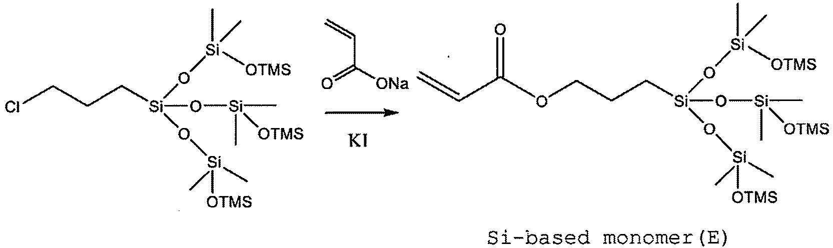

### Si-based monomer (F)

### [Preparation of monomer]

### (Synthesis of intermediate 3)

The same procedure as in (Synthesis of intermediate 1) was carried out except that 1,1,1,3,5,5,5-heptamethyltrisiloxane was used as a silane compound, and (3-chloropropyl)trimethoxysilane was used as a silane compound.

### (Synthesis of Si-based monomer (F))

The same procedure as in (Synthesis of Si-based monomer (B)) was carried out using the intermediate 3, and a Si-based monomer (F) was obtained as a transparent liquid.

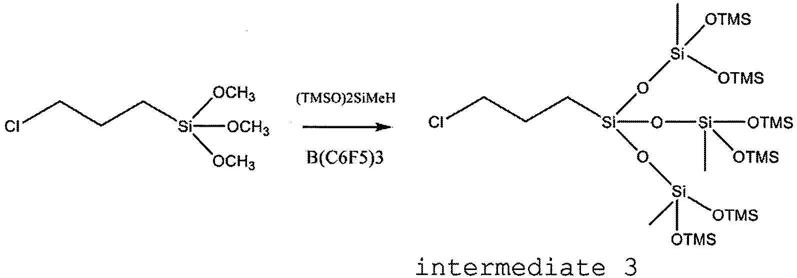

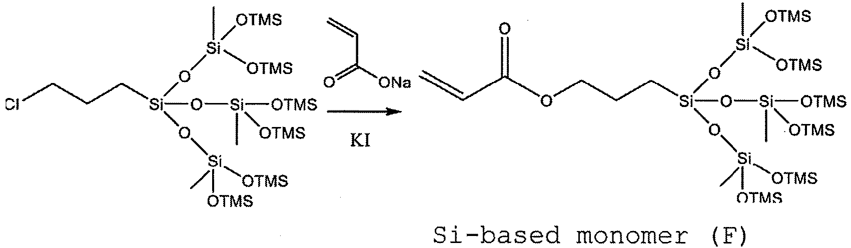

### Si-based monomer (G)

A Si-based monomer (G) shown below was obtained in accordance with WO 2020/142388.

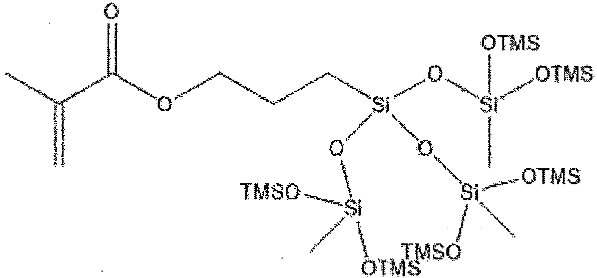

### Si-based monomer (H)

A Si-based monomer (H) shown below was obtained in accordance with WO 2020/142441.

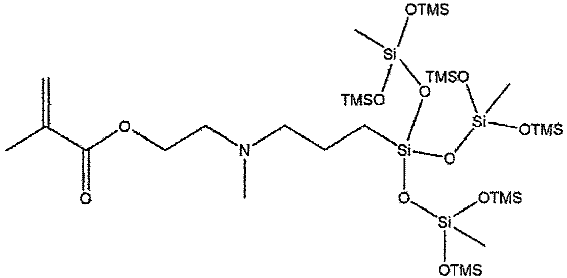

### [Preparation of raw materials]

### (Production Example of silicone polymer-containing water dispersion)

### Production Example 1

A 500 ml plastic vessel was charged with 15 g of a water-soluble glycolic solvent as an organic solvent, 100 g of pure water as a liquid medium, 100 g of the Si-based monomer (A), 4 g of sorbitan fatty acid ester as a surfactant, 4 g of a cationic emulsifier, and 3 g of polyoxyethylene alkyl ether, and the mixture was heated to 80°C, stirred with a homomixer for 1 minute at 2,000 rpm, and then ultrasonically emulsified and dispersed for 15 minutes.

Then, this mixture was transferred to a 500 ml four-neck separable flask, and after nitrogen purge, 0.1 g of lauryl mercaptan was added as a chain transfer agent. Moreover, 0.3 g of an azo-group-containing water-soluble initiator was added as a polymerization initiator, and the mixture was heated to 60°C and reacted for 4 hours to give a water dispersion of a silicone polymer (a water-repellent resin). This dispersion, moreover, was diluted with pure water to prepare a silicone polymer-containing water dispersion (more specifically, a water dispersion containing a silicone polymer, a surfactant, and a liquid medium) having a non-volatile content of 30%.

### Production Examples 2 to 8

Except for modifying the formulations according to Table 1-1, water dispersions containing a silicone polymer, a surfactant, and a liquid medium were prepared in the same manner as in Production Example 1.

### Production Example 9

A 500 ml plastic vessel was charged with 15 g of a water-soluble glycolic solvent as an organic solvent, 100 g of pure water as a liquid medium, 75 g of the Si-based monomer (A), 25 g of stearyl acrylate as a long-chain aliphatic hydrocarbon group-containing (meth)acrylate, 4 g of sorbitan fatty acid ester as a surfactant, 4 g of a cationic emulsifier, and 3 g of polyoxyethylene alkyl ether, and the mixture was heated to 80°C, stirred with a homomixer for 1 minute at 2,000 rpm, and then ultrasonically emulsified and dispersed for 15 minutes.

Then, this mixture was transferred to a 500 ml four-neck separable flask, and after nitrogen purge, 0.1 g of lauryl mercaptan was added as a chain transfer agent. Moreover, 0.3 g of an azo-group-containing water-soluble initiator was added as a polymerization initiator, and the mixture was heated to 60°C and reacted for 4 hours to give a water dispersion of a silicone-acrylic polymer (a water-repellent resin). This dispersion, moreover, was diluted with pure water to prepare a silicone-acrylic polymer-containing water dispersion (more specifically, a water dispersion containing a silicone-acrylic polymer, a surfactant, and a liquid medium) having a non-volatile content of 30%.

### Production Examples 10, 11, 16 to 22

Except for modifying the formulations according to Table 1-1 and Table 1-2, water dispersions containing a silicone-acrylic polymer, a surfactant, and a liquid medium were prepared in the same manner as in Production Example 1.

### Production Example 12

A 500 ml plastic vessel was charged with 15 g of a water-soluble glycolic solvent as an organic solvent, 100 g of pure water as a liquid medium, 30 g of the Si-based monomer (A), 56 g of stearyl acrylate as a long-chain aliphatic hydrocarbon group-containing (meth)acrylate, 4 g of sorbitan fatty acid ester as a surfactant, 4 g of a cationic emulsifier, and 3 g of polyoxyethylene alkyl ether, and the mixture was heated to 80°C, stirred with a homomixer for 1 minute at 2,000 rpm, and then ultrasonically emulsified and dispersed for 15 minutes. Then, this mixture was transferred to a 500 ml autoclave, and after nitrogen purge, 0.1 g of lauryl mercaptan as a chain transfer agent and 14 g of vinyl chloride were added. Moreover, 0.3 g of an azo-group-containing water-soluble initiator was added as a polymerization initiator, and the mixture was heated to 60°C and reacted for 4 hours to give an aqueous dispersion of a silicone-acrylic polymer. This dispersion, moreover, was diluted with pure water to prepare a water dispersion having a non-volatile content of 30%.

### Production Examples 13 to 15

Except for modifying the formulations according to Table 1-2, water dispersions containing a silicone-acrylic polymer, a surfactant, and a liquid medium were prepared in the same manner as in Production Example 12.

### Comparative Production Examples 1 to 2

Except for modifying the formulations according to Table 1-2, Comparative water dispersions were prepared in the same manner as in Production Example 1.

The above water dispersions of silicone polymers or silicone-acrylic polymers (water-repellent resins) were centrifuged at 14,000 rpm for 1 hour, then the supernatant was discarded, isopropyl alcohol was added, and the mixtures were further centrifuged at 14,000 rpm for 30 minutes to separate the polymers. Concerning the separated polymers, the average molecular weight and tackiness described above were evaluated. The results are shown in Table 1-1 and Table 1-2.

**[Table 1-1]**

| | | Unit | Prod. Ex.1 | Prod. Ex.2 | Prod. Ex.3 | Prod. Ex.4 | Prod. Ex.5 | Prod. Ex.6 | Prod. Ex.7 | Prod. Ex. 8 | Prod. Ex.9 | Prod. Ex.10 | Prod. Ex. 11 | Prod. Ex.12 |
|---|---|---|---|---|---|---|---|---|---|---|---|---|---|---|
| Monomer 1 | Si-based monomer (A) | g | 00 | | | | | | | | | | | |
| | Si-based monomer (B) | g | | 100 | | | | | | | | | | |
| | Si-based monomer (C) | g | | | 100 | | | | | | | | | |
| | Si-based monomer (D) | g | | | | 100 | | | | | | | | |
| | Si-based monomer (E) | g | | | | | 100 | | | | | | | |
| | Si-based monomer (F) | g | | | | | | 100 | | | 75 | 50 | 30 | 30 |
| | Si-based monomer (G) | g | | | | | | | 100 | | | | | |
| | Si-based monomer (H) | g | | | | | | | | 100 | | | | |
| Monomer 2 | Stearyl acrylate | g | | | | | | | | | 5 | 50 | 70 | 56 |
| | Behenyl acrylate | g | | | | | | | | | | | | |
| | Hydroxybutyl acrylate | g | | | | | | | | | | | | |
| | Stearyl group-containing amido acrylate | g | | | | | | | | | | | | |
| | Vinyl chloride | g | | | | | | | | | | | | 14 |
| Polymerization initiator | Azo group-containing water-soluble initiator | g | 0.3 | 0.3 | 0.3 | 0.3 | 0.3 | 0.3 | 0.3 | 0.3 | 0.3 | 0.3 | 0.3 | 0.3 |
| Chain transfer agent | Lauryl mercaptan | g | 0.1 | 0.1 | 0.1 | 0.1 | 0.1 | 0.1 | 0.1 | 0.1 | 0.1 | 0.1 | 0.1 | 0.1 |
| Surfactant | Cationic emulsifier | g | 4 | 4 | 4 | 4 | 4 | 4 | 4 | 4 | 4 | 4 | 4 | 4 |
| | Sorbitan fatty acid ester | g | 4 | 4 | 4 | 4 | 4 | 4 | 4 | 4 | 4 | 4 | 4 | 4 |
| | Polyoxyethylene alkyl ether | g | 3 | 3 | 3 | 3 | 3 | 3 | 3 | 3 | 3 | 3 | 3 | 3 |
| Co-solvent | Water-soluble glycolic solvent | g | 15 | 15 | 15 | 15 | 15 | 15 | 15 | 15 | 15 | 15 | 15 | 15 |
| Aqueous solvent | Pure water | g | 100 | 100 | 100 | 100 | 100 | 100 | 100 | 100 | 100 | 100 | 100 | 100 |
| Analysis result | Mw Mn | - | 153,700 | 194,300 | 179,800 | 168,200 | 150,800 | 142,100 | 147,900 | 139,200 | 205,900 | 258,000 | 258,100 | 249,400 |
| | | - | 53,000 | 67,000 | 62,000 | 58,000 | 52,000 | 49,000 | 51,000 | 48,000 | 71,000 | 85,000 | 89,000 | 86,000 |
| | Track | gf | 310 | 270 | 290 | 310 | 380 | 390 | 380 | 400 | 260 | 250 | 240 | 250 |

| | | | | | | | | | | | | | | |
|---|---|---|---|---|---|---|---|---|---|---|---|---|---|---|
| Number in the table represent amounts charged (g) | | | | | | | | | | | | | | |

**[Table 1-2]**

| | | Unit | Prod. Ex.13 | Prod. Ex.14 | Prod. Ex.15 | Prod. Ex.16 | Prod. Ex. 17 | Prod. Ex.18 | Prod. Ex.19 | Prod. Ex.20 | Prod. Ex.21 | Prod. Ex. 22 | Comp. Prod. Ex.1 | Comp. Prod. Ex.2 |
|---|---|---|---|---|---|---|---|---|---|---|---|---|---|---|
| Monomer 1 | Si-based monomer (A) | g | | | | | | | | | | | | |
| | Si-based monomer (B) | g | | | | | | | 10 | | | | | |
| | Si-based monomer (C) | g | | | | | | | | 10 | | | | |
| | Si-based monomer (D) | g | | | | | | | | | 10 | | | |
| | Si-based monomer (E) | g | | | | | | | | | | 10 | | |
| | Si-based monomer (F) | g | 30 | 30 | 30 | 30 | 10 | 10 | | | | | 100 | 100 |
| | Si-based monomer (G) | g | | | | | | | | | | | | |
| | Si-based monomer (H) | g | | | | | | | | | | | | |
| Monomer 2 | Stearyl acrylate | g | 28 | 66.5 | 50 | | 90 | | 90 | 90 | 90 | 90 | | |
| | Behenyl acrylate | g | | | | 70 | | 90 | | | | | | |
| | Hydroxybutyl acrylate | g | | | 6 | | | | | | | | | |
| | Stearyl group-containing amido acrylate | g | 28 | | | | | | | | | | | |
| | Vinyl chloride | g | 14 | 3.5 | 14 | | | | | | | | | |
| Polymerization initiator | Azo group-containing water-soluble initiator | g | .3 | 0.3 | 0.3 | 0.3 | 0.3 | 0.3 | 0.3 | 0.3 | 0.3 | 0.3 | 1.5 | 3 |
| Chain transfer agent | Lauryl mercaptan | g | 0.1 | 0.1 | 0.1 | 0.1 | 0.1 | 0.1 | 0.1 | 0.1 | 0.1 | 0.1 | 0.1 | 0.1 |
| Surfactan**t** | Cationic emulsifier | g | 4 | 4 | 4 | 4 | 4 | 4 | 4 | 4 | 4 | 4 | 4 | 4 |
| | Sorbitan fatty acid ester | g | 4 | 4 | 4 | 4 | 4 | 4 | 4 | 4 | 4 | 4 | 4 | 4 |
| | Polyoxyethylene alkyl ether | g | 3 | 3 | 3 | 3 | 3 | 3 | 3 | 3 | 3 | 3 | 3 | 3 |
| Co-solvent | Water-soluble glycolic solvent | g | 15 | 15 | 15 | 15 | 15 | 15 | 15 | 15 | 15 | 15 | 15 | 15 |
| Aqueous solvent | Pure water | g | 100 | 100 | 100 | 100 | 100 | 100 | 100 | 100 | 100 | 100 | 100 | 100 |
| Analysis result | Mw | - | 246,500 | 261,000 | 258,100 | 249,400 | 272,600 | 263,900 | 278,400 | 272,600 | 266,800 | 278,400 | 84,100 | 60,900 |
| | Mn | - | 85,000 | 90,000 | 89,000 | 86,000 | 94,000 | 91,000 | 96,000 | 94,000 | 92,000 | 96,000 | 29,000 | 21,000 |
| | Track | gf | 250 | 230 | 240 | 250 | 230 | 220 | 220 | 230 | 220 | 220 | 900 | 1500 |

| | | | | | | | | | | | | | | |
|---|---|---|---|---|---|---|---|---|---|---|---|---|---|---|
| Numbers in the table represent amounts charged (g) | | | | | | | | | | | | | | |

### Example 1

The water dispersion having a non-volatile content of 30% prepared in Production Example 1 was diluted with tap water to prepare a treatment liquid having a non-volatile content of 0.9%. Polyester fabric, nylon fabric, and polyester/spandex fabric were immersed in this treatment liquid, and then squeezed with a mangle. The treated fabrics were passed through a pin tenter at 170°C for 1 minute to be dried and cured. Concerning the test fabrics thus treated, the water-repellency, light oil-repellency, and chalk mark resistance described above were evaluated. The evaluation results are shown in Table 2.

### Examples 2 to 22

Except for modifying the formulations according to Table 2, a treatment liquid having a non-volatile content of 0.9% was prepared in the same manner as in Example 1. This treatment liquid was used to treat fabrics in the same manner as in Example 1, and the water-repellency, light oil-repellency, and chalk mark resistance were evaluated. The results are shown in Table 2.

### Comparative Examples 1 to 2

Except for modifying the formulations according to Table 2, a treatment liquid having a non-volatile content of 0.9% was prepared in the same manner as in Example 1. This treatment liquid was used to treat fabrics in the same manner as in Example 1, and the water-repellency, light oil-repellency, and chalk mark resistance were evaluated. The results are shown in Table 2.

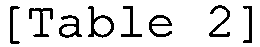

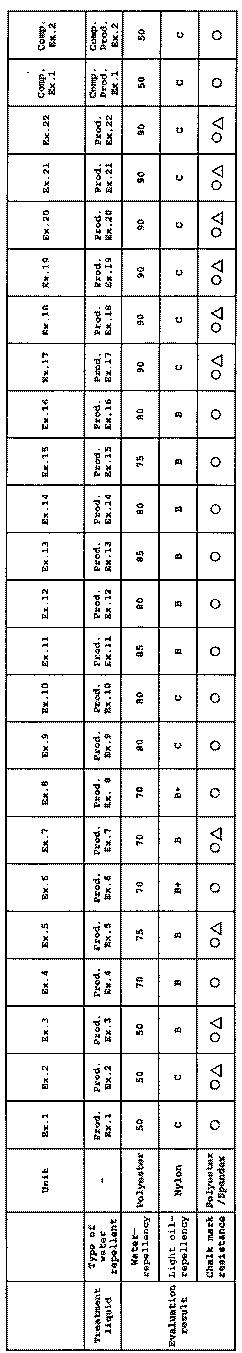

### Industrial Applicability

The polymer of the present disclosure has low tackiness and can be used to impart water-repellency and oil-repellency to a variety of products (such as paper and textile products).

## Claims

1. A polymer comprising a repeating unit derived from a monomer (1) represented by the following formula (1-1) or formula (1-2), and having a tackiness of 800 gf or less:
R^{a}-X-CY_{3-α}Z_{α} (1-1)
R^{a}-X-NY_{2-β}Z_{β} (1-2)
wherein
R^{a} is a polymerizable organic group,
X is a single bond or a divalent group,
Y is each independently a hydrogen atom or a hydrocarbon group having 1 to 10 carbon atoms,
α is an integer of 1 to 3,
β is an integer of 1 or 2,
Z is each independently -Z¹-SiZ²₃₋ₘZ³ₘ,
Z¹ is a single bond or a divalent group,
Z² is each independently a hydrocarbon group having 1 to 10 carbon atoms,
m is an integer of 1 to 3,
Z³ is each independently -(O-SiZ³¹₂)ₚ-(CH₂)_{q}-Z³²-SiZ³³₃,
Z³¹ is each independently a hydrocarbon group having 1 to 10 carbon atoms or -OSiZ³¹¹₃,
Z³¹¹ is each independently a hydrocarbon group having 1 to 10 carbon atoms or -OSiZ³¹¹¹₃,
Z³¹¹¹ is each independently a hydrocarbon group having 1 to 10 carbon atoms,
Z³² is O or CH₂,
Z³³ is each independently a hydrocarbon group having 1 to 10 carbon atoms or -OSiZ³³¹₃,
Z³³¹ is each independently a hydrocarbon group having 1 to 10 carbon atoms,
p is an integer of 0 to 196, and
q is an integer of 0 to 10.

2. The polymer according to claim 1, having a tackiness of 600 gf or less.

3. The polymer according to claim 1, having a tackiness of 300 gf or less.

4. The polymer according to any one of claims 1 to 3,
wherein
X is a divalent group composed of one or more selected from the group consisting of X¹ and X²,
X¹ is a group composed of one or more selected from the group consisting of a direct bond, -O-, -C(=O)-, -C(=NR')-, -S-, -S(=O)₂-, -NR'-, and -C(OR')R'-, wherein R' is independently at each occurrence a hydrogen atom or a hydrocarbon group having 1 to 10 carbon atoms, and
X² is a direct bond, a hydrocarbon group having 1 to 22 carbon atoms and optionally having a substituent, or a divalent aromatic hydrocarbon ring optionally having a substituent.

5. The polymer according to any one of claims 1 to 4, wherein X is a direct bond or a hydrocarbon group having 1 to 22 carbon atoms and optionally having a substituent.

6. The polymer according to any one of claims 1 to 5,
wherein
Z¹ is a divalent group composed of one or more selected from the group consisting of Z¹¹ and Z¹²,
Z¹¹ is a group composed of one or more selected from the group consisting of a direct bond, -O-, -C(=O)-, - C(=NR'')-, -S-, -S(=O)₂-, -NR''-, and -C(OR")R"-, wherein R'' is independently at each occurrence a hydrogen atom or a hydrocarbon group having 1 to 10 carbon atoms, and
Z¹² is a direct bond or a hydrocarbon group having 1 to 22 carbon atoms and optionally having a substituent.

7. The polymer according to any one of claims 1 to 6, wherein Z¹ is a direct bond or a hydrocarbon group having 1 to 22 carbon atoms and optionally having a substituent.

8. The polymer according to any one of claims 1 to 7, wherein R^{a} is an organic group containing an ethylenically polymerizable group.

9. The polymer according to any one of claims 1 to 8, wherein R^{a} is an acryloyl group or a methacryloyl group.

10. The polymer according to any one of claims 1 to 9, further comprising a repeating unit derived from a hydrophobic monomer (2) having a hydrocarbon group having 2 to 40 carbon atoms.

11. The polymer according to claim 10, wherein the hydrophobic monomer (2) is a monomer represented by the following formula:
CH₂=C(-R^{b})-C(=O)-R^{c}-(R^{d})ₖ (2)
wherein
R^{b} is a hydrogen atom, a monovalent organic group, or a halogen atom,
R^{c} is a divalent to tetravalent group composed of at least one selected from a direct bond, a divalent to tetravalent hydrocarbon group having one carbon atom, - C₆H₄-, -O-, -S-, -C(=O)-, -S(=O)₂-, and -NR^{C1}-, wherein R^{C1} is a hydrogen atom or a hydrocarbon group having 1 to 4 carbon atoms,
k is 1 to 3, and
R^{d} is a hydrocarbon group having 2 to 40 carbon atoms.

12. The polymer according to claim 10 or 11, wherein an amount of the repeating unit derived from the hydrophobic monomer (2) is 20% by weight or more based on the polymer.

13. The polymer according to claim 12, wherein an amount of the repeating unit derived from the monomer unit (1) is 0.5% by weight or more based on the polymer.

14. The polymer according to any one of claims 1 to 13, which is non-fluorinated.

15. The polymer according to claim 1, wherein
R^{a} is CH₂=CHC(=O)-O- or CH₂=CCH₃C(=O)-O-,
X is a direct bond or an alkylene group having 1 to 5 carbon atoms, and
Y is each independently a hydrogen atom or an alkyl chain having 1 to 3 carbon atoms.

16. The polymer according to claim 1, wherein
α is 1,
β is 1,
Z is each independently -Z¹-SiZ²₃₋ₘZ³ₘ,
Z¹ is a single bond or -(CH₂)ₛ-,
s is an integer of 1 to 3,
Z² is each independently an alkyl group having 1 to 3 carbon atoms,
m is an integer of 1 to 3,
Z³ is each independently - (O-SiZ³¹₂)ₚ-(CH₂)_{q}-Z³²-SiZ³³₃,
p is each independently 0 or 1,
q is each independently 0 or 1,
Z³¹ is each independently an alkyl group having 1 to 3 carbon atoms,
Z³² is -O- or -CH₂-,
Z³³ is each independently an alkyl group having 1 to 3 carbon atoms or -OSiZ³³¹₃,
Z³³¹ is each independently an alkyl group having 1 to 3 carbon atoms, and wherein
the polymer has a tackiness of 300 gf or less.

17. The polymer according to claim 1, wherein
R^{a} is CH₂=CHC(=O)-O- or CH₂=CCH₃C(=O)-O-,
X is a direct bond or an alkylene group having 1 to 5 carbon atoms,
Y is each independently a hydrogen atom or an alkyl chain having 1 to 3 carbon atoms,
α is 1,
β is 1,
Z is each independently -Z¹-SiZ²₃₋ₘZ³ₘ,
Z¹ is a single bond or -(CH₂)ₛ-,
s is an integer of 1 to 3,
Z² is each independently an alkyl group having 1 to 3 carbon atoms,
m is an integer of 1 to 3,
Z³ is each independently - (O-SiZ³¹₂)ₚ-(CH₂)_{q}-Z³²-SiZ³³₃,
p is each independently 0 or 1,
q is each independently 0 or 1,
Z³¹ is each independently an alkyl group having 1 to 3 carbon atoms,
Z³² is -O- or -CH₂-,
Z³³ is each independently an alkyl group having 1 to 3 carbon atoms or -OSiZ³³¹₃,
Z³³¹ is each independently an alkyl group having 1 to 3 carbon atoms, and wherein
the polymer has a tackiness of 300 gf or less.

18. A composition comprising the polymer according to any one of claims 1 to 17 and an emulsifier.

19. The composition according to claim 18, comprising water.

20. A water-repellent agent which comprises the polymer according to any one of claims 1 to 17 or which is the composition according to claim 18 or 19.

21. A water-repellent textile product comprising a fiber substrate to which the polymer according to any one of claims 1 to 17 is adhered.

22. The water-repellent textile product according to claim 21, wherein adhered to the fiber substrate is a compound comprising one or more functional groups selected from the group consisting of:
a monovalent group represented by -SO₃M¹, wherein M¹ represents a monovalent cation,
a monovalent group represented by -COOM², wherein M² represents a monovalent cation, and
a monovalent group represented by -O-P(O) (OX¹)(OX²), wherein X¹ and X² each independently represent a hydrogen atom or an alkyl group having 1 to 22 carbon atoms.

23. A method for producing a water-repellent textile product, comprising applying the water-repellent agent according to claim 20 to a fiber substrate.

24. The method for producing a water-repellent textile product according to claim 23, comprising, prior to applying the water-repellent agent to the fiber substrate, imparting to the fiber substrate one or more functional groups selected from the group consisting of:
a monovalent group represented by -SO₃M¹, wherein M¹ represents a monovalent cation,
a monovalent group represented by -COOM², wherein M² represents a monovalent cation, and
a monovalent group represented by -O-P(O) (OX¹)(OX²),
wherein X¹ and X² each independently represent a hydrogen atom or an alkyl group having 1 to 22 carbon atoms.
